# EUROPEAN PATENT APPLICATION

(11) **EP 3 605 789 A1**
(43) Date of publication of application: **05.02.2020**
(21) Application number: 18770833.4
(22) Date of filing: 22.03.2018
(51) Int. Cl.: H02J 13/00, B60R 16/02, H02J 1/00

(54) **POWER SUPPLY SYSTEM**

(30) Priority: 22.03.2017 JP 2017056002; 30.11.2017 JP 2017231241; 30.11.2017 JP 2017231242; 30.11.2017 JP 2017231243; 30.11.2017 JP 2017231244; 30.11.2017 JP 2017231245; 30.11.2017 JP 2017231246; 30.11.2017 JP 2017231247; 30.11.2017 JP 2017231248; 30.11.2017 JP 2017231249; 30.11.2017 JP 2017231250; 30.11.2017 JP 2017231252; 30.11.2017 JP 2017231253; 30.11.2017 JP 2017231254
(71) Applicant: Yazaki Corporation, Minato-ku Tokyo 108-8333 (JP)
(72) Inventor: KANAMORI, Katsumi, Yokosuka-shi Kanagawa 239-0847 (JP); URUSHIBATA, Takurou, Yokosuka-shi, Kanagawa 239-0847 (JP); TANIGAWA, Junya, Susono-shi Shizuoka 410-1194 (JP); USHITANI, Koichi, Susono-shi Shizuoka 410-1194 (JP); MAEZAKI, Daisuke, Susono-shi Shizuoka 410-1194 (JP)
(74) Representative: Grünecker Patent- und Rechtsanwälte PartG mbB
(86) International application number: PCT/JP2018/011545
(87) International publication number: WO 2018/174208

(57) **Abstract**

A power supply system is provided with: a power supply control unit (61, 116) for supplying a power packet from a power packet mixer (61) to power packet routers (62-1 to 62-3) in response to a power distribution request from the power packet routers (62-1 to 62-3); and an allocation unit (62-1 to 62-3, 116) for allocating priorities to a plurality of loads. The power supply control unit restricts power supply to a load having a low priority when the demand-supply relationship of power satisfies a predetermined condition.

## Description

### TECHNICAL FIELD

The present invention relates to a power supply system that can be used to supply power on a vehicle or the like.

### BACKGROUND ART

Generally, on a vehicle, an in-vehicle battery or alternator (generator) as a main power source and various types of electrical components disposed at various positions on the vehicle are connected to one another via a wire harness which is an assembly of electrical wires. Therefore, power stored in the in-vehicle battery can be supplied to the various electrical components as power of power source. Further, even when the vehicle is parked, electrical components such as a security device require power of power source. Therefore, unless a power supply path is specifically cut off using a fuse or a relay, the power of the in-vehicle battery is drained even during parking.

If the power stored in the in-vehicle battery is depleted during parking, the engine cannot be started. For example, Patent Literature 1 discloses a technology for preventing the problem. Patent Literature 1 discloses that an integrated value of consumption current after the ignition off is detected is compared with a predetermined upper limit value, and an operation of an electrical component is stopped in a case where the integrated value exceeds the upper limit value.

For example, Patent Literature 2 discloses a technology for packetizing power to transmit and distribute power. Patent Literature 2 discloses a power router including a plurality of power storage units for storing power of received power packets, a switch unit for distributing the received power packets to the plurality of power storage units, and an output unit for generating a power packet based on the power stored by the plurality of power storage units.

### CITATION LIST

### PATENT LITERATURE

Patent Literature 1: JP-A-2013-226909
Patent Literature 2: WO 2014/077191

### SUMMARY OF INVENTION

### TECHNICAL PROBLEM

In a vehicle, the power of the in-vehicle battery may be exhausted if the vehicle is parked for a long time due to the influence of a relatively small current (dark current) flowing from the in-vehicle battery to the electrical components during parking as described above. Such a problem may be avoided by using the technology in Patent Literature 1. However, allowable current capacity before the power of the in-vehicle battery is depleted varies significantly due to the influence of differences in vehicle types and a number of years in use, and therefore, it is quite difficult to properly set an upper limit value to be compared with an integrated value of the current consumption.

On the other hand, when a power supply system is constructed by applying the technology in Patent Literature 2 on a vehicle, it is assumed that a load or the like is added as necessary. However, if the load increases beyond the design expected, balance between the power demand and power supply capacity may deviate from an appropriate state, the power supply capacity may be insufficient, and the battery exhaustion may occur.

The present invention has been made in view of the above circumstances, and an object thereof is to provide a power supply system in which wasteful discharge of power from an in-vehicle battery or the like can be avoided, and appropriate balance between the power demand and power supply capacity can be maintained even if the load increases.

### SOLUTION TO PROBLEM

In order to achieve the above object, a power supply system according to the present invention is characterized by the following (1) to (3).
(1) A power supply system including:
   a power packet generation unit configured to generate a power packet based on power supplied from one or more power supply sources;
   a power packet router configured to receive the power packet via a transmission path and supply power of the power packet to a plurality of loads connected on a downstream side;
   a power request transmission unit configured to transmit a power distribution request according to power required by the power packet router;
   a power supply control unit configured to supply the power packet from the power packet generation unit to the power packet router in response to the power distribution request; and
   an allocation unit configured to allocate priorities to the plurality of loads,
   wherein the power supply control unit restricts power supply to a load having a low priority in a case where a demand-supply relationship of power satisfies a predetermined condition.

   According to the power supply system configured as (1), when the power demand exceeds the supply capacity, for example, in a case where it becomes difficult to supply power to all loads for which power supply is requested due to the demand-supply relationship of power satisfying a predetermined condition, power supply to a load having a low priority is restricted, so that power supply to a load having a high priority can be maintained, and the battery exhaustion can be prevented.
(2) The power supply system according to (1),
   wherein the power supply control unit compares a power supply amount that can be supplied by the power supply source with a power demand amount represented by the power distribution request, and stops supplying power supplied to the load having a low priority in a case where the power demand amount is larger than the power supply amount.
   According to the power supply system configured as (2), in a case where the power demand exceeds the supply capacity, the power supply to a load having a low priority is stopped to prevent the power supply amount from getting larger than the power demand amount, so that power supply to a load having a high priority can be maintained, and the battery exhaustion can be prevented.
(3) The power supply system according to (1) or (2),
   wherein the allocation unit corrects the priorities according to at least one of a traveling state of a vehicle on which the power supply system is mounted, a state of an occupant, and an environment outside the vehicle.

According to the power supply system configured as (3), the priorities of the loads to which the power should be supplied can be appropriately corrected according to the situation where the vehicle is installed, such as the traveling state of the vehicle, the state of the occupant, the environment outside the vehicle or the like, so that it is possible to prevent interruption of power supply to the load for which driving should be continued in each situation.

### ADVANTAGEOUS EFFECTS OF INVENTION

According to the power supply system of the present invention, wasteful discharge of power from an in-vehicle battery or the like can be avoided, and appropriate balance between the power demand and power supply capacity can be maintained even if the load increases.

### BRIEF DESCRIPTION OF THE DRAWINGS

[Fig. 1] Fig. 1 is a block diagram showing Configuration Example 1 of a power supply system according to an embodiment of the present invention.
[Fig. 2] Fig. 2A and Fig. 2B are flowcharts showing operation examples of a power packet router and a power packet mixer, respectively.
[Fig. 3] Fig. 3 is a block diagram showing Configuration Example 2 of a power supply system according to the embodiment of the present invention.
[Fig. 4] Fig. 4 is a schematic view showing a configuration example of a power packet.
[Fig. 5] Fig. 5 is a block diagram showing a configuration example of a power packet mixer.
[Fig. 6] Fig. 6 is a flowchart showing an operation example of the power packet mixer.
[Fig. 7] Fig. 7 is a block diagram showing a configuration example of a power packet router.
[Fig. 8] Fig. 8 is a flowchart showing an operation example of the power packet router.
[Fig. 9] Fig. 9 is a block diagram showing a configuration example of a power distribution management ECU.
[Fig. 10] Fig. 10 is a flowchart showing an operation example of the power distribution management ECU.
[Fig. 11] Fig. 11 is a block diagram showing Configuration Example 3 of a power supply system according to the embodiment of the present invention.
[Fig. 12] Fig. 12 is a schematic view showing a configuration example of a power packet.
[Fig. 13] Fig. 13 is a block diagram showing a configuration example of a power packet router.
[Fig. 14] Fig. 14 is a flowchart showing an operation example of a power distribution management ECU.
[Fig. 15] Fig. 15 is a block diagram showing Configuration Example 4 of a power supply system according to the embodiment of the present invention.
[Fig. 16] Fig. 16 is a schematic view showing a configuration example of a power packet.
[Fig. 17] Fig. 17 is a sequence diagram showing an example of an operation procedure of each part of the power supply system.
[Fig. 18] Fig. 18 is a block diagram showing Configuration Example 5 of a power supply system according to the embodiment of the present invention.
[Fig. 19] Fig. 19A and Fig. 19B are block diagrams showing Configuration Example 6 and Configuration Example 7 of respective power supply systems according to the embodiment of the present invention.
[Fig. 20] Fig. 20 is a block diagram showing Configuration Example 8 of a power supply system according to the embodiment of the present invention.
[Fig. 21] Fig. 21 is a block diagram showing Configuration Example 9 of a power supply system according to the embodiment of the present invention.
[Fig. 22] Fig. 22 is a block diagram showing Configuration Example 10 of a power supply system according to the embodiment of the present invention.
[Fig. 23] Fig. 23A is a block diagram showing Configuration Example 11 of a power supply system according to the embodiment of the present invention, and Fig. 23B and Fig. 23C are time charts showing variation examples of power packets output to a transmission path of each part in different operations.
[Fig. 24] Fig. 24 is a block diagram showing Configuration Example 12 of a power supply system according to the embodiment of the present invention.
[Fig. 25] Fig. 25 is a block diagram showing Configuration Example 13 of a power supply system according to the embodiment of the present invention.
[Fig. 26] Fig. 26 is a block diagram showing Configuration Example 14 of a power supply system according to the embodiment of the present invention.
[Fig. 27] Fig. 27 is a block diagram showing a configuration example of a common lamp control circuit.
[Fig. 28] Fig. 28 is a block diagram showing a configuration example of a lamp control circuit using a power packet.
[Fig. 29] Fig. 29 is a flowchart showing an operation example of a power packet mixer in the lamp control circuit of Fig. 28.
[Fig. 30] Fig. 30 is a flowchart showing an operation example of a power packet router in the lamp control circuit of Fig. 28.
[Fig. 31] Fig. 31 is a block diagram showing Configuration Example 15 of a power supply system according to the embodiment of the present invention.
[Fig. 32] Fig. 32 is a block diagram showing Configuration Example 16 of a power supply system according to the embodiment of the present invention.
[Fig. 33] Fig. 33 is a flowchart showing an operation example of a power packet router.
[Fig. 34] Fig. 34 is a flowchart showing an operation example of the power distribution management ECU.
[Fig. 35] Fig. 35 is a flowchart showing an operation example of the power distribution management ECU.
[Fig. 36] Fig. 36 is a flowchart showing an operation example of the power distribution management ECU.
[Fig. 37] Fig. 37 is a flowchart of Example 1 of a power interchange operation.
[Fig. 38] Fig. 38 is a flowchart of Example 2 of a power interchange operation.
[Fig. 39] Fig. 39 is a flowchart showing an operation example of a router at a start.
[Fig. 40] Fig. 40 is a graph showing a relationship between load power and efficiency.
[Fig. 41] Fig. 41 is a block diagram showing an example of the configuration and operation of the power supply system according to an embodiment of the present invention.
[Fig. 42] Fig. 42 is a block diagram showing an example of the configuration and operation of the power supply system according to an embodiment of the present invention.
[Fig. 43] Fig. 43 is a block diagram showing an example of the configuration and operation of the power supply system according to an embodiment of the present invention.
[Fig. 44] Fig. 44 is a flowchart showing an operation example of the power distribution management ECU.
[Fig. 45] Fig. 45 is a flowchart showing in more detail an operation example of the power packet mixer shown in Fig. 2B.

### DETAILED DESCRIPTION OF EMBODIMENTS

A specific embodiment according to the present invention will be described with reference to drawings.

### <Technique for Preventing Power Consumption due to Dark Current>

### <Configuration Example of System>

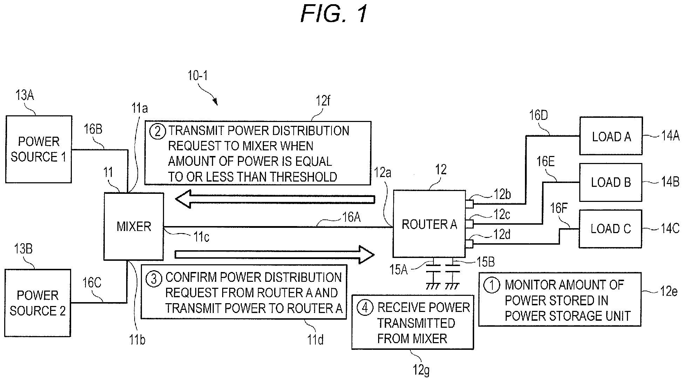

A configuration example of a power supply system 10-1 in the embodiment of the present invention is shown in Fig. 1. The power supply system 10-1 shown in Fig. 1 is used in a vehicle to supply power of a power source such as an in-vehicle battery to various electrical components used as a load via a transmission path such as a wire harness. In addition, the power supply system 10-1 can use, for example, a power packet transmission technique known by Patent Literature 2 or the like.

The power supply system 10-1 shown in Fig. 1 includes a power packet mixer 11 and a power packet router (router A) 12. A power packet output port 11c of the power packet mixer 11 and a power packet input port 12a of the power packet router 12 are connected by a power transmission path 16A configured as a wire harness.

Further, power input ports 11a, 11b of the power packet mixer 11 are connected with in-vehicle batteries (power source 1) 13A, (power source 2) 13B via power transmission paths 16B, 16C, respectively. Further, power output ports 12b, 12c and 12d of the power packet router 12 are connected with loads 14A, 14B and 14C via power transmission paths 16D, 16E and 16F, respectively. The loads 14A to 14C correspond to various electrical components mounted on the vehicle.

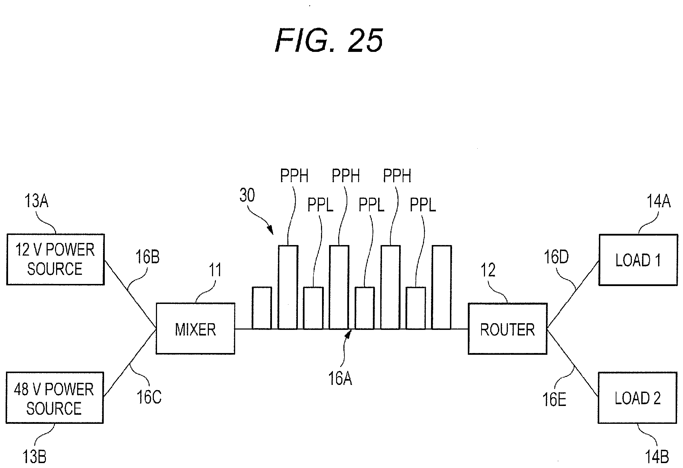

Here, the plurality of power sources such as the in-vehicle batteries 13A, 13B connected to the input of the power packet mixer 11 may have the same voltage or may have different voltages. A configuration example in which the voltages are different is shown in Fig. 25. In the example shown in Fig. 25, it is assumed that the voltage of the in-vehicle battery 13A is 12 V, and the voltage of the in-vehicle battery 13B is 48 V. Other voltages may also be used. In the example shown in Fig. 25, the power packet mixer 11 generates a power packet PPL (30) having a voltage of 12 V based on the power of power source of 12 V supplied from the in-vehicle battery 13A, and generates a power packet PPH (30) having a voltage of 48 V based on the power of power source of 48 V supplied from the in-vehicle battery 13B. Therefore, as shown in Fig. 25, the power packets PPL and PPH having different voltages may appear alternately, for example, on the power transmission path 16A.

A plurality of power storage units 15A, 15B are connected to the power packet router 12. The number and type of power sources connected to an input side of the power packet mixer 11 can be changed as necessary. The number and type of loads connected to an output side of the power packet router 12 can also be changed as necessary. Further, another power packet router 12 can be connected in series to the output side of the power packet router 12.

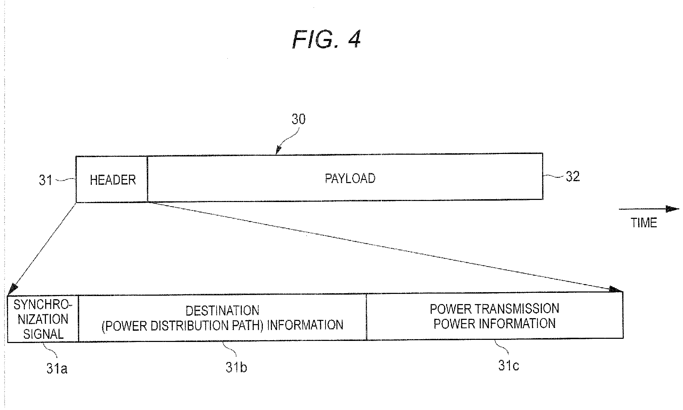

As a basic function, the power packet mixer 11 has a function of generating a power packet based on the power supplied from the power input ports 11a, 11b and transmitting the power packet to the power transmission path 16A. The power packet 30 generated by the power packet mixer 11 is configured, for example, as shown in Fig. 4. A payload 32 of the power packet 30 transmits power on the upstream side to the downstream side in unit of the power packet. Therefore, the power packet mixer 11 can easily manage an amount of power to be transmitted by a length of the payload and the number of packets.

As shown in Fig. 25, in a case where the in-vehicle batteries 13A, 13B having different voltages are connected to the input of the power packet mixer 11, it is assumed that for example, a time length of the payload 32 of the power packet 30 is adjusted according to the voltage, and control is performed so that the power amount for each one power packet 30 becomes constant. In a case where the length of the payload 32 is not adjusted, it is necessary to identify the difference in voltage in order to grasp the power for each power packet 30.

As a basic function, the power packet router 12 receives the power packet input to the power packet input port 12a, and temporarily stores the power of the power packet in the power storage units 15A, 15B. Then, the power stored in power storage units 15A, 15B is supplied to the load side.

In the present embodiment, the power packet mixer 11 distinguishes and manages the plurality of in-vehicle batteries 13A, 13B which are power supply sources, and contains information for distinguishing in each power packet to be transmitted. Thus, the power packet router 12 can also distinguish the power supply sources for each of the received power packets. Then, the power packet router 12, for example, stores the power supplied from the in-vehicle battery 13A only in the power storage unit 15A, and stores the power supplied from the in-vehicle battery 13B only in the power storage unit 15B.

Further, in the present embodiment, as a characteristic function, the power packet mixer 11 is equipped with a function 11d shown in Fig. 1, and the power packet router 12 is equipped with functions 12e, 12f and 12g.

That is, as the function 12e, the power packet router 12 monitors an amount of power stored in each of the power storage units 15A, 15B. As the function 12f, the power packet router 12 transmits a power distribution request to the power packet mixer 11 in a case where the amount of power stored in each of the power storage units 15A, 15B is equal to or less than a threshold. The power distribution request can be transmitted from the power packet input port 12a to the power packet output port 11c using, for example, a free timing of the power transmission path 16A.

Further, as the function 11d, the power packet mixer 11 confirms the power distribution request from the power packet router 12, generates a power packet corresponding to a requested amount of power, and transmits the power packet to the power packet output port 11c. As the function 12g, the power packet router 12 receives the power of each power packet transmitted from the power packet mixer 11 and stores in the power storage units 15A, 15B.

### <Operation of System>

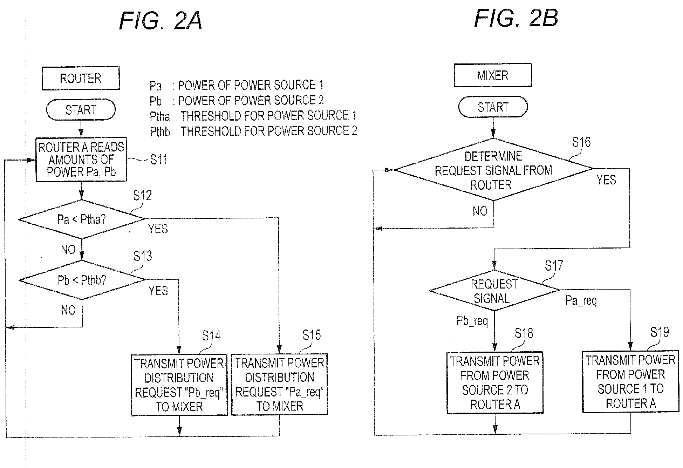

Operation examples of the power packet mixer and the power packet router shown in Fig. 2A and Fig. 2B will be described below.

As the function 12e, a control unit (not shown) in the power packet router 12 reads a current power storage amount Pa of the power storage unit 15A storing the power supplied from the in-vehicle battery 13A, and a current power storage amount Pb of the storage unit 15B storing the power supplied from the in-vehicle battery 13B (S11).

Then, the power storage amount Pa and a threshold Ptha thereof are compared in step S12, and the process proceeds to step S15 only in a case where the condition "Pa < Ptha" is satisfied. Further, the power storage amount Pb and a threshold Pthb thereof are compared in step S13, and the process proceeds to step S14 only in a case where the condition "Pb < Pthb" is satisfied.

Then, as the function 12f, the control unit in the power packet router 12 transmits a power distribution request "Pa_req" to the power packet mixer 11 in a case where the condition "Pa < Ptha" is satisfied (S15). Further, in the case where the condition "Pb < Pthb" is satisfied, a power distribution request "Pb_req" is transmitted to the power packet mixer 11 (S14).

On the other hand, a control unit (not shown) in the power packet mixer 11 determines whether the power distribution request "Pa_req" or "Pb_req" from the power packet router 12 has been received (S16), and the process proceeds to the next step S17 in a case where any one of the requests (request) is received. Further, whether the received power distribution request is "Pa_req" or "Pb_req" is identified at S17, and the process proceeds to S19 in the case of power distribution request "Pa_req", and to S18 in the case of power distribution request "Pb_req".

In step S19, the control unit in the power packet mixer 11 generates a power packet using the power supplied from the in-vehicle battery 13A, and transmits the power packet to the power packet router 12 via the power transmission path 16A. The power packet is added with information indicating that the in-vehicle battery 13A is a supply source. The number of power packets to be transmitted by the power packet mixer 11 in one process in response to a power distribution request may be one for each received power distribution request, or may be a fixed number determined in advance, or may be designated by the power packet router 12 as a part of the power distribution request.

In step S18, the control unit in the power packet mixer 11 generates a power packet using the power supplied from the in-vehicle battery 13B, and transmits the power packet to the power packet router 12 via the power transmission path 16A. The power packet is added with information indicating that the in-vehicle battery 13B is a supply source.

That is, in the power supply system 10-1 shown in Fig. 1, the power packet mixer 11 supplies only the necessary amount of power when needed, that is, on demand, to the power packet router 12 according to a request from the power packet router 12.

For this reason, power is not supplied to the power transmission path 16A unless a request from the power packet router 12 generates, and power is not always supplied to the output side as in a common power supply system, so that power consumption due to dark current does not occur. Therefore, for example, in a case where the vehicle is parked for a long time, the occurrence of battery exhaustion can be prevented.

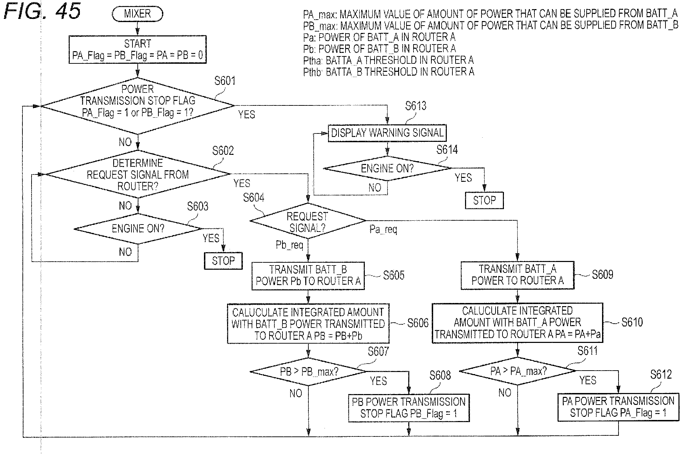

Here, an operation example by the control unit (not shown) in the power packet mixer 11 will be described in more detail with reference to Fig. 45.

First, PA_Flag, PB_Flag, PA, and PB are all 0. PA_Flag and PB_Flag are both power distribution stop flags which become 1 when the in-vehicle batteries 13A, 13B cannot supply power. PA, PB each represent an integrated power amount supplied from the in-vehicle batteries 13A and 13B.

In a case where the power transmission stop flags are all 0 (S601), the power packet mixer 11 determines whether the power distribution request "Pa_req" or "Pb_req" is received from the power packet router 12 (S602), and the process proceeds to the next step S604 in a case where any one of the requests (request) is received. Further, whether the received power distribution request is "Pa_req" or "Pb_req" is identified at S604, and the process proceeds to S609 in the case of power distribution request "Pa_req", and to S605 in the case of power distribution request "Pb_req". On the other hand, the power transmission stop flag of either PA_Flag or PB_Flag is 1 in step S601, a warning signal is issued or a warning is displayed to the driver (S613). These warnings end when it is determined that the engine is turned ON (S614). In addition, the determination of the request signal reception in step S602 ends when it is determined that the engine is turned ON (S603).

In step S609, the control unit in the power packet mixer 11 generates a power packet using the power supplied from the in-vehicle battery 13A, and transmits the power packet to the power packet router 12 via the power transmission path 16A. The power packet is added with information indicating that the in-vehicle battery 13A is a supply source. The number of power packets to be transmitted by the power packet mixer 11 in one process in response to a power distribution request may be one for each received power distribution request, or may be a fixed number determined in advance, or may be designated by the power packet router 12 as a part of the power distribution request.

The control unit in the power packet mixer 11 adds a power amount Pa corresponding to the lately transmitted power packets to an integrated power amount PA transmitted from the in-vehicle battery 13A (S610), to compare with an upper limit PA_max of the amount of power that can be supplied from the in-vehicle battery 13A (S611), and if the integrated power amount PA exceeds the upper limit PA_max of the power amount, the flag PA_flag that stops the power supply from the in-vehicle battery 13A is set to 1, and the power distribution request to the in-vehicle battery 13A is prohibited (S612).

In step S605, the control unit in the power packet mixer 11 generates a power packet using the power supplied from the in-vehicle battery 13B, and transmits the power packet to the power packet router 12 via the power transmission path 16A. The power packet is added with information indicating that the in-vehicle battery 13B is a supply source.

Then, the control unit in the power packet mixer 11 adds a power amount Pb corresponding to the lately transmitted power packets to an integrated power amount PB transmitted from the in-vehicle battery 13B (S606), to compare with an upper limit PB_max of the amount of power that can be supplied from the in-vehicle battery 13B (S607), and if the integrated power amount PB exceeds the upper limit PB_max of the power amount, the flag PB_flag that stops the power supply from the in-vehicle battery 13B is set to 1, and the power distribution request to the in-vehicle battery 13B is prohibited (S608).

### <Technique for "Wire Harness Diagnosis">

### <Configuration Example of System>

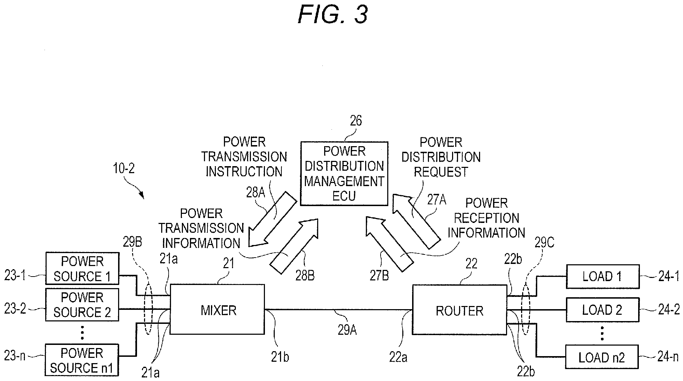

A configuration example of a power supply system 10-2 in the embodiment of the present invention is shown in Fig. 3. The power supply system 10-2 shown in Fig. 3 is used in a vehicle to supply power of a power source such as an in-vehicle battery to various electrical components used as a load via a transmission path such as a wire harness. In addition, the power supply system 10-2 can use, for example, a power packet transmission technique known by Patent Literature 2 or the like.

The power supply system 10-2 shown in Fig. 3 includes, as main components, a power packet mixer 21, a power packet router 22, and a power distribution management electronic control unit (ECU) 26.

A plurality of power input ports 21a of the power packet mixer 21 are connected with n power sources 23-1 to 23-n via power transmission paths 29B respectively. Each of the power sources 23-1 to 23-n corresponds to, for example, an in-vehicle main battery, sub-battery, other auxiliary power sources, or the like. In addition, the output voltages of the n power sources 23-1 to 23-n may be the same or different from each other.

A power packet output port 21b of the power packet mixer 21 and a power packet input port 22a of the power packet router 22 are connected to each other via a power transmission path 29A. A plurality of loads 24-1 to 24-n are connected to a plurality of power output ports 22b of the power packet router 22 via power transmission paths 29C. The loads 24-1 to 24-n correspond to various electrical components mounted on the vehicle. Further, another power packet router 22 can be connected in series to the power output port 22b of the power packet router 22.

The power transmission paths 29A, 29B, and 29C correspond to, for example, electric wires or bus bars configuring a wire harness mounted on the vehicle. The power distribution management ECU 26, the power packet mixer 21 and the power packet router 22 are connected in a mutually communicable state. A dedicated communication line may be used for this communication, and the power transmission path 29A may be used.

As a basic function, the power packet mixer 21 generates the power packet 30 based on the power supplied from the power sources 23-1 to 23-n, and outputs the power packet 30 to the power transmission path 29A. The power packet router 22 receives the power packet 30 transmitted by the power packet mixer 21, temporarily stores the power therein, and supplies the power to each of the loads 24-1 to 24-n as necessary.

The power distribution management ECU 26 communicates with the power packet mixer 21 and the power packet router 22 to manage a power distribution state of the entire system. Information that the power distribution management ECU 26 exchanges by communication includes a power distribution request 27A and a power reception information 27B transmitted by the power packet router 22, a power transmission instruction 28A transmitted by the power distribution management ECU 26, and power transmission information 28B transmitted by the power packet mixer 21.

### <Configuration Example of Power Packet 30>

A configuration example of the power packet 30 is shown in Fig. 4.

The power packet 30 shown in Fig. 4 includes a header 31 and a payload 32. In addition, the header 31 includes a synchronization signal 31a, destination (power distribution path) information 31b, and power transmission power information (data indicating a power transmission amount) 31c. The payload 32 corresponds to the power actually to be transmitted. For example, assuming a case where the voltage and the current are constant, the power can be transmitted by one power packet 30 in response to the time length of the payload 32.

### <Configuration Example of Power Packet Mixer 21>

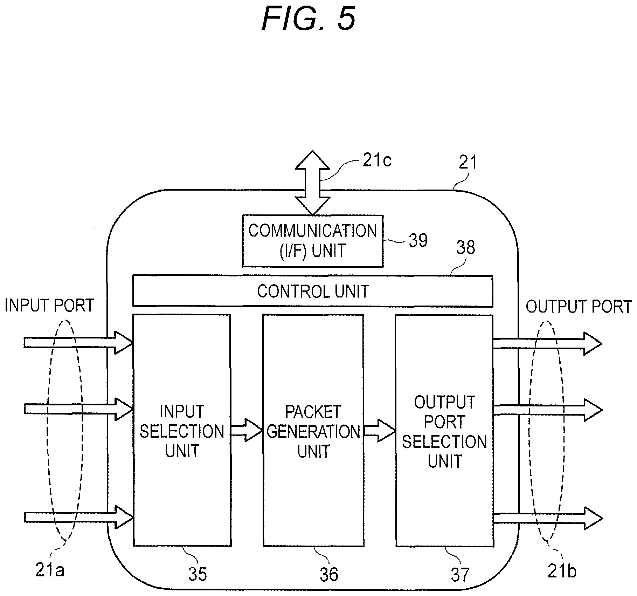

A configuration example of the power packet mixer 21 is shown in Fig. 5.
The power packet mixer 21 shown in Fig. 5 includes an input selection unit 35, a packet generation unit 36, an output port selection unit 37, a control unit 38, and a communication interface unit (I/F) 39.

The input selection unit 35 selects one of the plurality of power input ports 21a and takes in power from a selected power source. The packet generation unit 36 generates the power packet 30 from the power taken from one of the power input ports 21a. The output port selection unit 37 selects one of the plurality of power packet output ports 21b and transmits the power packet 30 to the selected port. The control unit 38 controls the operation of the entire power packet mixer 21 as described below.

### <Operation Example of Power Packet Mixer 21>

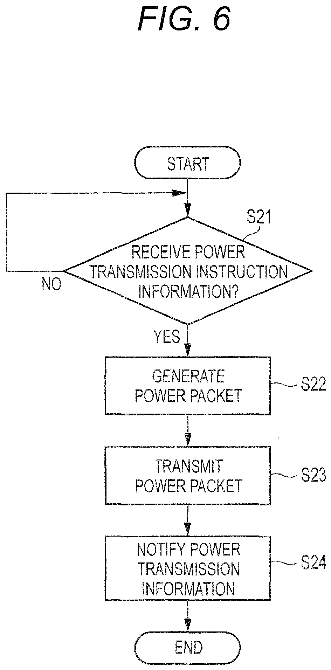

An operation example of the power packet mixer 21 is shown in Fig. 6. That is, the control unit 38 performs the control of Fig. 6.

Once receiving information on the power transmission instruction 28A from the power distribution management ECU 26 (S21), the control unit 38 controls to select a power source input at the input selection unit 35 and generate the power packet 30 at the packet generation unit 36 based on the power transmission instruction 28A (S22). Further, the control unit 38 controls the output port selection unit 37 to transmit the generated power packet 30 to a predetermined power packet output port 21b (S23). Further, the control unit 38 notifies the power distribution management ECU 26 of the power transmission information 28B via a communication port 21c (S24).

### <Configuration Example of Power Packet Router 22>

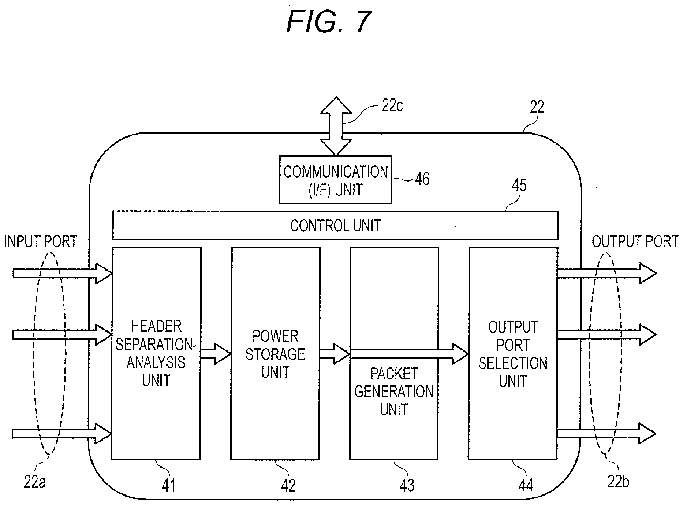

A configuration example of the power packet router 22 is shown in Fig. 7.

The power packet router 22 shown in Fig. 7 includes a header separation-analysis unit 41, a power storage unit 42, a packet generation unit 43, an output port selection unit 44, a control unit 45, and a communication interface unit 46.

The header separation-analysis unit 41 processes the power packet 30 input to each of the power packet input ports 22a to separate the header 31 and analyze content of the header 31. The power storage unit 42 charge and temporarily store the power at a timing of the payload 32 of the power packet 30 input to each of the power packet input ports 22a.

The packet generation unit 43 generates a new power packet 30 based on the power stored in the power storage unit 42 when it is necessary to generate the power packet 30. The output port selection unit 44 selectively outputs the power stored in the power storage unit 42 or the power packet 30 generated by the packet generation unit 43 to any one of the power output ports 22b. The control unit 45 controls the entire power packet router 22 as described below.

### <Operation Example of Power Packet Router 22>

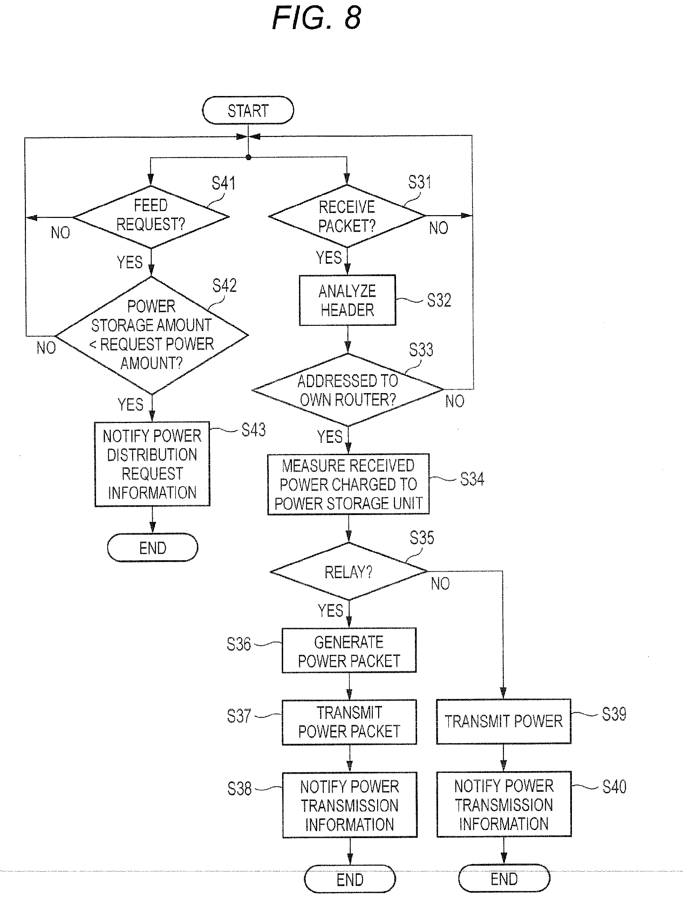

An operation example of the power packet router 22 is shown in Fig. 8. That is, the control unit 45 performs the control of Fig. 8.

In a case where the power packet router 22 receives the power packet 30 at the power packet input port 22a (S31), the control unit 45 analyzes the header 31 of the power packet 30 using the header separation-analysis unit 41 (S32).

By the analysis, the control unit 45 collates destination of destination information 31b included in the header 31 with the loads 24-1 to 24-n connected to the own router (S33). As a result of the collation, in a case where it is addressed to a load connected to the own router, the power of the payload 32 is charged to the power storage unit 42 and the power of the power storage unit 42 is output to a predetermined power output port 22b (S34, S39).

As a result of the collation, in a case where the destination of the received power packet 30 is addressed to a load connected to another router via the own router, the control unit 45 controls the packet generation unit 43 to generate a new power packet 30 addressed to a predetermined router from the power of the power storage unit 42 (S36). Further, the power packet 30 is output from a predetermined output port (S37) and supplied to an input port of the predetermined router.

The control unit 45 measures a charge amount charged to the power storage unit 42 by the power packet 30 received by the power packet router 22 (S34), and generates power reception information 27B including an integrated received power value corresponding to the payload 32 and notifies the power distribution management ECU 26 of the reception information 27B (S38, S40).

The control unit 45 identifies whether power distribution is necessary based on driving power of loads 24-1 to 24-n connected to the power output port 22b of the own router and a state of charge of the power storage unit 42, and notifies the power distribution management ECU 26 of the information of the power distribution request 27A when necessary. For example, when it is necessary to supply power of power source to each load (with a "feed request"), a request power amount is compared with the power storage amount of the power storage unit 42 (S42), and when the condition "power storage amount < request power amount" is satisfied, the control unit 45 notifies the power distribution management ECU 26 of the information on the power distribution request 27A (S43).

### <Configuration Example of Power Distribution Management ECU 26>

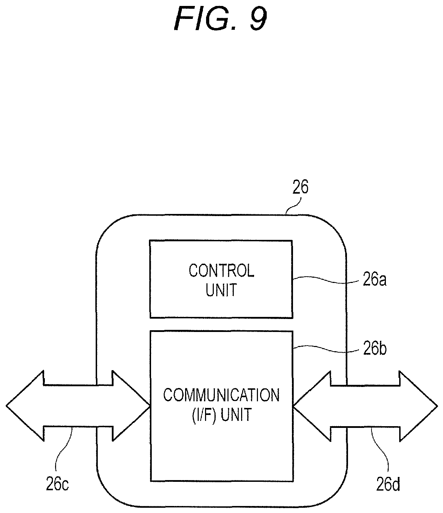

A configuration example of the power distribution management ECU 26 is shown in Fig. 9.

The power distribution management ECU 26 shown in Fig. 9 incorporates a control unit 26a and a communication interface unit 26b. Communication ports 26c, 26d of the communication interface unit 26b are connected to the power packet mixer 21 and the power packet router 22, respectively.

### <Operation Example of Power Distribution Management ECU 26>

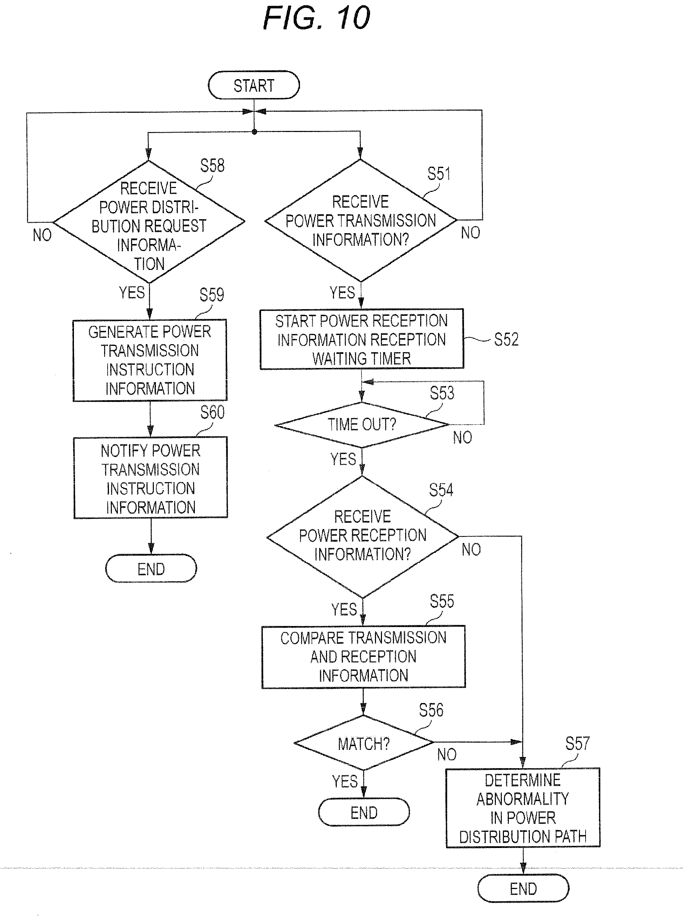

An operation example of the power distribution management ECU 26 is shown in Fig. 10. That is, the control unit 26a in the power distribution management ECU 26 controls operations in Fig. 10.

When the information of the power distribution request 27A is notified from the power packet router 22 (S58), the control unit 26a in the power distribution management ECU 26 generates information of the power transmission instruction 28A based on the information (S59) and notifies the power packet mixer 21 of the generated information of the power transmission instruction 28A (S60).

When receiving the power transmission information 28B from the power packet mixer 21 (S51), the control unit 26a in the power distribution management ECU 26 starts a power reception information reception waiting timer (S52). In a case where the power reception information 27B including the integrated received power value is not received from the power packet router 22 by the time-out of the power reception information reception waiting timer (S54), or in a case where there is a mismatch in the result of comparison between the integrated received power value in the power reception information 27B received from the power packet router 22 and the power transmission information 28B from the power packet mixer 21 (S55, S56), the control unit 26a in the power distribution management ECU 26 determines that an abnormality such as disconnection or short circuit has occurred in the power distribution path (S57). Then, power distribution is not performed by this power distribution path.

### <Advantages of Power Supply System 10-2>

When diagnosing a short circuit of a wire harness or the like, in a case where a common technique is adopted, it is necessary to add a new device or perform complex signal processing for detecting an abnormality of a transmission line. Further, there may be a case where an abnormality such as a disconnection or a short circuit (dead short) cannot be detected. However, in the power supply system 10-2 that performs the above-described control, an abnormality in the power distribution path including a disconnection or a short circuit (dead short) can be reliably detected without adding a new device or performing complicated signal processing.

That is, since the power distribution management ECU 26 performs determination based on the result of comparison between the power actually transmitted by the power packet mixer 21 and the power actually received by the power packet router 22, occurrence of abnormality can be reliably detected.

Further, the power distribution management ECU 26 can recognize all power transmission timings, so that the abnormality of the transmission path can be detected even in a case where the transmission path (wire harness) is broken or dead shorted, and the header 31 of the power packet 30 is not properly received on the power reception side.

### <Modification of Power Supply System 10-2>

In the power supply system 10-2 shown in Fig. 3, a case where there is only one power packet router 22 is assumed, but various paths can be selectively used by connecting a plurality of power packet routers 22 in series, for example. In this case, it is considered that the power distribution management ECU 26 automatically switches the path so that the power packet 30 passes through another path where no abnormality has occurred when an abnormality in the power distribution path is detected. For example, after step S57 shown in Fig. 10, the power distribution management ECU 26 may control to notify the power packet mixer 21 or each power packet router 22 of power transmission instruction information for instructing a change of the power distribution path.

### <Technique for Interchanging Insufficient Power of Power Source>

### <Configuration Example of System>

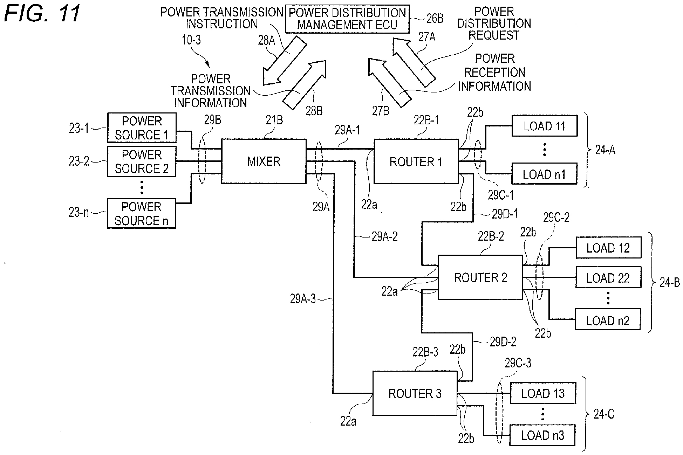

A configuration example of a power supply system 10-3 in the embodiment of the present invention is shown in Fig. 11. The power supply system 10-3 shown in Fig. 11 is used in a vehicle to supply power of a power source such as an in-vehicle battery to various electrical components used as a load via a transmission path such as a wire harness. In addition, the power supply system 10-3 can use, for example, a power packet transmission technique known by Patent Document 2 or the like.

The power supply system 10-3 shown in Fig. 11 includes, as main components, a power packet mixer 21B, three power packet routers 22B-1, 22B-2, and 22B-3, and a power distribution management electronic control unit (ECU) 26B. In the following description, when it is unnecessary to distinguish the three power packet routers 22B-1 to 22B-3 from each other, a power packet router 22B will be described. In addition, when it is unnecessary to distinguish other constituent elements from each other, a branch number such as "-1" and "-2" will be omitted. Further, the same applies to other embodiments.

A plurality of power input ports of the power packet mixer 21B are connected with n power sources 23-1 to 23-n via the power transmission paths 29B. Each of the power sources 23-1 to 23-n corresponds to, for example, an in-vehicle main battery, sub-battery, other auxiliary power sources, or the like. Here, output voltages of the n power sources 23-1 to 23-n may be the same or different from each other.

Each of the three power packet output ports of the power packet mixer 21B and each of the power packet input ports 22a of the three power packet routers 22B-1 to 22B-3 are connected to each other via the power transmission path 29A.

A plurality of loads 24-A are connected to the plurality of power output ports 22b of the power packet router 22B-1 via power transmission paths 29C-1. In addition, a plurality of loads 24-B are connected to the plurality of power output ports 22b of the power packet router 22B-2 via power transmission paths 29C-2. A plurality of loads 24-C are connected to the plurality of power output ports 22b of the power packet router 22B-3 via power transmission paths 29C-3. The loads 24-A to 24-C correspond to various electrical components mounted on the vehicle.

One of the power output ports 22b of the power packet router 22B-1 and one of the power packet input ports 22a adjacent thereto of the power packet routers 22B-2 are connected to each other via a power transmission path 29D-1. Further, one of the power output ports 22b of the power packet router 22B-3 and one of the power packet input ports 22a adjacent thereto of the power packet routers 22B-2 are connected to each other via a power transmission path 29D-2.

In a case where power in the power packet router 22B-2 is insufficient, the power transmission path 29D-1 is used as a path for interchanging power of the power packet router 22B-1. Similarly, in a case where the power in the power packet router 22B-2 is insufficient, the power transmission path 29D-2 is used as a path for interchanging power of the power packet router 22B-3. Needless to say, in addition to the power interchange, it is also possible to use as a bypass path in a case where an abnormality such as a disconnection occurs.

The power transmission paths 29A, 29B, 29C, and 29D correspond to, for example, electric wires or bus bars configuring a wire harness mounted on the vehicle. In addition, the power distribution management ECU 26B, and the power packet mixer 21B and the power packet router 22B are connected, for example, via dedicated communication lines, so that they can communicate with each other. Incidentally, it is also possible to communicate using the power transmission path 29A.

As a basic function, the power packet mixer 21B generates a power packet 30B based on the power supplied from the power sources 23-1 to 23-n, and outputs the power packet 30B to any one of the power transmission paths 29A-1, 29A-2, and 29A-3.

Each of the power packet routers 22B-1, 22B-2, and 22B-3 receives the power packet 30B transmitted by the power packet mixer 21B, temporarily stores the power therein, and supplies the power to each of the loads 24-A, 24-B, and 24-C as necessary. In addition, as will be described in detail later, each of the power packet routers 22B-1, 22B-2, and 22B-3 performs the power interchange as necessary in the present embodiment.

The power distribution management ECU 26B communicates with the power packet mixer 21B and the power packet router 22B to manage a power distribution state of the entire system. Information which the power distribution management ECU 26B exchanges by communication includes the power distribution request 27A and the power reception information 27B transmitted by the power packet router 22B, the power transmission instruction 28A transmitted from the power distribution management ECU 26B, and the power transmission information 28B transmitted by the power packet mixer 21B.

### <Configuration Example of Power Packet 30B>

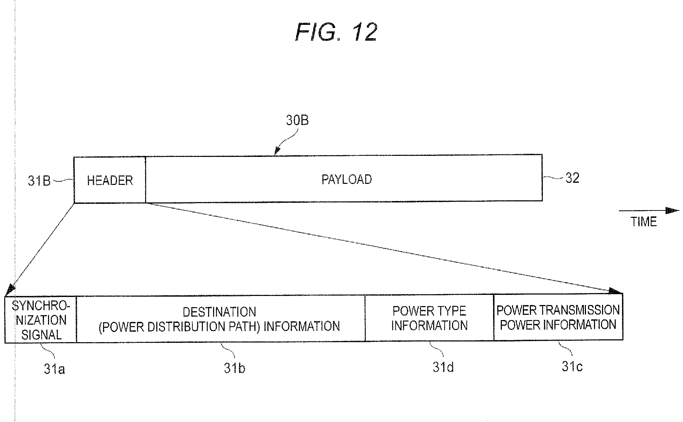

A configuration example of the power packet 30B is shown in Fig. 12. The power packet 30B shown in Fig. 12 includes a header 31B and a payload 32. In addition, the header 31B includes the synchronization signal 31a, the destination (power distribution path) information 31b, the power transmission power information (data representing a power transmission amount) 31c, and power type information 31d. The payload 32 corresponds to the power actually transmitted. For example, assuming a case where the voltage and the current are constant, the power can be transmitted by one power packet 30B in response to the time length of the payload 32. The power type information 31d is used to distinguish between normal power and interchange-dedicated power.

### <Configuration and Operation of Power Packet Mixer 21B>

A configuration of the power packet mixer 21B is substantially the same as that of the power packet mixer 21 shown in Fig. 5. In addition, an operation of the power packet mixer 21B is the same as the operation of the power packet mixer 21 shown in Fig. 6.

### <Configuration Example of Power Packet Router 22B>

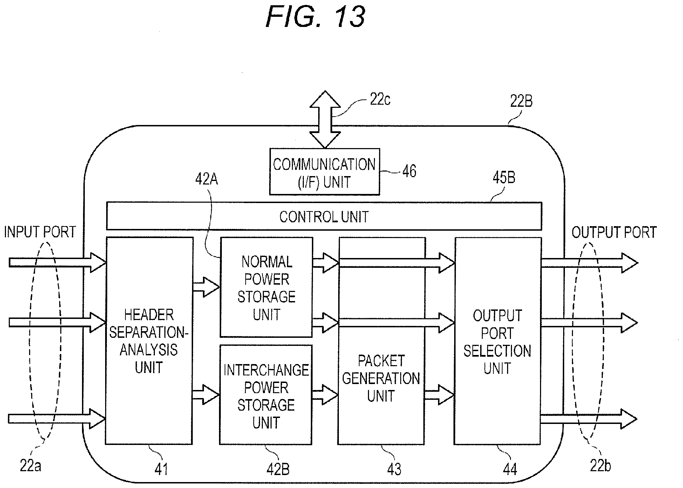

A configuration example of the power packet router 22B is shown in Fig. 13. The power packet router 22B shown in Fig. 13 includes the header separation-analysis unit 41, a normal power storage unit 42A, an interchange power storage unit 42B, the packet generation unit 43, the output port selection unit 44, a control unit 45B, and the communication interface unit 46.

The header separation-analysis unit 41 processes the power packet 30B input to each of the power packet input ports 22a to separate the header 31B, and analyze content of the header 31B.

The normal power storage unit 42A and the interchange power storage unit 42B charge and temporarily store the power at a timing of the payload 32 of the power packet 30B input to each of the power packet input ports 22a. The normal power storage unit 42A is used in a case where the power is normally fed, and the interchange power storage unit 42B is used exclusively in a case where the interchange power is fed. Incidentally, the normal power storage unit 42A and the interchange power storage unit 42B are configured by the same power storage unit, and the power storage unit may store the power for normal power feeding and the interchange power.

The packet generation unit 43 generates a new power packet 30B based on the power stored in the normal power storage unit 42A or the interchange power storage unit 42B when it is necessary to generate the power packet 30B. The output port selection unit 44 selectively outputs the power stored in either the normal power storage unit 42A and the interchange power storage unit 42B or the power packet 30B generated by the packet generation unit 43 to any one of the power output ports 22b. The control unit 45B controls the entire power packet router 22B as described below.

### <Operation Example of Power Packet Router 22B>

A basic operation of the power packet router 22B is the same as the operation of the power packet router 22 shown in Fig. 8. However, the following points are different.

The power packet router 22B collates the destination information 31b and the power type information 31 d included in the header 31 B of the power packet 30B received at each of the power packet input ports 22a. As a result of the collation, in a case where the received power packet 30B is addressed to its own router and the power for normal power feeding, the power of the payload 32 is charged to the normal power storage unit 42A and output to a predetermined output port. In addition, as a result of the collation, in a case where the received power packet 30B is addressed to its own router and the interchange power, the power of the payload 32 is charged to the interchange power storage unit 42B. Further, when the power packet router 22B receives the power packet 30B addressed to its own router, the power packet router 22B notifies the power distribution management ECU 26B of the power reception information 27B including the type, a received power amount, or the like.

When receiving instruction information for power interchange from the power distribution management ECU 26, the power packet router 22B generates the power packet 30B addressed to a predetermined router and outputs the power packet 30B from the predetermined output port to an input port of a predetermined route, based on the power stored in the interchange power storage unit 42B. At the same time, the power packet router 22B notifies the power distribution management ECU 26B of the power transmission information including the remaining charge amount of the interchange power storage unit 42B. Further, the power packet router 22B notifies the power distribution management ECU 26 of the power distribution request 27A as necessary, based on driving power for each load connected to the output port, and states of charge of the normal power storage unit 42A and the interchange power storage unit 42B.

### <Configuration of Power Distribution Management ECU 26B>

A configuration of the power distribution management ECU 26B is the same as that of the power distribution management ECU 26 shown in Fig. 9.

The communication port 26c of the communication interface unit 26b of the power distribution management ECU 26B is connected to the power packet mixer 21B, and the communication port 26d is connected to each power packet router 22B.

### <Operation Example of Power Distribution Management ECU 26B>

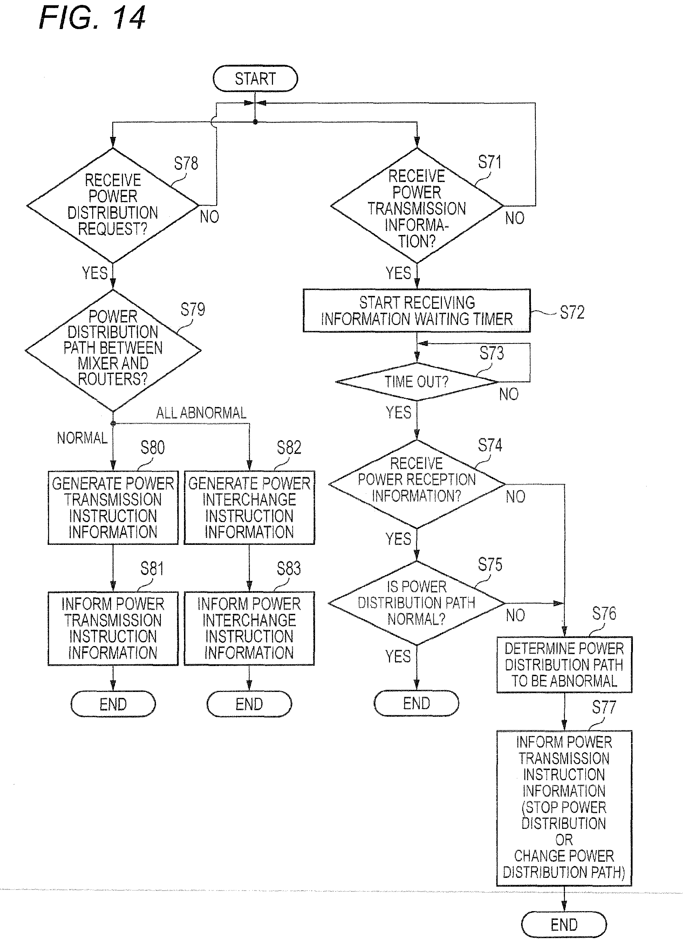

An operation example of the power distribution management ECU 26B is shown in Fig. 14. In other words, the control unit 26a in the power distribution management ECU 26B controls an operation of Fig. 14. The operation of Fig. 14 will be described below.

In a case where the information of the power distribution request 27A is notified from any of the plurality of power packet routers 22B (S78), if there is no abnormality in all the power distribution paths between the power packet mixer 21B and the power packet router 22B, the power distribution management ECU 26B generates information of the power transmission instruction 28A (S80), and notifies the power packet mixer 21B of the information of the power transmission instruction 28A (S81).

When receiving the power transmission information 28B from the power packet mixer 21B (S71), the power distribution management ECU 26B starts the power reception information reception waiting timer (S72). Further, in a case where the power reception information 27B is not received from the power packet router 22B before the power reception information reception waiting timer times out, the power distribution management ECU 26B determines that an abnormality such as a disconnection or a short circuit occurs in the power distribution path (S76), and prevent power distribution from being performed by the same power distribution path (S77).

When the power distribution management ECU 26B receives the information of the power distribution request 27A from the power packet router 22B, if the abnormality is confirmed in all the power distribution paths between the power packet mixer 21B and the power packet router 22B, the process is performed as follows. In other words, "power interchange instruction information" is generated (S82), and the "power interchange instruction information" is notified to the other power packet router 22B which is able to construct the power distribution path with the specific power packet router 22B which has transmitted the power distribution request 27A (S83).

The power distribution management ECU 26B recognizes the charge amount in the interchange power storage unit 42B in the power packet router 22B of a transmission source based on the power reception information 27B transmitted from the power packet router 22B. Moreover, the power distribution management ECU 26B notifies the power packet mixer 21B of the power transmission instruction information of the power interchange power to the power packet router 22B as necessary, based on the recognized charge amount.

### <Operation of Entire System>

That is, in the power supply system 10-3 shown in Fig. 11, each of the plurality of power packet routers 22B constantly stores the power built-in the interchange power storage unit 42B as a buffer, and the amount of stored power is grasped by the router itself. Then, in a case where the power amount is insufficient in any one of the plurality of power packet routers 22B-1 to 22B-3, or in a situation where the power amount is expected to be insufficient, the corresponding power packet router 22B notifies the power distribution management ECU 26B of the information of the power distribution request 27A. Based on the information of the power distribution request 27A, the power distribution management ECU 26B notifies the power packet router 22B which stores sufficient power in the interchange power storage unit 42B of the "power interchange instruction information".

Therefore, for example, in a case where the power of the power packet router 22B-2 is insufficient, the power of the power packet router 22B-3 can be transmitted to the power packet router 22B-2 via the power transmission path 29D-2, and the power can be interchanged. In addition, the power of the power packet router 22B-1 can be transmitted to the power packet router 22B-2 via the power transmission path 29D-1, the power can also be interchanged.

In addition, in the power interchange, for example, in a case where the disconnection occurs in the power transmission path 29A or the like, or the power supply to the input of each of the power packet routers 22B-1 to 22B-3 is interrupted, by interchanging power among the power packet routers 22B-1 to 22B-3, it is possible to continue power supply to an important load for a certain period of time. Therefore, for example, the important load can be supplied with the power until the crashed vehicle stops safely.

Further, in a case where priority control is performed according to the type of loads as described above, a priority is allocated to each of the plurality of loads connected to the power packet router 22B. In addition, among the plurality of power packet routers 22B-1 to 22B-3, more power packet mixers 21B and output ports of the power packet router 22B are connected to the power packet input port 22a of the specific power packet router 22B to which a higher priority load is connected.

For example, in the power supply system 10-3 shown in Fig. 11, the outputs of the power packet routers 22B-1, 22B-3 are connected to the power packet input ports 22a of the power packet router 22B-2. Therefore, power can be preferentially supplied from the three power packet routers 22B-1 to 22B-3 to the load 24-B having a high importance connected to the output of the power packet router 22B-2.

In addition, in a case where any one of the power transmission paths 29A-1 to 29A-3 is disconnected, the power can be supplied to a target power packet router via the power transmission path, which is not disconnected, and the power transmission paths 29D-1, 29D-2. For example, in a case where the power transmission path 29A-1 is disconnected, a power packet can be transmitted from the power packet mixer 21B to the power packet router 22B-1 via the power transmission path 29A-2, the power packet router 22B-2, and the power transmission path 29D-1.

### <Technique for Enabling Addition of Routers and Electrical Components (Loads)>

### <Description of Necessity of Retrofitting Load and Router>

In an automobile, with the technological development of an advanced driver assistance system (ADAS), a navigation system, an engine control system, or the like, an electronic device mounted on the vehicle and the power amount required to drive them are ever increasing, and power up of the power source and efficiency improvement are required. For this reason, multiple power sources in the automobile, for example, mounting of a plurality of types of batteries having different voltages (a combination of 12 V, 48 V, or the like), a large output alternator, a regenerative brake, an energy harvest, or the like are anticipated.

On the other hand, from a background of the rising price of oil, which is fuel, and an environmental problem due to carbon dioxide emission, since a demand for low fuel consumption of the automobile is extremely high, an increase in vehicle weight which deteriorates a fuel consumption must be avoided. In the power packet transmission system, power from a plurality of power sources is transmitted by time division (packetization), so that the multiple power sources with a minimum number of wirings may be realized. That is, an increase in the vehicle weight can be prevented. In addition, for example, an increase in the number of wirings in an environment where a plurality of types of voltages coexist can be suppressed.

However, in a case of the general power packet transmission system, since the configuration of the entire system is determined in advance, it is not possible to cope with cases of adding a new electrical component or changing the type of the electrical component as a load of the system to be connected due to a change in a specification of the vehicle, for example. That is, in the case of adding the electrical component or changing the type of the electrical component to be connected, it is necessary to redesign the entire system, so that design cost associated with the change in the specification increases.

A power supply system 10-4 according to the present embodiment, as described later, can adopt a power packet transmission technique, and can provided a function for facilitating the addition of a new load.

### <Configuration Example of Power Supply System 10-4>

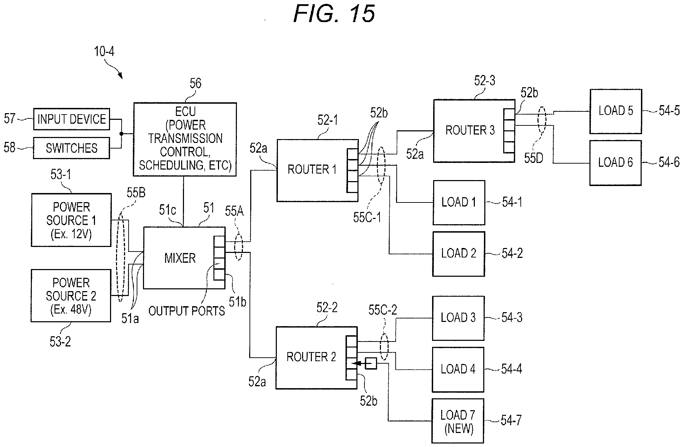

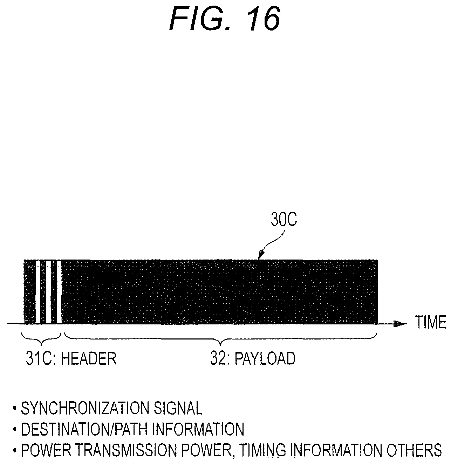

A configuration example of the power supply system 10-4 in the embodiment of the present invention is shown in Fig. 15. Incidentally, the power supply system 10-4 shown in Fig. 15 represents a basic configuration example, and a power source or a device can be added or changed as necessary. In addition, a configuration example of a power packet 30C is shown in Fig. 16.

The power supply system 10-4 shown in Fig. 15 includes, as main components, a power packet mixer 51, a plurality of power packet routers 52-1 to 52-3, and a power distribution management ECU 56.

A plurality of power input ports 51a of the power packet mixer 51 are respectively connected to an in-vehicle battery (power source 1) 53-1 having a voltage of 12 V and an in-vehicle battery (power source 2) 53-2 having a voltage of 48 V via a power transmission path 55B. In addition, the plurality of power packet routers 52-1, 52-2 are respectively connected to a plurality of power packet output ports 51b of the power packet mixer 51 via a power transmission path 55A. Incidentally, voltages output from the plurality of in-vehicle batteries 53-1, 53-2 may be the same.

A power packet router 52-3 and a plurality of loads 54-1, 54-2 are connected to power output ports 52b of the power packet router 52-1 via a power transmission path 55C. That is, the power packet router 52-1 and the power packet router 52-3 are connected in series. The loads 54-1, 54-2 correspond to various electrical components mounted on the vehicle.

A plurality of loads 54-5, 54-6 are connected to power output ports 52b of the power packet router 52-3 via a power transmission path 55D. In addition, a plurality of loads 54-3, 54-4 are connected to power output ports 52b of the power packet router 52-2 via a power transmission path 55C-2. A load 54-7 is prepared to be newly added to this system, and is assumed to be connected to a vacant port of the power output ports 52b of the power packet router 52-2 in the example of Fig. 1.

Each of the power transmission paths 55A, 55B, 55C, and 55D is a power transmission wire or a bus bar corresponding to each power capacity, and is configured, for example, as a part of a wire harness.

The power distribution management ECU 56 is connected to a communication port 51c of the power packet mixer 51 via a predetermined communication line. In addition, an input device 57 and switches 58 are connected to the input of the power distribution management ECU 56. The input device 57 and the switches 58 are provided in order to be able to receive an input operation by a user or the like. The power distribution management ECU 56 functions as a schedule construction for a power transmission control and packet transmission in this system.

The power packet mixer 51 is configured, for example, in the same manner as the power packet mixer 21 shown in Fig. 5, and has functions of, as a basic function, generating the power packet 30C based on power supplied from the in-vehicle batteries 53-1, 53-2 or the like, and transmitting the power packet 30C to the power packet output ports 51b.

Each of the power packet routers 52-1 to 52-3 is configured, for example, in the same manner as the power packet router 22 shown in Fig. 7, and has a function of, as a basic function, receiving the power packet 30C input to the power packet input ports 52a. Further, the power packet 30C has a function of internally storing the power of the received power packet 30C and supplying it to the load side as necessary, and a function of generating a relay power packet 30C and transmitting it to the other power packet routers 52 on the downstream side.

Each of the power distribution management ECU 56, the power packet mixer 51, and the power packet router 52 in the present embodiment has built-in storage means (for example, a nonvolatile memory) (not shown) for storing path information of the power packet 30C. The path information held by these storage means is shared by data communication between the power packet mixer 51 and each of the power packet routers 52-1 to 52-3. The data communication can be performed using the power transmission path 55A or the like. Moreover, in a case where a connection state on the downstream side of the power packet mixer 51 is changed, the path information is sequentially updated.

In order to transmit power of power source of the plurality of in-vehicle batteries 53 by a smaller number of transmission paths than the number of power sources, the power packet mixer 51 generates power packets 30C having different destinations or voltage amplitudes, and transmits the power packets 30C to the power transmission path 55A toward the power packet routers 52-1 to 52-3 by time division multiplexing.

The power packet 30C shown in Fig. 16 includes a header 31C and the payload 32. The header 31C includes a synchronization signal, a destination, path information, power transmission power, timing information, or the like.

Each of the power packet routers 52-1 to 52-3 reads an information tag from the header 31C of the received power packet 30C, and distributes power to each load based on the information. That is, the power in the payload 32 of the received power packet 30C is distributed for the load of a destination. The power of the power packet 30C transmitted to each load 54 is generated intermittently. Therefore, in order to compensate for the power supply during a period of time that a packet does not reach, an electrolytic capacitor or the like is used as a buffer, that is, a power storage unit, or a secondary battery is connected to each power packet router 52.

A capacity of the power storage unit increases in proportion to a time period of the power packet 30C used by the system being longer. Therefore, the larger the capacity, the more versatile it can be used. The buffer or the secondary battery used as the power storage unit may be built in each power packet router 52.

### <Basic Operation of Power Supply System 10-4>

Each power packet router 52 in the power supply system 10-4 collates the destination information included in the header 31C of the power packet 30C received at the power packet input ports 52a. As a result of the collation, in a case of the power packet 30C addressed to the load connected to its own router, the power of the payload 32 is charged to the power storage unit, and is output to a predetermined output port. As a result of the collation, in a case of the power packet 30C addressed to the load connected to another router which has relayed its own router, based on the power stored in its own power storage unit, a relay power packet 30C addressed to a predetermined router is newly generated, output to the predetermined output port, and supplied to an input port of a predetermined router.

The power packet router 52 notifies the power distribution management ECU 56 of the power reception information corresponding to the payload 32 of each received power packet 30C via the power packet mixer 51. The power packet router 52 makes a power distribution request to the power distribution management ECU 56 as necessary based on the driving power of each load connected to the power output ports 52b and the state of charge of the power storage unit.

### <Characteristic Function of Power Supply System 10-4>

The power supply system 10-4 shown in Fig. 15 has a function for enabling the power packet router 52 and a load connected thereto to be easily added to the power transmission paths 55A, 55C, 55D, or the like, which are main transmission paths of power. For the function, data communication is performed between the power packet mixer 51 and the power packet router 52 to authenticate the connected load. In the case where the data communication is performed between the power packet mixer 51 and the power packet router 52, for example, bidirectional communication using the power transmission path 55A or the like as a transmission path for communication or wireless communication is used.

For example, in a case where the seventh new load 54-7 is connected to the power output port 52b of the power packet router 52-2 and added to the system, the power packet router 52-2 automatically detects that the load 54-7 is newly physically connected to the power supply system 10-4 shown in Fig. 15, and the power packet mixer 51, the power packet router 52, and the power distribution management ECU 56 automatically perform processing necessary for a logical connection to the system.

For each of loads 54 assumed to be connected to the output of the power packet router 52, it is assumed that information such as "device descriptor" representing types and characteristics of the loads 54 is not held. Therefore, it is necessary to specify a type and characteristics of each newly connected load in some way. In the present embodiment, the type and characteristics of each connected load are specified by performing an input operation required by an operator such as a user. However, as described later, it is also possible to specify automatically.

It is also possible to add another new power packet router 52 to the output of the power packet mixer 51 and the output of the power packet router 52 later. In this case, the power packet mixer 51 includes the plurality of power packet output ports 51b, and using these, the power packet 30C can be transmitted to each of the plurality of power packet routers 52.

For example, as in a case where the operator turns on a power source of the system, when the power packet mixer 51 starts, the power packet mixer 51 checks the connection state of the power packet output port 51b, and in a case where there is a newly connected power packet router 52, a power resource redistribution (reschedule) is prepared for the corresponding power packet router 52.

For example, by pulling up a signal terminal of the power packet output port 51b to a predetermined power source line via a resistor, the presence or absence of a device connection to each of the output port can be automatically detected as in a universal serial bus (USB) standard device. As a voltage of the pull-up power source, for example, a low voltage of 3.3 V or less is preferably used.

In a case where the power packet router 52 is newly connected to the power supply system 10-4, when the power packet mixer 51 is notified that the load is connected by a signal from the power packet router 52, the power resource is redistributed (rescheduled) as described later.

The power packet router 52 includes a function described below in order to enable a load to be added later. The power packet router 52 confirms a load connection state of its own power output port 52b at the time of start, and collects information on the type and the driving power of the newly connected load. The power packet router 52 which has confirmed the new connection requests the operator for an input through an input device such as a touch panel (which also serves as a display) in order to specify information on the type and specifications of the new device connected.

After that, information is exchanged by bidirectional communication between the power packet mixer 51 and the power packet router 52, and the power packet mixer 51 determines a feasibility of a system to which a new load is added from a viewpoint of the power capacity and a supply timing, and readjusts the schedule of the power resource distribution.

In the bidirectional communication required between the power packet mixer 51 and the power packet router 52, an information tag such as the header 31C of the power packet 30C can be used in a case of data communication in a direction from the power packet mixer 51 toward the power packet router 52.

In a case of data communication in a direction from the power packet router 52 toward the power packet mixer 51, it is considered to perform communication by putting a signal on a frequency different from the basic frequency of a clock of the power packet 30C using, for example, a frequency division multiplexing method, or the like. In addition, the wireless communication may be performed between the power packet mixer 51 and the power packet router 52 without using the power transmission path 55A or the like.

### <Example of Operation Procedure of Power Supply System during New Device Connection>

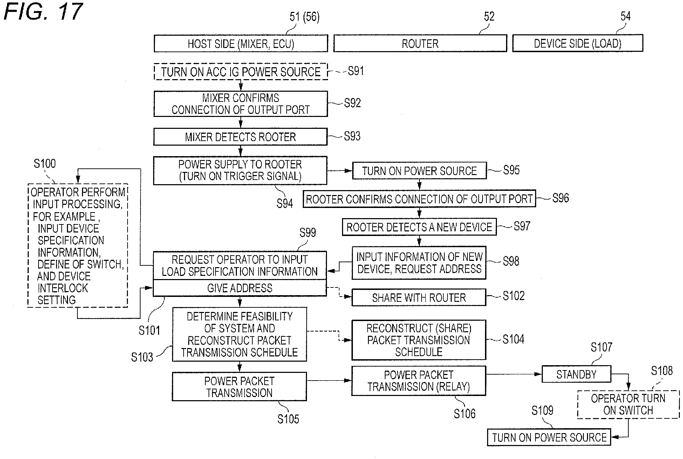

An example of an operation procedure of each unit of the power supply system 10-4 is shown in Fig. 17. However, here, it is assumed to operate under the following "precondition".

### <Precondition>

Attachment/detachment of a device (power packet router 52 and load 54) to the downstream of the power packet mixer 51 is performed in a turning-off state of the power source, and when the power source is turned on, the connection of the device is confirmed.

Only the power packet router 52 is connected to a subsequent stage of the power packet mixer 51. Therefore, it is unnecessary for the device to transmit and receive a "device descriptor" or the like for informing its own identity, and it is unnecessary for the router or the load to hold the "device descriptor" or the like.

Only the load 54 or another power packet router 52 is connected to a subsequent stage of the power packet router 52. The power packet router 52 confirms the connection of its own output port when the power is turned on, and informs the power packet mixer 51 of information on the connected load 54.

When detecting a new device, the power packet router 52 informs the power packet mixer 51 of the new device. In a case where the connected device is the load 54, the power packet mixer 51 requests the operator to input specification information of the load from a touch panel input device/display, that is, the input device 57, the switches 58, or the like. In addition, the power packet mixer 51 simultaneously assigns an address associated with the power packet router 52 to the device. For example, as shown in Fig. 15, in a case where the new load 54-7 is connected to the third power output port 52b of the second power packet router 52-2, "2-3" is assigned as an address.

Based on the specification information of the device input by the operator and a data table (having a driving pattern or the like corresponding to a device type) (not shown) possessed by the power distribution management ECU 56, the power packet mixer 51 and each power packet router 52 interlock with each other to determine the feasibility of the system and to reconstruct the transmission schedule of the power packet. In addition, the power packet mixer 51 is premised to perform processing in cooperation with the power distribution management ECU 56.

### <Description of Procedure>

1. A power source of the system is turned on by an operation of the operator (S91).
2. The power packet mixer 51 confirms the connection of a plurality of its own output ports, and detects the connected power packet routers 52 (S92, S93).
3. By the control of the power packet mixer 51, power supply to the power packet router 52 is performed (permitted), and a power source of the power packet router 52 is turned on (S94, S95).
4. The power packet router 52 confirms the connection of the plurality of its own power output ports 52b, and detects a new device (S96, S97).
5. The power packet router 52 requests the power packet mixer 51 to input information of the new device and to give an address thereof (S98).
6. The power packet mixer 51 requests the operator to input (S100) information such as a specification of the new device via the touch panel or the like (S99). At the same time, the address of the new device is set (S101), and shared with the power packet router 52 (S102).
7. The power packet mixer 51 determines the feasibility of the power packet transmission system based on the type and specification of the device input by the operator, constructs a packet transmission schedule (S103), and shares the packet transmission schedule with the router (S104).
8. The new device is available by the above procedure. Here, the new device here is always used for power supply, and when it is necessary to interlock with the switch of the operator or another devices, additional setting and reschedule for each drive are required.

Incidentally, the present embodiment may be modified as follows.

The attachment/detachment of the device (router, load) to the downstream of the power packet mixer 51 may be performed in a turning-on state of the power source. In this case, the power packet mixer 51 and the power packet router 52 periodically check its own connection port, and when the connection is confirmed, the power distribution management ECU 56 performs the feasibility determination and reschedule, and switches at an arbitrary timing.

A storage function is deployed in the power distribution management ECU 56 connected to the power packet mixer 51, and a database which contains specification examples of various loads 54 assumed to be connected in advance, temporal transition data of power consumption, or the like is constructed. In addition, the type of the device designated by the operator and the power consumption are used as additional information. By using the information, it is possible to estimate a driving frequency and a driving frequency of the connected new device. Further, in an environment where the estimation can be performed, it is also possible to automatically perform a program for estimating the type of connected device and the power consumption, and to eliminate the need for the operator's input operation (S100).

When the schedule of the power resource distribution is readjusted, if the capacity of the power sources 53-1, 53-2 connected to the power packet mixer 51 is insufficient, it is considered to implement a function such as issuing an alert for reducing the load 54, increasing the power source, or the like. In addition, the function is divided into a portion which can be controlled by a manufacturer and a seller, for example, the power amount allocated to lights, a power window and other essential loads, a components of the ADAS system, or the like, and a portion (such as adding an audio speaker) which can be controlled by the user, and distribution from an upper limit supply amount is performed, so that it is possible to grasp and limit the power amount which can be supplied. Accordingly, unexpected battery exhaustion due to excessive customization by the user, and early deterioration due to battery overuse or the like can be prevented in advance. In addition, in view of inrush current and high load, it is possible to eliminate the risk of the battery exhaustion in advance while ensuring a certain amount of margin for the system. Further, by causing the power packet mixer 51 to perform the function of the power distribution management ECU 56, the power supply system may not include the power distribution management ECU as shown in Fig. 1. In this case, the input device 57 and the switches 58 are connected to the power packet mixer 51.

As described above, since the power supply system 10-4 shown in Fig. 15 has a function of recognizing the load 54 connected to the power packet router 52, it is possible to retrofit a new load 54 using this function. That is, since the power packet router 52 scans the load 54 connected to the power output port 52b at the time of start, it is possible to confirm what kind of load is connected. Therefore, the power packet router 52 and the power packet mixer 51 can also recognize the load 54-7 retrofitted to the power output port 52b.

### <Case of Removing the Load 54-7>

On the other hand, in the power supply system 10-4 shown in Fig. 15, a procedure of an operation performed by each unit when removing the load 54-7 from the power output port 52b of the power packet router 52-2 is as follows.
1. The power packet router 52-2 detects a voltage change of the power output port 52b due to the removal of the load 54-7, and the process proceeds to the next process using this as a trigger.
2. The power packet router 52-2 sends a stop request to the power packet mixer 51 so as to stop the supply of the driving power to the removed load 54-7.
3. The power packet mixer 51 stops transmission of the driving power to the load 54-7 in accordance with the stop request from the power packet router 52-2.

### <Technique of Priority Control for Preventing Battery Exhaustion>

As described above, in the power supply system 10-4 shown in Fig. 15, a load or the like can be added as necessary. However, if the load increases beyond the design expected, the balance between the power demand and the power supply capacity may deviate from an appropriate state, the power supply capacity may be insufficient, and the battery exhaustion may occur. Therefore, in the power supply system 10-5 of the present embodiment, the supply amount and the demand of power are adjusted between the mixer and other routers. In addition, in a case where the power supply amount is smaller than the power demand, the priority control is performed by giving a priority to the load.

### <Configuration Example of Power Supply System 10-5>

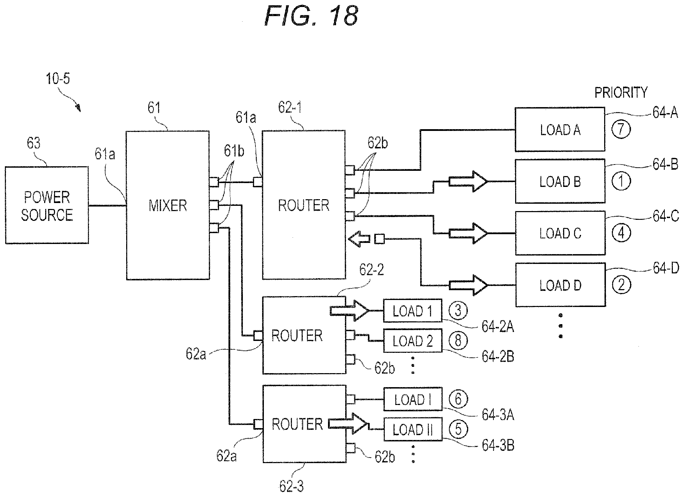

A configuration example of a power supply system 10-5 in the embodiment of the present invention is shown in Fig. 18.

The power supply system 10-5 shown in Fig. 18 includes, as main components, a power packet mixer 61, and a plurality of power packet routers 62-1 to 62-3. An in-vehicle battery (power source) 63 is connected to a power input port 61a of the power packet mixer 61. In addition, the power packet routers 62-1 to 62-3 are connected to a plurality of power packet output ports 61b of the power packet mixer 61, respectively.

A plurality of loads 64-A to 64-D are connected to power output ports 62b of the power packet router 62-1. A plurality of loads 64-2A, 64-2B are connected to power output ports 62b of the power packet router 62-2. In addition, a plurality of loads 64-3A, 64-3B are connected to power output ports 62b of the power packet router 62-3.

Basic configurations and operations of the power packet mixer 61 and the power packet routers 62-1 to 62-3 are the same as those of the power packet mixer 21 shown in Fig. 5 and the power packet router 22 shown in Fig. 7.

In the example shown in Fig. 18, priorities "7", "1", "4", and "2" are assigned in advance to the loads 64-A, 64-B, 64-C, and 64-D, respectively. Further, priorities "3", "8" are assigned in advance to the loads 64-2A, 64-2B, respectively Priorities "6", "5" are assigned in advance to the loads 64-3A, 64-3B, respectively.

In the power supply system 10-5 shown in Fig. 18, the power packet mixer 61 constantly calculates a size of the power supply capacity and a size of the power demand, and monitors whether or not their balance deviates from the appropriate range. When a state of "power supply capacity < power demand" is detected, the power packet mixer 61 performs the priority control of the load.

For example, the loads to be supplied with the power are limited only to the priority range of "1 to 5", and the power supply to other loads is temporarily stopped. Therefore, in this case, the power supply is continued for the loads 64-B, 64-C, 64-D, 64-2A, and 64-3B shown in Fig. 18, but the power supply to the loads 64-A, 64-2B, and 64-3A having low priorities is stopped.

Since the power demand can be reduced by the priority control, a state of "power supply capacity ≥ power demand" can be maintained. Therefore, the battery exhaustion can be prevented. In addition, since the power supply state with respect to a load having a high priority can be maintained, an adverse effect on an important system can be suppressed.

As a specific example, in a vehicle, a case where simultaneous driving such as a wiper, a defogger, an air conditioner, and a headlight/fog lamp is performed is assumed. In the case of setting a margin assuming a worst case of such a high load operating environment, or the like, and scheduling the power supply in conjunction with the power supply capacity of the power source, there is a problem that a power frame to be consumed in an entertainment-related system becomes tight. However, in a case of performing the priority control described above, the problem is less likely to occur. In addition, in the case of performing the priority control described above, it is unnecessary to match the total driving power and the maximum supply capacity of all the loads, and the battery cost or the like can be suppressed.

A network topology of the power supply system is not limited to a tree type shown in Fig. 18, but may be a star type, a ring type, a bus type, or the like.

Further, in the power supply system 10-5 described above, the power packet mixer 61 calculates the size of the power supply capacity and the size of the power demand. However, the power distribution management ECU 26B shown in Fig. 11 may be provided, the power distribution management ECU 26B may calculate the power supply size and the power demand, and may monitor whether or not the balance thereof deviates from the appropriate range. Further, like a power supply system 10-11 to be described later, the power packet mixer 61 or the power distribution management ECU 26B may appropriately correct a priority of the load according to a condition of the vehicle.

In the configuration of the power supply system 10-5, it is possible to easily add a load to a main transmission path (trunk line) or enlarge (add) a network. Therefore, it is possible (improvement of versatility) to unify a platform without depending on a grade of the vehicle (product) while maintaining the benefits (wire-saving, weight reduction, and mountability to the vehicle) of a power network by the power packet transmission system.

### <Technique for Wire-Saving of Wire Harness>

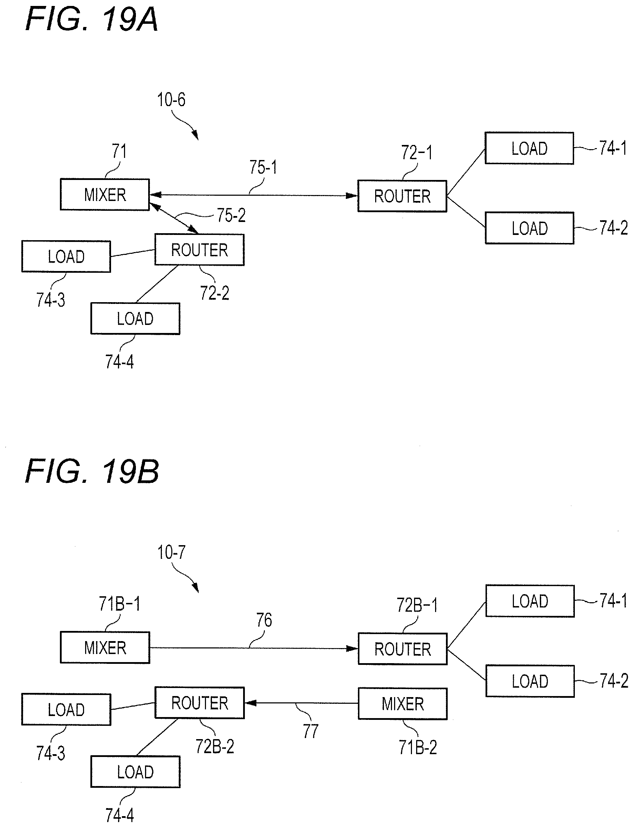

Two configuration examples of the power supply system according to the embodiment of the present invention are shown in Figs. 19A, 19B, respectively.

By adopting the power packet transmission technique as described above in the power supply system used on the vehicle, it is possible to transmit power from various types of power sources having different voltages or the like to the load side by using a common power transmission path, for example. Therefore, it contributes to wire-saving of a wire harness. However, in an actual vehicle, since it is assumed that power source lines are wired from various directions with respect to loads disposed at various positions on the vehicle, an effect of the wire-saving of the wire harness may not be obtained.

For example, the power packet mixer 21 shown in Fig. 5 receives power from the power source on the upstream side, generates the power packet, and has only a function of transmitting the power packet to the downstream side of the power transmission path. In addition, the power packet router 22 shown in Fig. 7 has only the function of receiving the power packet transmitted from the power packet mixer 21 on the upstream side of the power transmission path and supplying it to the downstream side. That is, the power packet cannot be transmitted bidirectionally.

Therefore, in a case where the power supply system is configured using the power packet mixer 21 or the power packet router 22 configured as described above, in a situation where a plurality of loads are distributed and disposed, for example, a power supply system 10-7 shown in Fig. 19B is configured.

The power supply system 10-7 shown in Fig. 19B includes two power packet mixers 71B-1, 71B-2, and two power packet routers 72B-1, 72B-2. Then, the power packet router 72B-2 is disposed in the vicinity of the power packet mixer 71B-1, and two loads 74-3, 74-4 are connected to an output side of the power packet router 72B-2. In addition, the power packet router 72B-1 is disposed in the vicinity of the power packet mixer 71B-2, and two loads 74-1, 74-2 are connected to an output side of the power packet router 72B-1.

The output of the power packet mixer 71B-1 and the input of the power packet router 72B-1 are connected via a power transmission path 76, and the output of the power packet mixer 71B-2 and the input of the power packet router 72B-2 are connected via a power transmission path 77.

That is, in the power supply system 10-7, since the power transmission path 76 for a forward path and the power transmission path 77 for a return path have to be disposed, the number of wires of the wire harness cannot be reduced. In addition, the number of power packet mixers 71B may increase.

Therefore, in the present embodiment, a power supply system 10-6 shown in Fig. 19A is configured. The power supply system 10-6 includes a single composite power packet mixer 71 and two composite power packet routers 72-1, 72-2.

The composite power packet mixer 71 is, for example, a composite device provided with some functions of the power packet router 22 shown in Fig. 7 in addition to the function of the power packet mixer 21 shown in Fig. 5. That is, the composite power packet mixer 71 has a function of receiving the power packet in addition to the function of generating and transmitting the power packet, and can be used to transmit the power packet bidirectionally.

The composite power packet router 72 is, for example, a composite device provided with some functions of the power packet mixer 21 shown in Fig. 5 in addition to the function of the power packet router 22 shown in Fig. 7. That is, the composite power packet router 72 has a function of generating and transmitting the power packet in addition to the function of receiving the power packet, so that it can be used to transmit the power packet bidirectionally.

In the power supply system 10-6 shown in Fig. 19A, each of the composite power packet mixer 71 and the composite power packet routers 72-1, 72-2 supports a bidirectional power packet transmission. Therefore, the composite power packet mixer 71 and the composite power packet router 72-1 are connected by a single bidirectional power transmission path 75-1, and the composite power packet mixer 71 and the composite power packet router 72-2 are connected by a single bidirectional power transmission path 75-2. In addition, two loads 74-1, 74-2 are connected to an output side of the composite power packet router 72-1, and two loads 74-3, 74-4 are connected to an output side of the composite power packet router 72-2.

That is, in the power supply system 10-6 shown in Fig. 19A, the number of power transmission paths is reduced as compared with the power supply system 10-7 of Fig. 19B. Therefore, the number of wires of the wire harness corresponding to the bidirectional power transmission paths 75-1, 75-2 can be reduced. Further, since the total number of routers and mixers can be reduced, it is possible to avoid an increase in size of the equipment and to reduce the cost required for mounting the power packet transmission technique. Particularly, in a situation where the type and total number of loads are increased, these loads are distributed and disposed at various positions on the vehicle, and the power source lines for supplying the power to these loads are wired from each other, a remarkable effect can be expected.

### <Technique 2 for Interchanging Insufficient Power of Power Source>

### <Configuration Example of Power Supply System 10-8>

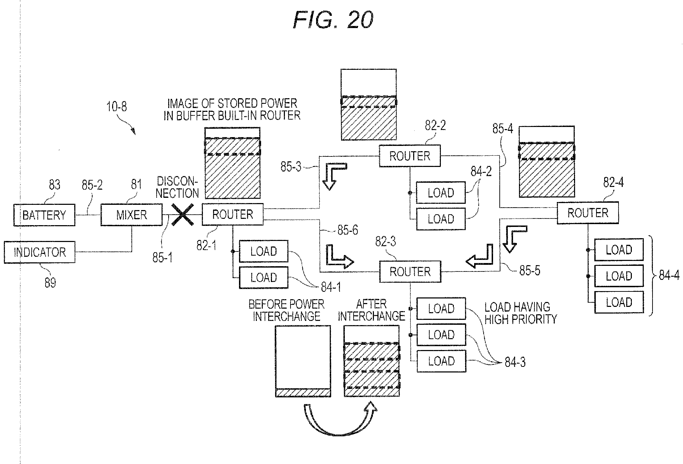

A configuration example of a power supply system 10-8 in the embodiment of the present invention is shown in Fig. 20.

The power supply system 10-8 shown in Fig. 20 includes, as main components, a power packet mixer 81, and a plurality of power packet routers 82-1 to 82-4. A basic configuration and an operation of the power packet mixer 81 are the same as those of the power packet mixer 21 shown in Fig. 5. Basic configurations and operations of the power packet routers 82-1 to 82-4 are the same as those of the power packet router 22 shown in Fig. 7 or the power packet router 22B shown in Fig. 13.

An in-vehicle battery 83 is connected to an input side of the power packet mixer 81 via a power transmission path 85-2. In addition, a port on the output side of the power packet mixer 81 is connected to an input side of the power packet router 82-1 via a power transmission path 85-1.

At an output side of the power packet router 82-1, a ring-shaped power transmission path is formed which passes through each of the four power packet routers 82-1 to 82-4. That is, a power transmission path 85-3 connects between the power packet routers 82-1, 82-2, a power transmission path 85-4 connects between the power packet routers 82-2, 82-4, a power transmission path 85-5 connects between the power packet routers 82-4, 82-3, and a power transmission path 85-6 connects between the power packet routers 82-3, 82-1.

A plurality of loads 84-1, 84-2, 84-3, and 84-4 are connected to output sides of the power packet routers 82-1, 82-2, 82-3, and 82-4, respectively.

### <Necessity of Power Interchange>

In a situation such as the power supply system 10-8 shown in Fig. 20, how each of the loads 84-1 to 84-4 is used largely changes depending on a driving situation of the vehicle and a use situation of the user. Therefore, the instantaneous stored power stored at each time point in power storage units of the power packet routers 82-1 to 82-4 is also different from each other.

When the path of the power transmission path 85-1 is cut off due to disconnection of the wire harness, power from the in-vehicle battery 83 cannot be supplied to the power packet routers 82-1 to 82-4, for example. Since each of the power packet routers 82-1 to 82-4 includes the power storage unit, even when the power transmission path 85-1 is cut off, the power can be supplied to the loads 84-1 to 84-4 for a while.

However, since an power amount stored in each of the power packet routers 82-1 to 82-4 varies depending on the situation at that time, the power supply to the load having a high importance may be stopped in a short time. Therefore, when the power transmission path 85-1 is cut off, a system is required to maintain a function of the load having a high priority, for example, until the vehicle is safely stopped.

### <Special Function in Power Supply System 10-8>

Each of the plurality of power packet routers 82-1 to 82-4 shown in Fig. 20 has a function for performing data communication between each other. In addition, at least one of the plurality of power packet routers 82-1 to 82-4, the power packet mixer 81, or a device (not shown) which manages power packet routers 82-1 to 82-4 and the power packet mixer 81 has a function of detecting whether the power transmission path 85-1 is disconnected.

In a case where the disconnection of the power transmission path 85-1 is detected, there is a function for maintaining the power supply to the load having a high priority load by effectively using the power stored in each of the plurality of power packet routers 82-1 to 82-4, that is, a function of interchanging the power as necessary by the plurality of power packet routers 82-1 to 82-4. The function is realized by, for example, the control unit 45 of Fig. 7 or the control unit 45B of Fig. 13.

### <Operation Example of Power Supply System 10-8>

The power supply system 10-8 shown in Fig. 20 operates as follows when a disconnection occurs in the power transmission path 85-1.
1. Any one of the power packet mixer 81 and the power packet routers 82-1 to 82-4 detects the occurrence of disconnection and a disconnected position.
2. When detecting the disconnection, the power packet mixer 81 notifies the driver of an abnormality using an indicator 89 or the like.
3. Among the plurality of power packet routers 82-1 to 82-4, those whose connection states of the power transmission paths are maintained communicate with each other, and share information representing their respective storage status or the like.
4. Among the plurality of power packet routers 82-1 to 82-4, it is identified whether or not the power storage amount of a specific router to which the load 84 to which a high priority has been allocated in advance is connected is sufficient, and if the power is insufficient, the other routers interchanges the power.

For example, in the power supply system 10-8 shown in Fig. 20, in a case where a priority of the load 84-3 connected to the power packet router 82-3 is high, it is assumed that the power amount stored in the power packet router 82-3 is insufficient for driving the load 84-3. In this case, for example, the power packet router 82-1 or another power packet router 82-4 storing sufficient power transmits a power packet addressed to the power packet router 82-3 to interchange the power. By the interchange, even if the power transmission path 85-1 is cut off, the power storage unit of the power packet router 82-3 is charged with sufficient power, so that the load 84-3 having the high priority can be driven for at least a predetermined time.

Instead of the power packet routers 82-1 to 82-4 communicating with each other to interchange power, the power supply system 10-8 may include the power distribution management ECU 26B as shown in Fig. 11, the power distribution management ECU 26B may store the power storage amount stored in each of the power packet routers 82-1 to 82-4, and may instruct the power packet routers 82-1 to 82-4 to interchange the power as necessary. In particular, in a case where the number of power packet routers included in the power supply system 10-8 is large, the power interchange can be centrally managed by the power distribution management ECU 26B, so that it is unnecessary to perform communication for the power interchange among the power packet routers, and a complexity of the system can be suppressed.

### <Technique of "Failure Diagnosis">

In a power supply system for a vehicle, for example, peeling of a coating of each electric wire configuring the wire harness, half-fitting at a terminal fitting portion, or the like may occur, and chattering short or the like generated due to the influence may be hardly detected, and thus the entire system may be affected. Therefore, there is a need for a system that detects deterioration of the electric wires or the like in a power transmission path and prevents problems in advance. In a general diagnosis technique, there may be a case where a new device is needed to detect an abnormality of a transmission line, or disconnection or short circuit (dead short) or the like cannot be detected.

Therefore, the "failure diagnosis" in the present embodiment detects an abnormality in the transmission path from a change in a physical signal waveform such as a voltage value regarding a pulse for abnormality detection included in a header in a power packet received by the power packet router.

### <Configuration Example of Power Supply System 10-9>

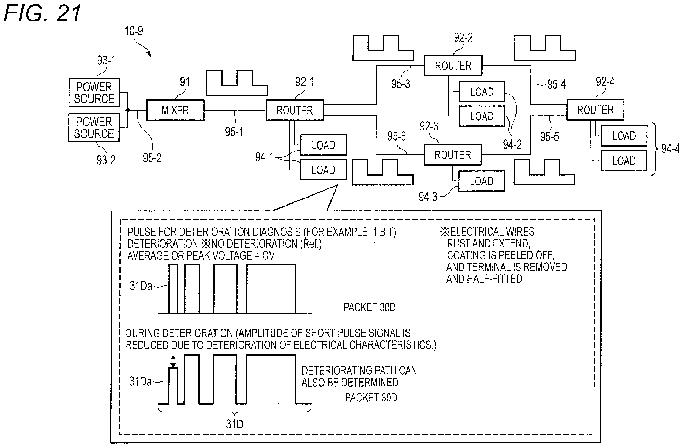

A configuration example of the power supply system 10-9 in the embodiment of the present invention is shown in Fig. 21.

The power supply system 10-9 illustrated in Fig. 21 includes, as main components, a power packet mixer 91 and a plurality of power packet routers 92-1 to 92-4. The basic configuration and operation of the power packet mixer 91 are similar to those of the power packet mixer 21 shown in Fig. 5. The basic configuration and operation of the power packet routers 92-1 to 92-4 are similar to those of the power packet router 22 shown in Fig. 7.

A plurality of in-vehicle batteries 93-1, 93-2 that supply different voltages (48 V and 12 V) are connected to an input side of the power packet mixer 91 via a power transmission path 95-2. A port on an output side of the power packet mixer 91 is connected to an input of the power packet router 92-1 via a power transmission path 95-1. The output voltages of the plurality of in-vehicle batteries 93-1, 93-2 may be the same.

Also, a ring-shaped power transmission path that passes through the four power packet routers 92-1 to 92-4 is formed on an output side of the power packet router 92-1. That is, the power transmission path 95-3 connects the power packet routers 92-1 and 92-2, the power transmission path 95-4 connects the power packet routers 92-2 and 92-4, the power transmission path 95-5 connects the power packet routers 92-4 and 92-3, and the power transmission path 95-6 connects the power packet routers 92-3 and 92-1.

A plurality of loads 94-1, 94-2, 94-3, and 94-4 are connected to the output sides of the power packet routers 92-1, 92-2, 92-3, and 92-4, respectively.

### configuration Example of Power Packet 30D>

In the power supply system 10-9, the power packet transmitted by the power packet mixer 91 or the like includes a header 31D, a payload, and a footer. Further, as shown in Fig. 21, in the header 31D, a deterioration diagnosis pulse 31Da having a short time width is allocated.

The deterioration diagnosis pulse 31Da is suitable for diagnosing deterioration of the wire harness since the deterioration diagnosis pulse 31Da includes a broadband signal component. For example, the following deterioration may occur in each electric wire of the wire harness due to the influence of aged deterioration.
1. Rust is generated.
2. Electrical wires extend.
3. The insulation coating on an electrical wire surface is peeled off.
4. A terminal is removed.
5. A fitting portion of the terminal is in a half-fitted state.

When the wire harness is deteriorated as described above, since the electrical characteristics of the transmission path deteriorate, a signal such as the deterioration diagnosis pulse 31Da which has a short pulse width and particularly includes a high frequency component increases loss during transmission. As a result, for example, a change occurs between an amplitude (Vd1) of a voltage of the deterioration diagnosis pulse 31Da in the power packet 30D sent by the power packet mixer 91 to the power transmission path 95-1 and an amplitude (Vd2) of a voltage of the degradation diagnosis pulse 31Da in the power packet 30D received by the power packet router 92-1. Therefore, by detecting the voltage change or the waveform change of the deterioration diagnosis pulse 31Da, the "failure diagnosis" of the wire harness can be performed.

In the power supply system 10-9 shown in Fig. 21, since the plurality of in-vehicle batteries 93-1, 93-2 having different output voltages are connected to the input of the power packet mixer 91, the voltage of the power packet 30D output to the power transmission path 95-1 may also change to two or more types depending on the timing difference. However, the portion of the header 31D is created based on the voltage of a predetermined one of the outputs of the in-vehicle batteries 93-1, 93-2 such that the voltage thereof (amplitude) does not change. Therefore, the voltage on a transmission side of the deterioration diagnosis pulse 31 Da is constant.

### <Specific Example of "Failure Diagnosis">

For example, when the power transmission path 95-1 shown in Fig. 21 is a diagnosis object, the power packet router 92-1 extracts the deterioration diagnosis pulse 31Da from the header 31D of the power packet 30D received from the power transmission path 95-1, and measures a voltage value (Vd2) of the deterioration diagnosis pulse 31Da. Specifically, a peak value or an average value of the voltage of the deterioration diagnosis pulse 31Da is detected. By comparing the voltage value (Vd2) with, for example, a predetermined normal value, the presence or absence of a failure in the power transmission path 95-1 can be diagnosed.

For example, information indicating a voltage value (Vd1) of the deterioration diagnosis pulse 31Da in the power packet 30D sent out by the power packet mixer 91 may be included in the header 31D of the power packet 30D and transmitted. In this case, for example, the power packet router 92-1 can diagnose the presence or absence of a failure in the power transmission path 95-1 by extracting the information of the voltage value (Vd1) from the header 31D of the received power packet 30D and comparing the voltage of a difference between the voltage value (Vd1) and the voltage value (Vd2) with a predetermined threshold.

Further, for example, a pulse having a small pulse width and a pulse having a larger pulse width may be combined as the deterioration diagnosis pulse 31Da. In this case, it is also possible to diagnose the presence or absence of a failure in the power transmission path 95-1 based on the difference or a ratio between a voltage of the pulse having a small pulse width and a voltage of the pulse having a large pulse width. That is, since the signal having a small pulse width is likely to be affected by the deterioration of the transmission path, the presence or absence of a failure can be diagnosed based on a difference in voltages of a plurality of signals having different pulse widths.

In a case where the power supply system 10-9 includes the power distribution management ECU 26 as in Fig. 3, the power packet mixer 91 transmits information indicating the voltage value (Vd1) of the deterioration diagnosis pulse 31Da included in the power transmission information 28B, the power packet router 92-1 transmits the received information indicating the voltage value (Vd2) of the degradation diagnosis pulse 31Da of the received power packet 30D included in the power reception information 27B, the power distribution management ECU 26 may compare the voltage of the difference between the voltage value (Vd1) and the voltage value (Vd2) with the predetermined threshold to diagnose the presence or absence of a failure in the power transmission path 95-1.

The power supply system 10-9 may perform a similar operation as that in Fig. 14. That is, from when the power transmission information 28B including the information on the voltage value (Vd1) is received by the power distribution management ECU 26B to the timeout of a power reception information reception waiting timer, if the power reception information 27B including information on the voltage value (Vd2) is not received from the power packet router 92-1, it is determined that abnormality such as disconnection or short circuit occurs in the power distribution path (S76), and power distribution is not performed by the same power distribution path (S77). For example, in the power supply system 10-9 shown in Fig. 21, since the power transmission paths between the four power packet routers 92-1 to 92-4 are connected in a ring shape, a plurality of paths can be selected as necessary at this point. Therefore, for example, when a failure of the transmission path occurs in the power transmission path 95-3, it can also be considered to reflect the result of the failure diagnosis, switch to the power transmission path 95-6, and transmit the power packet 30D.

In the power supply system 10-9 of the present embodiment, it is possible to reliably detect abnormality of the power distribution path including disconnection, short circuit (dead short), or the like without using any special wiring or equipment. In addition, the abnormality of the wire harness itself that is actually distributing power can be directly detected.

### <Technique for Distributing Power in View of Priority of Each Load>

### <Configuration Example of Power Supply System 10-11>

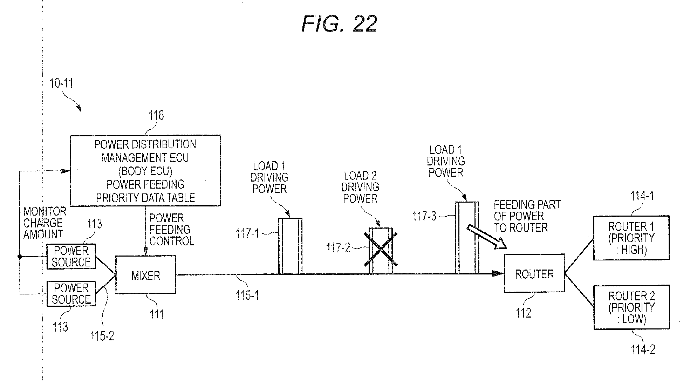

A configuration example of the power supply system 10-11 in the embodiment of the present invention is shown in Fig. 22.

The power supply system 10-11 shown in Fig. 22 includes, as main components, a power packet mixer 111, a power packet router 112, and a power distribution management ECU 116.

The basic configuration and operation of the power packet mixer 111 are, for example, similar to those of the power packet mixer 21 shown in Fig. 5. The basic configuration and operation of the power packet router 112 are, for example, similar to those of the power packet router 22 shown in Fig. 7. The basic configuration and operation of the power distribution management ECU 116 are, for example, similar to those of the power distribution management ECU 26 shown in Fig. 9, and the power distribution management ECU 116 is configured by, for example, a body ECU in the present embodiment.

A plurality of in-vehicle batteries (power sources) 113 are connected to an input side of the power packet mixer 111 via power transmission paths 115-2. The output of the power packet mixer 111 and the input of the power packet router 112 are connected via a power transmission path 115-1. A plurality of loads 114-1, 114-2 are connected to an output side of the power packet router 112. The voltages output from the plurality of in-vehicle batteries (power sources) 113 may be the same or different from each other.

Therefore, based on power of power source supplied from the in-vehicle battery 113, for example, power packets 117-1, 117-2, and 117-3 can be sequentially generated by the power packet mixer 111 and sent to the power packet router 112 via the power transmission path 115-1. Also, the power packet router 112 can supply necessary power to each of loads 114-1, 114-2.

In the example shown in Fig. 22, the power distribution management ECU 116 has a function of monitoring the charge amount of the plurality of in-vehicle batteries 113. The power distribution management ECU 116 is connected to the power packet mixer 111, and can perform power feeding control on the power packet mixer 111.

### <Necessity of Power Distribution According to Priority of Each Load>

In an environment such as the power supply system 10-11 shown in Fig. 22, the charge amount of the in-vehicle battery 113 may be insufficient due to some reason. When the charge amount of the in-vehicle battery 113 is insufficient, the power packet mixer 111 cannot supply all the power packets required to drive the loads 114-1 and 114-2 to the power packet router 112. Therefore, the operation of each of the loads 114-1, 114-2 is stopped.

On the other hand, since various types of loads are actually present on the vehicle, there are a load having a high importance and a load having a low importance. Whether or not the importance of each load is high varies depending on a traveling environment and a vehicle state. When the charge amount of the in-vehicle battery 113 is insufficient, the supply of power to the load having a high importance is also stopped. Therefore, even in a case where the charge amount of the in-vehicle battery 113 is insufficient, it is necessary to preferentially supply power to a part of the loads so as not to stop supplying power to the load having a high importance as much as possible.

### <Characteristic Operation of Power Supply System 10-11>

In the power supply system 10-11 shown in Fig. 22, the power distribution management ECU 116 manages the level of priority for each of the plurality of loads 114-1, 114-2. The priority is not fixed in advance but varies depending on a situation at that time.

That is, the power distribution management ECU 116 dynamically determines the level of the priority of each of the loads 114-1, 114-2 based on contents of a power supply priority table prepared in advance and information indicating the situation at that time, for example, a difference in a traveling state of the vehicle, a state of an occupant, and a difference in the environment outside the vehicle such as temperature, light and dark. For example, in the example shown in Fig. 22, the priority of one of the loads 114-1 is high and the priority of the other load 114-2 is low.

When it is detected that the charge amount of the in-vehicle battery 113 is insufficient (a state in which the residual amount of power storage has decreased) based on a monitoring result of the charge amount of the in-vehicle battery 113, the power distribution management ECU 116 performs priority control on the loads 114-1, 114-2.

For example, in response to the power distribution request transmitted by the power packet router 112, in a state where the power packets 117-1, 117-3 addressed to the load 114-1 and the power packet 117-2 addressed to the load 114-2 are sequentially transmitted from the power packet mixer 111 as shown in Fig. 22, the output of the power packet 117-2 addressed to the load having a low priority 114-2 is stopped or suppressed by the priority control of the power distribution management ECU 116. Further, for example, the power of the power packet 117-3 is increased by the amount of the stopped power packet 117-2, and the increased power is transmitted to the power packet router 112.

Each of the power packets 117-1 to 117-3 transmitted by the power packet mixer 111 is constituted, for example, in the same manner as the power packet 30 shown in Fig. 4, by the header 31 and the payload 32. The header 31 includes a synchronization signal 31a, destination information 31b, and power transmission power information 31c. The destination of each of the power packets 117-1 to 117-3 can be designated by the destination information 31b. The power transmission power information 31c can inform the power packet router 112 of the amount of power transmitted to each destination.

The power packet mixer 111 transmits the power packet generated based on the power transmission instruction information received from the power distribution management ECU 116 to a predetermined output port.

The power packet router 112 collates the destination information included in the header of the power packet received at the input port. As a result of the collation, in a case of addressing to the load connected to the own router, the power of the payload is charged to the power storage unit, and the power of the power storage unit is output to a predetermined output port. As a result of the collation, in a case of addressing a load connected to another router that relays the own router, a power packet addressed to a predetermined router is generated from the power of the power storage unit, output to a predetermined output port, and transmitted to a predetermined router. The power packet router 112 notifies the power distribution management ECU 116 of the power distribution request information as necessary based on the driving power of the load connected to the output port and the state of charge of the power storage unit.

When receiving a notification of the power distribution request information from the power packet router 112, the power distribution management ECU 116 compares the charge amount of the in-vehicle battery 113 with a required power and notifies the power packet mixer 111 of the power transmission instruction information when the charge amount exceeds the required power.

In a case where the charge amount of the in-vehicle battery 113 is lower than the required power, the power distribution management ECU 116 prohibits the power transmission instruction addressed to the in-vehicle load to which a priority lower than the priority of the in-vehicle load of the power distribution request source is allocated, and notifies the power packet mixer 111 of the power transmission instruction information for the in-vehicle load of the power distribution request source after distributed power is ensured. When the power transmission instruction addressed to the in-vehicle load to which the priority lower than the priority of the in-vehicle load of the power distribution request source is allocated is not issued, the power distribution management ECU 116 does not issue the power transmission instruction to the in-vehicle load of the power distribution request source.

The priority allocated to each in-vehicle load is notified by, for example, power distribution request information from the power packet router 112 and managed by the power distribution management ECU 116. Alternatively, the power distribution management ECU 116 determines and manages the priority of each load based on the type of each load and the vehicle state (the traveling state, the state of the occupant, the environment outside the vehicle (temperature, light and dark), or the like).

In the power supply system 10-11 shown in Fig. 22, the priority control can be performed on the loads 114-1, 114-2 when the power that can be supplied by the power source such as the in-vehicle battery 113 is insufficient. Moreover, it is not necessary to add a special circuit to control a power feeding amount and a power feeding timing. Further, since the power feeding addressed to each in-vehicle load can be individually controlled by the power packet and the in-vehicle load that allows power distribution at the time of system abnormality can be limited, the power distribution to the important load can be continued to a maximum extent.

Similar to the power supply system 10-5 shown in Fig. 18, the power supply system 10-11 may determine or manage the priority by the power packet mixer 111 instead of the power distribution management ECU 116.

### <Technique for Collectively Transmitting Power Addressed to a Plurality of Loads>

### <Configuration Example of Power Supply System 10-12>

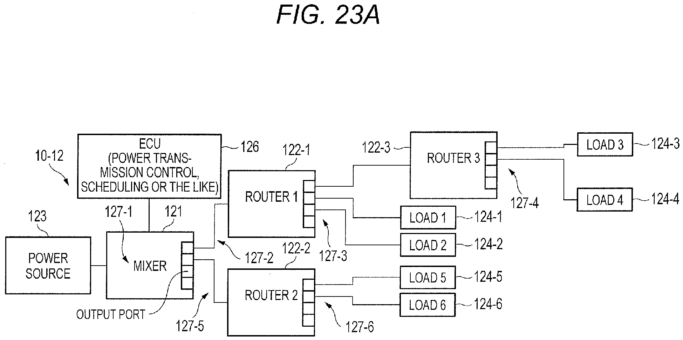

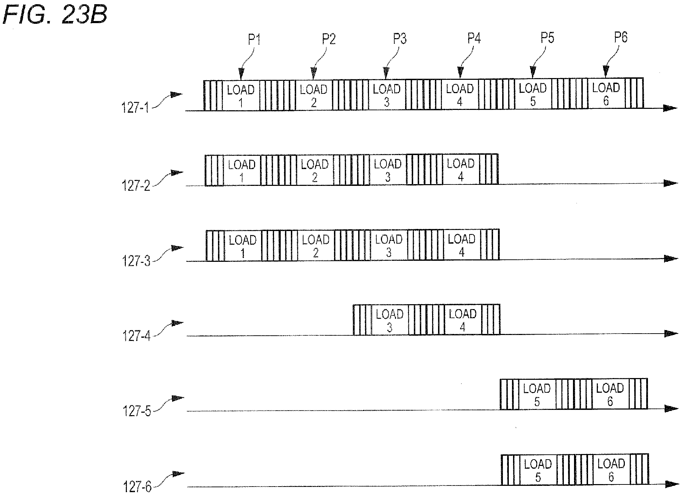

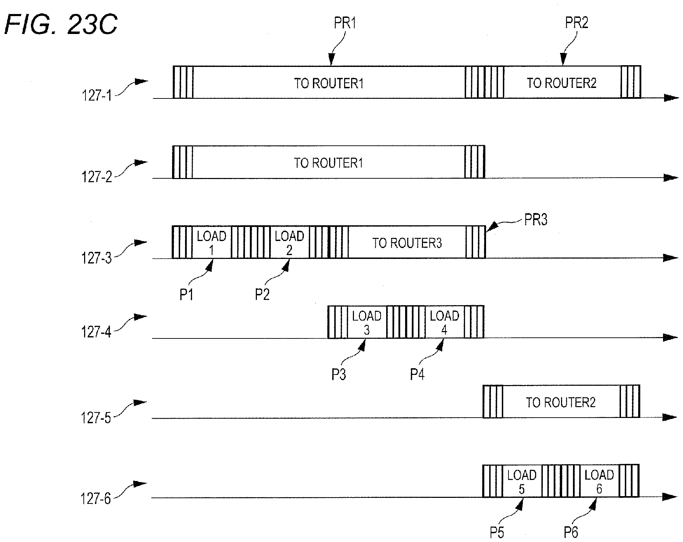

A configuration example of the power supply system 10-12 in the embodiment of the present invention is shown in Fig. 23A. Further, variation examples of power packets output to the transmission paths of the respective units in different operations are shown in Figs. 23B and 23C.

The power supply system 10-12 shown in Fig. 23A includes, as main components, a power packet mixer 121, a plurality of power packet routers 122-1 to 122-3, and a power distribution management ECU 126.

The basic configuration and operation of the power packet mixer 121 are, for example, similar to those of the power packet mixer 21 shown in Fig. 5. The basic configuration and operation of each of the power packet routers 122-1 to 122-3 are, for example, similar to those of the power packet router 22 shown in Fig. 7. The basic configuration and operation of the power distribution management ECU 126 are, for example, similar to those of the power distribution management ECU 26 shown in Fig. 9.

An in-vehicle battery (power source) 123 is connected to an input side of the power packet mixer 121. Input ports of the plurality of power packet routers 122-1, 122-2 are connected to a plurality of output ports of the power packet mixer 121 via power transmission paths 127-2, 127-5.

A power packet router 122-3 and a plurality of loads 124-1, 124-2 are connected to a plurality of output ports of the power packet router 122-1 via power transmission paths 127-3. A plurality of loads 124-5, 124-6 are connected to a plurality of output ports of the power packet router 122-2 via power transmission paths 127-6. A plurality of loads 124-3, 124-4 are connected to a plurality of output ports of the power packet router 122-3 via power transmission paths 127-4. The power distribution management ECU 126 is connected so as to be able to communicate with the power packet mixer 121.

### <Description of General Operation>

Fig. 23B shows a state of each of the power transmission paths 127-1 to 127-6 in a case where the power supply system 10-12 shown in Fig. 23 performs a general operation. The power transmission path 127-1 corresponds to a state of the power transmission paths connected to all the output ports of the power packet mixer 121.

In the example shown in Fig. 23B, six power packets P1, P2, P3, P4, P5, and P6 appear in order on the power transmission path 127-1 in a substantially continuous state. Here, the power packets P1 to P6 are packets addressed to different loads (LOAD) 124-1 to 124-6, respectively.

That is, the power of the power packet P1 addressed to the load 124-1 and the power of the power packet P2 addressed to the load 124-2 are sent from the power transmission path 127-1 to a destination via the power transmission paths 127-2, 127-3.

The power of the power packet P3 addressed to the load 124-3 and the power of the power packet P4 addressed to the load 124-4 are sent from the power transmission path 127-1 to a destination via the power transmission paths 127-2, 127-3, and 127-4. The power of the power packet P5 addressed to the load 124-5 and the power of the power packet P6 addressed to the load 124-6 are sent from the power transmission path 127-1 to a destination via the power transmission paths 127-5, 127-6.

### <Problem in General Operation>

If packets directed to all the loads connected by the mixer are generated as in a related method shown in Fig. 23B, the time of the payload is redundant, and the power transmission path cannot be efficiently used. Further, a time zone of the header of each power packet cannot be used for power transmission.

### <Characteristic Control>

In order to solve the above problems, in the power supply system 10-12 shown in Fig. 23A, the control described below is performed.
1. In a case where the load on the power transmission path is increased (corresponding to the state of Fig. 23B), the power packet mixer 121 on the upstream side integrates a plurality of power packets having different destinations and generates one power packet.
2. Each power packet router 122 or the power packet mixer 121 on the downstream side separates one power packet into a plurality of power packets for each destination based on header information of the received power packet, and performs processing on each of the separated power packets.

By integrating a plurality of power packets having different destinations as described above into one, the required time of the header to be transmitted to the transmission path can be reduced, and efficient transmission becomes possible.

### <Specific Example of Characteristic Operation>

Fig. 23C shows a state of each of the power transmission paths 127-1 to 127-6 in a case where the power supply system 10-12 shown in Fig. 23 performs the above-described characteristic control. In the example shown in Fig. 23C, similarly to the example shown in Fig. 23B, it is assumed that six power packets P1, P2, P3, P4, P5, and P6 addressed to the loads 124-1 to 124-6 need to be transmitted from the power packet mixer 121 in a substantially continuous state.

In the example shown in Fig. 23C, as a result of integrating the four power packets P1, P2, P3, and P4 passing through the common power transmission path 127-2, the power packet mixer 121 generates a power packet PR1 addressed to the power packet router 122-1 and transmits the power packet PR1 to the power transmission path 127-1.

After the transmission of the power packet PR1 is completed, as a result of integrating the two power packets P5, P6 passing through the common power transmission path 127-5, the power packet mixer 121 generates a power packet PR2 addressed to the power packet router 122-2 and transmits the power packet PR2 to the power transmission path 127-1.

The power packet PR1 transmitted by the power packet mixer 121 reaches the power packet router 122-1 via the power transmission path 127-2. The power packet router 122-1 which received the power packet PR1 separates the four power packets P1, P2, P3, and P4 included in the power packet PR1 from each other and processes them based on the information of the packet header. Therefore, the power of the separated power packets P1, P2 is supplied to the loads 124-1, 124-2 of the destination, respectively.

The power packet router 122-1 integrates the separated power packets P3, P4 to generate and output a power packet PR3 having the power packet router 122-3 as a destination. The power packet router 122-3 receives and decomposes the power packet PR3, extracts the power packets P3, P4, and processes them individually. Therefore, the power of the power packets P3, P4 is supplied to the loads 124-3, 124-4 of the destination, respectively.

The power packet PR2 transmitted by the power packet mixer 121 reaches the power packet router 122-2 via the power transmission path 127-5. The power packet router 122-2 which received the power packet PR2 separates the two power packets P5, P6 included in the power packet PR2 from each other and processes them based on the information of the packet header. Therefore, the power of the separated power packets P5, P6 is supplied to the loads 124-5, 124-6 of the destination, respectively.

That is, in the power supply system 10-12 shown in Fig. 23, the power addressed to the plurality of loads is collected and power packetized on the upstream of the power distribution system, and is reconstructed and transmitted to the power packets addressed to the respective loads on the downstream side based on the information of the header.

In the power supply system 10-12 shown in Fig. 23A, since the plurality of power packets are integrated into one and transmitted, the time corresponding to the information tag of the header transmitted for each packet can be spent on the payload for power supply. For example, assuming that all packets use the same number of bits of information tags, an increase in power transmission power can be expected as compared with the case of common control.

### <Techniques for Time Division Controlling Transmitted Power>

### <Configuration Example of Power Supply System 10-13>

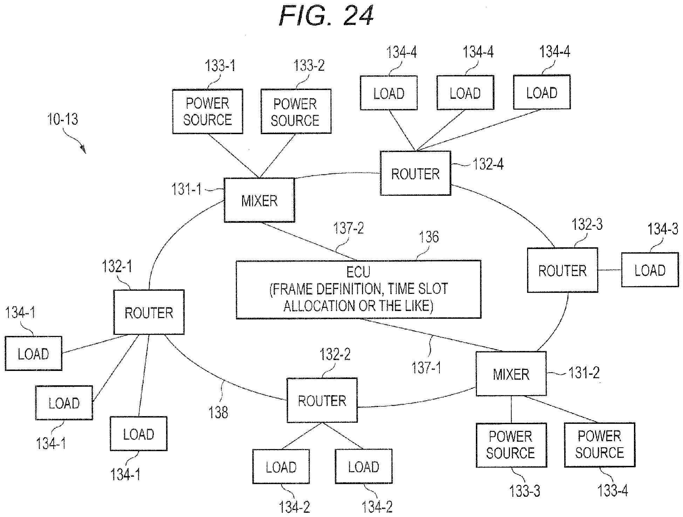

A configuration example of the power supply system 10-13 in the embodiment of the present invention is shown in Fig. 24.

The power supply system 10-13 shown in Fig. 24 forms a ring topology. That is, the power packet mixers 131-1, 131-2 and the power packet routers 132-1, 132-2, 132-3, and 132-4, which are main components, are connected to each other via a power transmission path connected in a ring shape. The power distribution management ECU 136 is connected to the power packet mixers 131-1, 131-2 via communication lines 137-1, 137-2.

The basic configuration and operation of the power packet mixers 131-1, 131-2 are, for example, similar to those of the power packet mixer 21 shown in Fig. 5. The basic configuration and operation of the power packet routers 132-1 to 132-4 are, for example, similar to those of the power packet router 22 shown in Fig. 7. The basic configuration and operation of the power distribution management ECU 136 are, for example, similar to those of the power distribution management ECU 26 shown in Fig. 9.

A plurality of in-vehicle batteries 133-1, 133-2 are connected to an input of the power packet mixer 131-1. A plurality of in-vehicle batteries 133-3, 133-4 are connected to an input of the power packet mixer 131-2. The voltages output from the plurality of in-vehicle batteries 133-1, 133-2, 133-3, and 133-4 may be the same or different from each other.

A plurality of loads 134-1 are connected to a plurality of output ports of the power packet router 132-1. A plurality of loads 134-2 are connected to a plurality of output ports of the power packet router 132-2. A load 134-3 is connected to a plurality of output ports of the power packet router 132-3. A plurality of loads 134-4 are connected to a plurality of output ports of the power packet router 132-4.

### <Problem in System of Ring Topology>

For example, in the power supply system 10-13 shown in Fig. 24, a plurality of power packet mixers 131-1, 131-2 may transmit power packets at the same time on a common power transmission path connected in a ring shape. The plurality of transmitted power packets may collide on the common power transmission path.

### <Characteristic Control of Power Supply System 10-13>

The power supply system 10-13 shown in Fig. 24 performs the following special control in order to avoid collision of the plurality of transmitted power packets on the common power transmission path.
1. A power management node that manages the entire network, that is, the power distribution management ECU 136 generates a packet transmission frame configured by connecting a plurality of time slots.
2. The assignment information of the power allocated to each subsequent slot is stored in a head slot of the packet transmission frame.
3. Each power packet mixer 131 and each power packet router 132 on the network detect the transmission/reception timing of the power packets based on the information of the head slot of the packet transmission frame appearing on the network.

Each time slot constituting the packet transmission frame is allocated such that the timings of the power packets transmitted by the power packet mixer 131 and the power packet router 132 do not coincide with each other.

For example, one packet transmission frame is constituted by four time slots T1, T2, T3, and T4, the packet transmission of the first, second, and third power packet mixers 131 is allocated to the time slots T2, T3, and T4 respectively, and the power distribution management ECU 136 controls to store the contents of the allocation in a head time slot T1.

The information of the packet transmission frame and each slot allocated by the power distribution management ECU 136 can be stored in an information tag in the header of the power packet transmitted by each power packet mixer 131.

The power packet mixer 131 and the power packet router 132 can prevent the information tag from being deteriorated by performing packet transmission at the allocated timing. Therefore, even in a case where the power supply system 10-13 in the ring topology as shown in Fig. 24 is configured, it is possible to prevent the plurality of power packets from colliding on a shared network.

The power distribution management ECU 136 can rearrange the configuration of the time slots to an optimum state at the time of, for example, a power switch ON operation of the operator or a connection of a new load. The communication function required between each power packet mixer 131 and each power packet router 132 can be realized by using the information tag of the power packet. Alternatively, communication may be performed by placing a signal on a frequency different from the fundamental frequency of the clock of the power packet by using a frequency division multiplexing method or the like, or wireless communication may be used.

In the above-described power supply system 10-13, the case of having a ring topology is described as an example, but the power supply system 10-13 may adopt other topologies such as a tree type or a star type.

### <Technique for Non-Contact Power Feeding of Power>

### <Description of Necessity of Non-Contact Power Feeding>

On a vehicle, it is necessary to supply power of power source to various types of loads present at various places. For this reason, for example, a wiring path of the wire harness that supplies the power of power source to the load may not pass through a movable portion such as a connection portion of a door or through a portion difficult to wire. Therefore, there is a problem that contact failure or disconnection of the wire harness is likely to occur and wiring work becomes difficult. Further, a degree of freedom and design of the vehicle form are limited due to the wiring of such a wire harness. If the wire harness can be replaced with a non-contact power feeding, since a wire harness passing through various movable portions or portions difficult to wire becomes unnecessary, the above problem can be solved.

### <Configuration Example 14 of Power Supply System>

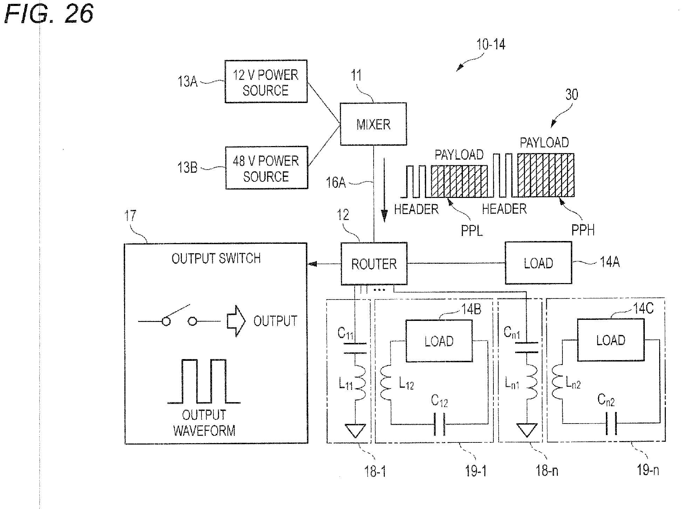

Configuration Example 14 of a power supply system including a non-contact power feeding technology is shown in Fig. 26.

The power supply system 10-14 shown in Fig. 26 includes the power packet mixer 11 and the power packet router 12 in the same manner as the power supply system described above. An in-vehicle battery 13A that outputs a power source voltage of 12 V and an in-vehicle battery 13B that outputs a power source voltage of 48 V are connected to the input of the power packet mixer 11. The voltages of the plurality of in-vehicle batteries 13A, 13B may be the same.

The basic configuration and operation of the power packet mixer 11 and the power packet router 12 are similar to those of the above-described embodiment. That is, the power packet mixer 11 generates the power packet 30 based on DC power of power source supplied from the in-vehicle batteries 13A, 13B. The generated power packet 30 is supplied to the input of the power packet router 12 via the power transmission path 16A.

The power packet router 12 acquires information such as a destination from the header 31 of the input power packet 30, extracts power from the payload 32, and stores the power in, for example, the power storage unit 15A, 15B shown in Fig. 1. Further, the stored power is supplied to the load.

In the example shown in Fig. 26, the load 14A is connected directly to the zeroth output port of the power packet router 12 in a wired manner, but the other loads 14B, 14C are connected by using the non-contact power feeding technique. The number n of loads connected to the output of the power packet router 12 by the non-contact power feeding technique can be increased or decreased as necessary.

Further, in the present embodiment, in order to selectively supply power to the plurality of loads, each of the n output port portions includes an output switch 17. That is, AC power having a desired frequency can be output by periodically turning on and off the output switch 17 as an AC output circuit according to a predetermined condition.

The first to n-th power transmission circuits 18-1 to 18-n are connected to the first to n-th output ports of the power packet router 12, respectively. The first power transmission circuit 18-1 includes an inductor L11 and a capacitor C11 connected in series to each other. It is also possible to change the circuit to a circuit in which these are connected in parallel. The inductor L11 and the capacitor C11 of the power transmission circuit 18-1 form a resonant circuit. That is, the impedance of the circuit becomes an extreme value at a specific resonance frequency f0 corresponding to time constants of the inductor L11 and the capacitor C11. The second to n-th power transmission circuits are similar to the power transmission circuit 18-1. The resonance frequency f0 may be common to all of the first to n-th power transmission circuits 18-1 to 18-n, or may be set to an independent frequency.

On the other hand, the first to n-th power reception circuits 19-1 to 19-n are arranged in a non-contact state at positions opposed to the power transmission circuits 18-1 to 18-n, respectively. The first power reception circuit 19-1 includes an inductor L12 and a capacitor C12 connected in series to each other. It is also possible to change the circuit to a circuit in which these are connected in parallel. The inductor L12 and the capacitor C12 of the power reception circuit 19-1 form a resonant circuit. That is, the impedance of the circuit becomes an extreme value at a specific resonance frequency f0 corresponding to time constants of the inductor L12 and the capacitor C12. The second to n-th power reception circuits are similar to the power reception circuit 19-1.

The resonance frequency f0 of the first power transmission circuit 18-1 and the resonance frequency f0 of the first power reception circuit 19-1 are designed to be a common frequency. When the power packet router 12 supplies AC power having the same frequency as the resonance frequency f0 to the power transmission circuit 18-1, the inductor L11 on the power transmission circuit 18-1 side and the inductor L12 on the power reception circuit 19-1 side are coupled by electromagnetic induction. Accordingly, the AC power is transmitted from the inductor L11 on a primary side of the circuit coupled in a non-contact manner to the inductor L12 on a secondary side.

By controlling the timing at which the power packet router 12 switches the output switch 17, the frequency of the AC power supplied to the power transmission circuits 18-1 to 18-n can be matched with the resonance frequency f0 of the power transmission circuits 18-1 to 18-n. For example, when the power packet router 12 supplies AC power of a frequency matching the resonance frequency f0 of the power transmission circuit 18-1 and the power reception circuit 19-1 to the power transmission circuit 18-1, it is possible to perform non-contact power feeding with high efficiency on the power reception circuit 19-1. The same applies to the second to n-th power transmission circuits and power reception circuits. When all the resonance frequencies f0 of the power transmission circuits 18-1 to 18-n and the power reception circuits 19-1 to 19-n are the same, the power packet router 12 can generate AC power using a frequency matching the common resonance frequency f0 by the output switch 17 and supply the AC power to each of the power transmission circuits 18-1 to 18-n.

The load 14B is connected to an output of the power reception circuit 19-1. Therefore, the power received by the power reception circuit 19-1 can be supplied to the load 14B. The same applies to the load 14C connected to the power reception circuit 19-n. For the load 14A that does not require non-contact power feeding, the power transmission circuit or the power reception circuit is not used, and is connected to the output port of the power packet router 12 in the wired manner as shown in Fig. 26.

It is assumed that the information of the resonance frequency f0 necessary for appropriately controlling the power transmission circuits 18-1 to 18-n by the power packet router 12 is held in the power packet mixer 11 in advance or held in the power distribution management ECU 26. Then, the information of the resonance frequency f0 is provided from the power distribution management ECU 26 or the power packet mixer 11 to the power packet router 12.

### <Modification of Non-Contact Power Feeding>

In the power supply system 10-14 shown in Fig. 26, ac power of a desired frequency is obtained by appropriately controlling the output switch 17. However, in a case where the power packet mixer 11 or the power packet router 12 performs special control as described below, control by the output switch 17 becomes unnecessary.

For example, when the power packet mixer 11 transmits the power packet 30 to the power transmission path 16A, it is assumed that the power packet 30 is divided and transmitted such that the time length and the transmission interval of each power packet 30 match the resonance frequency f0 of the power transmission circuits 18-1 to 18-n. In this case, in the power packet router 12, AC power matching the resonance frequency f0 is generated by the power packet 30 periodically received from the power transmission path 16A. When the AC power is directly supplied to the power transmission circuits 18-1 to 18-n by the power packet router 12, the ac power of the power transmission circuits 18-1 to 18-n can be fed to the power reception circuits 19-1 to 19-n in a non-contact manner.

The processing of dividing the power packet 30 transmitted by the power packet mixer 11 so as to coincide with the resonance frequency f0 may be performed for the entire power packet 30, or may be performed only for the payload 32. Further, the processing of dividing the power packet 30 may be performed inside the power packet router 12.

### <Techniques for Driving Blinking Lamp>

### <Description of Background>

Generally, a side turn signal lamp is equipped on the vehicle as a direction indicator for giving a signal of a right or left turn. A hazard lamp is also equipped. These lamps need to be controlled to blink at a constant cycle during operation.

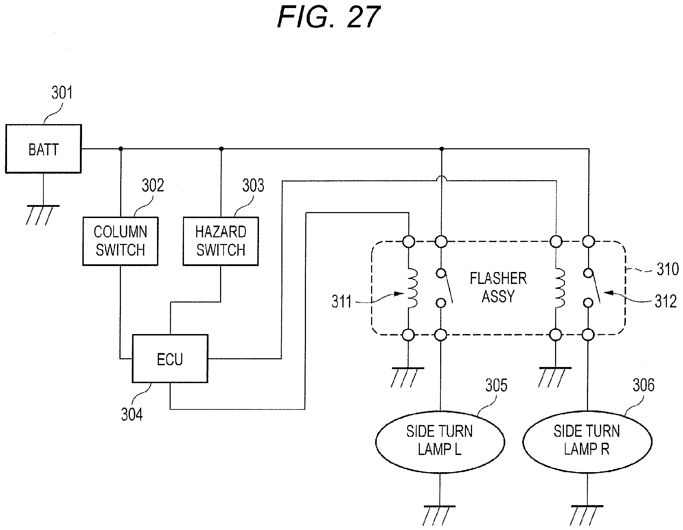

In order to control the lamp, a lamp control circuit as shown in Fig. 27 is generally used. The lamp control circuit shown in Fig. 27 includes a column switch 302, a hazard switch 303, an electronic control unit (ECU) 304, a flasher ASSY 310, and left and right side turn signal lamps 305, 306. The flasher ASSY 310 includes two independent relays 311, 312.

That is, the power of the in-vehicle battery 301 is supplied to the side turn signal lamps 305, 306 via the contacts of the relays 311, 312 in the flasher ASSY 310, respectively. By periodically repeating ON/OFF of the relays 311, 312, the side turn signal lamps 305, 306 can blink.

The ECU 304 constantly monitors the states of the column switch 302 and the hazard switch 303, and when the column switch 302 or the hazard switch 303 is turned on, the ECU 304 controls the relays 311, 312 in the flasher ASSY 310 to make the side turn signal lamps 305, 306 blink.

On the other hand, in recent years, in addition to a common direction indicator and a hazard lamp, there is a demand to perform blinking control in a blinking cycle different from a blinking cycle of the direction indicator or the hazard lamp, for example, as in the function of an Emergency Stop signal System (ESS). The ESS controls the lamp to blink in a blinking cycle for emergency braking. However, when a lamp control circuit such as a mechanical relay is used, there is a limit in the blinking cycle, and it is also difficult to reduce the number of components.

By configuring the lamp control circuit using the power packet described above, it becomes easy to add functions such as the ESS without complicating the circuit configuration.

### <Configuration Example of Lamp Control Circuit Using Power Packet>

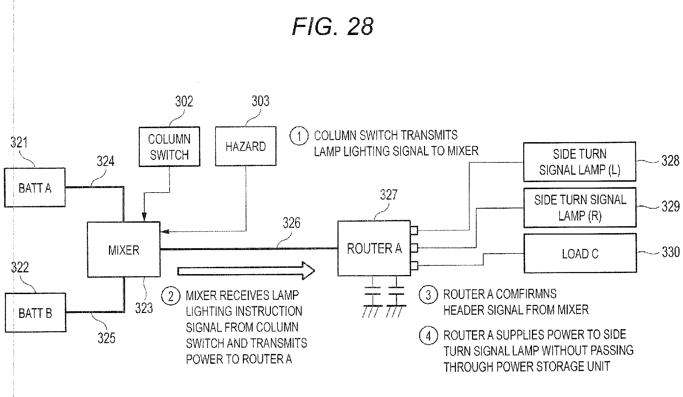

A configuration example of a lamp control circuit using a power packet is shown in Fig. 28.

The lamp control circuit shown in Fig. 28 includes a power packet mixer 323, a power packet router 327, batteries 321, 322, a column switch 302, a hazard switch 303, left and right side turn signal lamps 328, 329, and a load 330. The voltages of the plurality of batteries 321, 322 may be the same or different from each other.

In the configuration of Fig. 28, the column switch 302 and the hazard switch 303 are connected to an input of the power packet mixer 323. The power packet mixer 323 and the power packet router 327 are connected to each other via a power transmission path 326. Left and right side turn signal lamps 328, 329 and a load 330 are connected to a plurality of output ports of the power packet router 327.

The power packet mixer 323 basically generates the power packet 30 based on the DC power of power source supplied from the batteries 321, 322, and supplies the generated power packet 30 to the power transmission path 326. The column switch 302 and the hazard switch 303 are turned on and off by a manual operation of the driver, and generate a lighting (blinking) instruction signal of the direction indicator and the hazard lamp.

When the power packet mixer 323 receives a lamp turn-on command signal from the column switch 302 or the hazard switch 303, the power packet mixer 323 starts power transmission of the power packet 30 to the power packet router 327. The header 31 of each power packet 30 to be transmitted includes information for specifying loads (328, 329, 330) of the destination.

The power packet router 327 refers to the contents of the header 31 of the power packet 30 received from the power packet mixer 323, and specifies the load of a power supply destination and a type thereof. For example, in a case where the power packet router 327 receives the power packet 30 whose destination load is the side turn signal lamp 328 or 329, the power packet router 327 supplies the power of the power packet 30 directly to the side turn signal lamp 328 or 329 without passing through the power storage unit 15A or 15B.

In the lamp control circuit shown in Fig. 28, power transmission from the power packet mixer 323 is time division transmission using the power packet 30. Therefore, the power packet mixer 323 can repeatedly transmit the power packet 30 addressed to the side turn signal lamp 328 or 329, for example, at a constant time interval. In this case, by directly supplying the power packet 30 received by the power packet router 327 to the side turn signal lamp 328 or 329, the side turn signal lamp 328 or 329 blinks at a constant time interval at which the power packet 30 is transmitted.

That is, the blinking operation of the side turn signal lamp 328 or 329 can be realized without performing special blinking control by the power packet router 327. Further, if the power packet mixer 323 changes the transmission interval of the power packet 30, the blinking cycle of the side turn signal lamps 328, 329 can be changed. Therefore, it is possible to easily add, for example, the lamp blinking function of the ESS without changing the circuit configuration shown in Fig. 28.

Incidentally, in order to enable lamp blinking in a short time period, the payload 32 of the power packet 30 may be divided into a plurality. In addition to the information for specifying the destination, information indicating that the power is dedicated to the signal lamp is written in the header 31 of the power packet 30 by the power packet mixer 323. Although not shown, a footer is added to the end of the payload 32 of each power packet 30. In the footer, end information indicating an end of blinking of the lamp is written by the power packet mixer 323. The power packet router 327 ends the power supply to the corresponding lamp according to the end information of the footer, and ends the blinking operation.

### <Specific Operation Example of Power Packet Mixer>

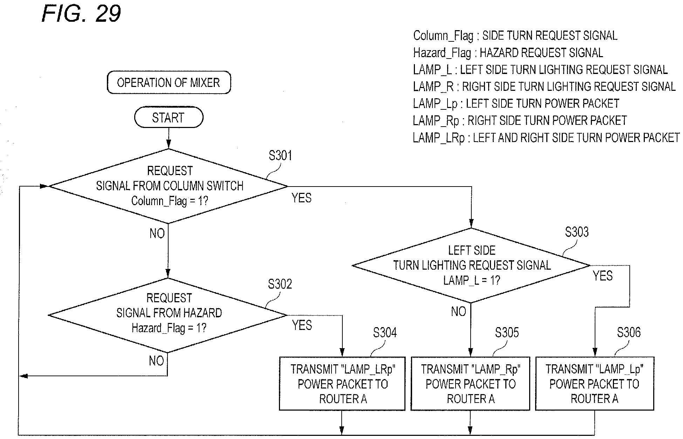

An operation example of the power packet mixer in the lamp control circuit of Fig. 28 is shown in Fig. 29. The operation of Fig. 29 will be described below.

The power packet mixer 323 constantly monitors a signal from the column switch 302 and a signal from the hazard switch 303 (S301, S302). When a side turn request signal "Column_Flag" from the column switch 302 is turned on (1), a left side turn lighting request signal "LAMP_L" is referred to in the next step S303 to identify which of the left and right has a lamps request.

In a case where there is a lighting request on the left lamp, the power packet mixer 323 transmits a left side turn power packet "LAMP_Lp" to the power transmission path 326 in step S306. The left side turn power packet "LAMP_Lp" holds information indicating that the destination of the power is the side turn signal lamp 328 and information indicating that the power is dedicated to the signal lamp in the header 31.

In a case where there is a lighting request on the right lamp, the power packet mixer 323 transmits a right side turn power packet "LAMP_Rp" to the power transmission path 326 in step S305. The right side turn power packet "LAMP_Rp" holds information indicating that the destination of the power is the side turn signal lamp 329 and information indicating that the power is dedicated to the signal lamp in the header 31.

On the other hand, when a hazard request signal "Hazard_Flag" from the hazard switch 303 is turned on (1), the power packet mixer 323 proceeds from step S302 to step S304. In order to simultaneously blink the left and right lamps, the power packet mixer 323 transmits a left and right side turn power packet "LAMP_LRp" to the power transmission path 326.

The left and right side turn power packet "LAMP_LRp" holds in the header 31 information indicating that the destinations of the power are the side turn signal lamps 328, 329 and information indicating that the power is dedicated to the signal lamp. As a result, it is possible to simultaneously transmit an instruction to simultaneous make the left and right lamps blink in this packet.

### <Specific Operation Example of Power Packet Router>

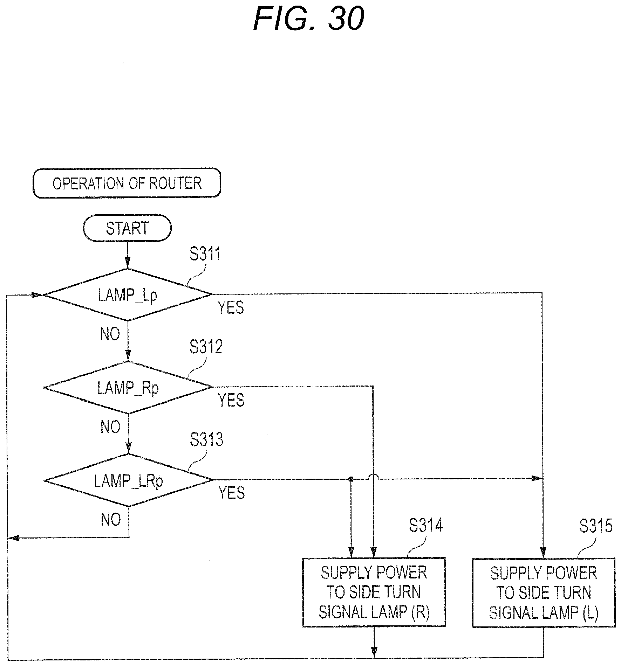

An operation example of the power packet router in the lamp control circuit of Fig. 28 is shown in Fig. 30. The operation of Fig. 30 will be described below.

The power packet router 327 performs an operation according to the type of the power packet 30 arriving at the input via the power transmission path 326. That is, the power packet router 327 distinguishes the left side turn power packet "LAMP_Lp", the right side turn power packet "LAMP_Rp", and the left and right side turn power packet "LAMP_LRp" by referring to the header 31 of the power packet 30 (S311 to S313).

In a case where the left side turn power packet "LAMP_Lp" is received, the process proceeds from S311 to S315, and the power packet router 327 supplies the power of the packet to the left side turn signal lamp 328.

In a case where the right side turn power packet "LAMP_Rp" is received, the process proceeds from S312 to S314, and the power packet router 327 supplies the power of the packet to the right side turn signal lamp 329.

In a case where the left and right side turn power packet "LAMP_LRp" is received, the process proceeds from S313 to S314 and S315, and the power packet router 327 simultaneously supplies the power of the packet to the left and right side turn signal lamps 328, 329.

The lamp control circuit shown in Fig. 28 provides a function for blinking a turn signal lamp or a hazard lamp, but can also be used to intermittently drive a load other than this. For example, it can be used to intermittently drive a motor of a wiper, or to intermittently drive various heaters to adjust the amount of heat generation.

When the lamp control circuit shown in Fig. 28 is adopted, for example, a component of the flasher ASSY 310 shown in Fig. 27 is not necessary, and the device configuration is simplified. Moreover, even in a case where a function such as an ESS is added, it is not necessary to add an extra circuit, and for example, this can be handled only by a change in a program in the power packet mixer 323 or the like.

### <Technique for Supplying Power Used by Load and Power Used by Control System in Separate Systems>

### _<Description of Necessity of Making Power Source as Separate System>

For example, in the power supply system 10-2 shown in Fig. 3, the power supplied to each of the loads 24-1 to 24-n is generated as the power packet 30 by the power packet mixer 21 based on the power of power source supplied from the power sources 23-1 to 23-n.

However, actually, in addition to the loads 24-1 to 24-n, the power of power source is required by the power packet mixer 21, the power packet router 22, and the power distribution management ECU 26 to operate, respectively. Therefore, it is assumed that the power of power source required by the power packet mixer 21, the power packet router 22, and the power distribution management ECU 26 is also supplied from the power sources 23-1 to 23-n.

That is, the power sources 23-1 to 23-n are commonly used as the power sources of the power packet mixer 21, the power packet router 22, and the power distribution management ECU 26, which form a control system, and the power sources of the loads 24-1 to 24-n. However, in this case, it is necessary to provide the power sources 23-1 to 23-n with the ability to supply power equal to or larger than the total power required by the loads 24-1 to 24-n.

Thus, it is necessary to increase the power capacity of the power sources 23-1 to 23-n. In addition, even when all the loads 24-1 to 24-n do not consume the power, since the power from the power sources 23-1 to 23-n is consumed, it may be difficult to manage the remaining amount of the power stored by the power sources 23-1 to 23-n, and there may be a problem of dark current.

Therefore, it is assumed that the power of power source required by the power packet mixer 21, the power packet router 22, and the power distribution management ECU 26 is supplied from a dedicated power source other than the power sources 23-1 to 23-n.

### <Configuration Example 15 of Power Supply System>

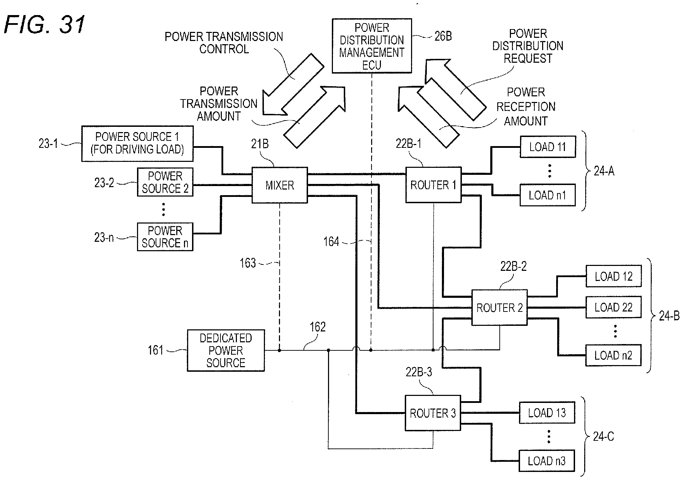

Configuration Example 15 of the power supply system in the embodiment of the present invention is shown in Fig. 31.

The basic configuration of a power supply system 10-15 shown in Fig. 31 is similar to that of the power supply system 10-3 shown in Fig. 11. However, a dedicated power source 161 for supplying power to the control system is added to the configuration of Fig. 31. The dedicated power source 161 is a dedicated battery (secondary battery) independent of other power sources 23-1 to 23-n.

In the configuration shown in Fig. 31, the output of the dedicated power source 161 is connected to power source input terminals of the power packet routers 22B-1, 22B-2, and 22B-3 via a distribution line 162. In addition, the output of the dedicated power source 161 is connected to a power source input terminal of the power packet mixer 21B via a distribution line 163. In addition, the output of the dedicated power source 161 is connected to a power source input terminal of the power distribution management ECU 26B via a distribution line 164.

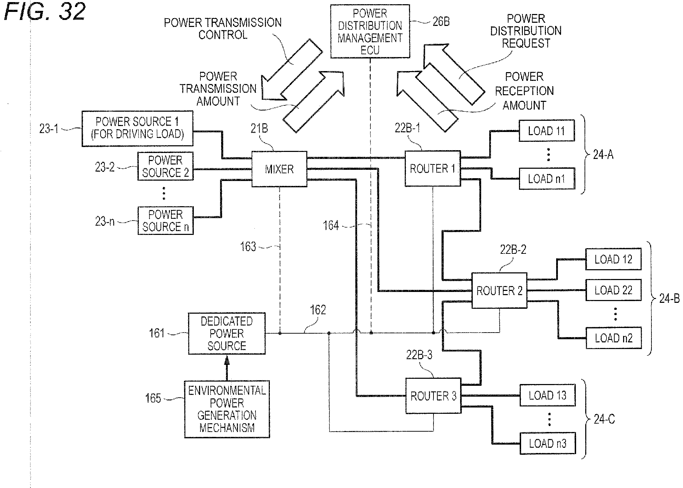

In a case where the power consumption of the power packet mixer 21B and the power distribution management ECU 26B is small, the distribution lines 163 and 164 may be present or may not be present. That is, in Fig. 31 and Fig. 32 described below, an example of a distribution line which becomes unnecessary according to the situation is indicated by a broken line. That is, in a case where the influence of the power consumption of the power packet mixer 21B and the power distribution management ECU 26B is small, the power of power source may be supplied from the power sources 23-1 to 23-n common to the loads to the power packet mixer 21B and the power distribution management ECU 26B.

### <Configuration Example 16 of Power Supply System>

Configuration Example 16 of the power supply system in the embodiment of the present invention is shown in Fig. 32.

A power supply system 10-16 shown in Fig. 32 is a modification of the power supply system shown in Fig. 31. That is, in the power supply system 10-16 shown in Fig. 32, an environmental power generation mechanism 165 having a function of charging the dedicated power source 161 is added. Others are similar to the configuration of Fig. 31.

As a specific example of the environmental power generation mechanism 165, it is assumed that mechanical vibration energy generated at the time of driving a switch for operating a body system of a vehicle is recovered to generate power. In addition, those converting light energy collected by solar panels disposed on the surface of the vehicle body into power may be adopted. In addition, those recovering heat energy conducted and stored on the surface of the vehicle body or the structure of the vehicle to generate power may also be adopted.

### _<Configuration of Each Part in System>

In the power supply system shown in Fig. 31 and Fig. 32, the configuration of the power packet mixer 21B is similar to that shown in Fig. 7. In addition, the configuration of each of the power packet routers 22B-1 to 22B-3 shown in Fig. 31 and Fig. 32 is similar to that shown in Fig. 13. In addition, the configuration of the power distribution management ECU 26B shown in Fig. 31 and Fig. 32 is similar to that shown in Fig. 9. In addition, the configuration of the power packet 30 generated by the power packet mixer 21B shown in Fig. 31 and Fig. 32 is similar to that shown in Fig. 12.

### <Operation Example of System>

### <Operation Example of Power Packet Router>

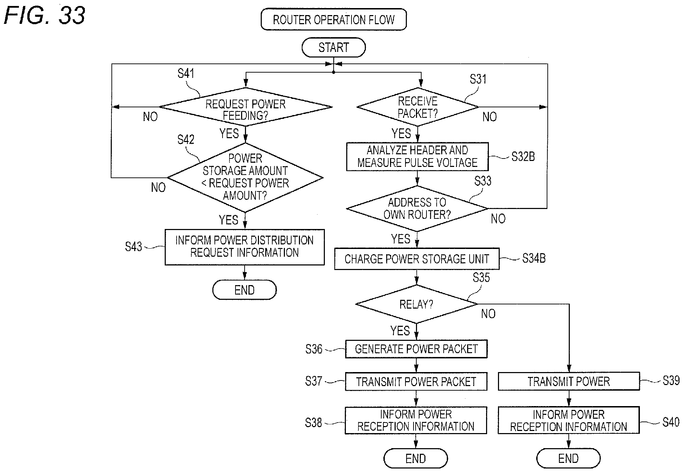

An operation example of the power packet routers 22B-1 to 22B-3 is shown in Fig. 33. The operation shown in Fig. 33 is similar to the operation of Fig. 8 already described except that steps S32B and S34B are changed.

In step S32B of Fig. 33, each of the power packet routers 22B-1 to 22B-3 analyzes the header 31 of the power packet 30 arriving at the input and perform measurement of the pulse (payload 32) voltage. That is, in a case where each power packet 30 is generated by the power packet mixer 21B based on the power of a plurality of power sources having different voltages, for example, as shown in Fig. 25, the power packets 30 of different voltages such as PPH and PPL are input to the power packet routers 22B-1 to 22B-3 at different timings. Therefore, in order to grasp the difference in voltage of the power packets 30, each of the power packet routers 22B-1 to 22B-3 measures the voltage of the pulse in S32B.

In step S34B of Fig. 33, each of the power packet routers 22B-1 to 22B-3 charges the power storage unit with the power of the payload 32 of the power packet 30 addressed to the own router. Here, the value of the received power amount to be charged can be calculated based on the pulse voltage measured in S32B and the length of the payload 32.

### <Operation 1 of Power Distribution Management ECU>

The operation of the power distribution management ECU 26B for instructing power feeding to the normal loads 24-A, 24-B, 24-C or the like shown in Fig. 31 is similar to the operation shown in Fig. 14.

### <Operation 2 of Power Distribution Management ECU>

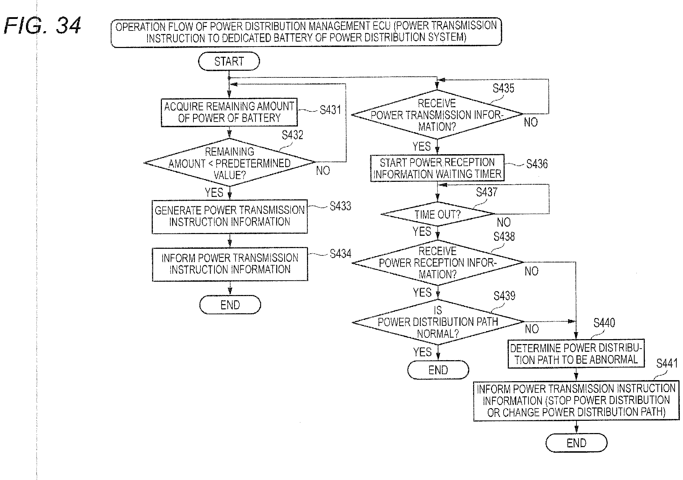

An operation example of the power distribution management ECU is shown in Fig. 34. Fig. 34 shows the operation of the power distribution management ECU 26B for instructing power transmission to the dedicated power source 161 shown in Fig. 31 and Fig. 32. The operation of Fig. 34 will be described below.

The power distribution management ECU 26B intermittently monitors the remaining amount of the power of the dedicated power source 161 after startup (S431). Then, in a case where the detected remaining amount of the power is lower than a predetermined value, the control is performed such that the power packet 30 supplies the insufficient power from the power sources 23-1 to 23-n for driving the loads. That is, in S433, the power distribution management ECU 26B generates power transmission instruction information for instructing transmission of the power required by the dedicated power source 161, and in S434, the power distribution management ECU 26B notifies the power packet mixer 21B of the power transmission instruction information.

In this case, the power packet mixer 21B transmits the power packet 30 to the distribution line 163 according to the instruction. The dedicated power source 161 receives the power packet 30 via the distribution line 163 and obtains in insufficient power from the payload 32 of the power packet 30. Steps S435 to S441 in Fig. 34 are similar to those in Fig. 14.

Therefore, management can be performed such that the remaining amount of the power of the dedicated power source 161 is maintained at or above a predetermined level by the power distribution management ECU 26B performing the operation shown in Fig. 34. In this case, the power of the power sources 23-1 to 23-n for driving the loads is consumed by those other than the normal loads 24-A to 24-C. Also in this case, the consumption amount of the power flowing out from the power sources 23-1 to 23-n can be accurately grasped based on the number of the power packets 30 transmitted by the power packet mixer 21B.

### <Operation 3 of Power Distribution Management ECU>

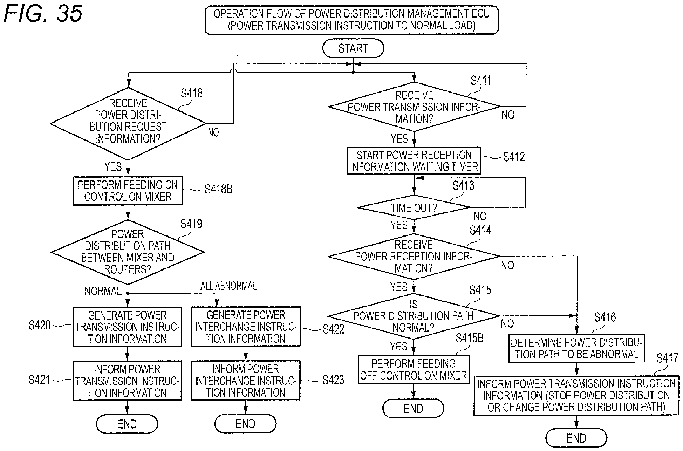

An operation example of the power distribution management ECU is shown in Fig. 35. Fig. 35 shows the operation of the power distribution management ECU 26B for feeding power from the dedicated power source 161 to the input of the power packet mixer 21B shown in Fig. 31. The operation of Fig. 35 will be described below.

The power distribution management ECU 26B performs control to start power feeding from the dedicated power source 161 to the power packet mixer 21B immediately before notifying the power packet mixer 21B of the power transmission instruction information. In addition, after confirming the power reception information from the power packet router 22B, the stop of power feeding from the dedicated power source 161 to the power packet mixer 21B is controlled.

That is, when the power distribution management ECU 26B receives the power feeding request information from the power packet router 22B, the process proceeds from S418 to S418B in Fig. 35, and the power distribution management ECU 26B performs feeding ON control on the power packet mixer 21B. Accordingly, power feeding from the dedicated power source 161 to the power packet mixer 21B is started.

In addition, when the power distribution management ECU 26B receives the power reception information from the power packet router 22B and detects normal completion of power distribution by the power packet router 22B in S415 of Fig. 35, the process proceeds to S415B, and the power distribution management ECU 26B performs feeding OFF control on the power packet mixer 21B. Accordingly, power feeding from the dedicated power source 161 to the power packet mixer 21B ends. Other operations of the power distribution management ECU 26B are similar to the operations shown in Fig. 14.

Accordingly, since the power packet mixer 21B is driven only when the power packet 30 is generated, a decrease in the power storage amount of the dedicated power source 161 can be suppressed.

### <Operation 4 of Power Distribution Management ECU>

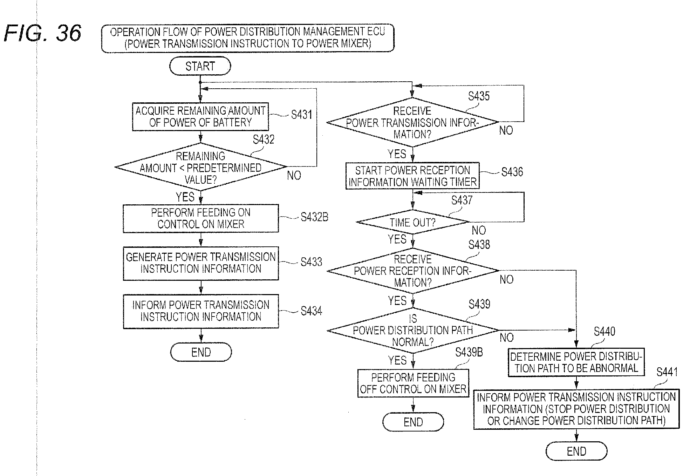

An operation example of the power distribution management ECU is shown in Fig. 36. Fig. 36 shows the operation of the power distribution management ECU 26B for feeding power from the power sources 23-1 to 23-n to the input of the power packet mixer 21B shown in Fig. 31. The operation of Fig. 36 will be described below.

When the remaining amount of the power of the dedicated power source 161 decreases, the power distribution management ECU 26B performs control to start power feeding from the power sources 23-1 to 23-n to the input of the power packet mixer 21B. In addition, after confirming the power reception information from the power packet router 22B, the stop of power feeding to the power packet mixer 21B is controlled.

That is, when the power distribution management ECU 26B detects the shortage of the remaining amount of the power in the dedicated power source 161 in S432 in Fig. 36, the process proceeds to S432B in Fig. 36, and the power distribution management ECU 26B performs feeding ON control on the power packet mixer 21B. Accordingly, power feeding from the power sources 23-1 to 23-n to the power packet mixer 21B is started.

In addition, when the power distribution management ECU 26B receives the power reception information from the power packet router 22B and the power distribution management ECU 26B detects normal completion of power distribution by the power packet router 22B in S439 of Fig. 36, the process proceeds to S439B, and the power distribution management ECU 26B performs feeding OFF control on the power packet mixer 21B. Accordingly, power feeding from the power sources 23-1 to 23-n to the power packet mixer 21B ends. Other operations of the power distribution management ECU 26B are similar to the operations shown in Fig. 34.

Accordingly, since the power packet mixer 21B is driven when it is necessary to charge the dedicated power source 161, a decrease in the power storage amount of the dedicated power source 161 can be suppressed, and a shortage of the power storage amount can be prevented.

### <Technique for Optimization of Power Interchange>

For example, in the power supply system 10-3 shown in Fig. 11, the power packet 30 output from the power packet router 22B-1 can be supplied to the input of the power packet router 22B-2 via the distribution line (power transmission path) 29D-1. In addition, the power packet 30 output from the power packet router 22B-3 can also be supplied to the input of the power packet router 22B-2 via the distribution line (power transmission path) 29D-2. That is, even in a case where the power packet mixer 21B cannot supply sufficient power, the power stored among the plurality of power packet routers 22B-1 to 22B-3 can be interchanged. The interchange power may be stored in an interchange power storage unit other than the power storage unit for normal power feeding as shown in Fig. 13, or the power for normal power feeding and the interchange power are stored in one power storage unit. This applies to other examples.

Here, further high reliable power supply can be realized for the whole vehicle by appropriately controlling the interchange of power among the plurality of power packet routers 22B-1 to 22B-3. For example, even in a case where the in-vehicle battery on the upstream side, the power packet mixer, or the like breaks down or a disconnection occurs in the upstream power distribution path, the power interchange among the plurality of power packet routers 22B-1 to 22B-3 can secure the power of source power necessary for the operation of the important load.

### _<Example 1 of Power Interchange Operation>

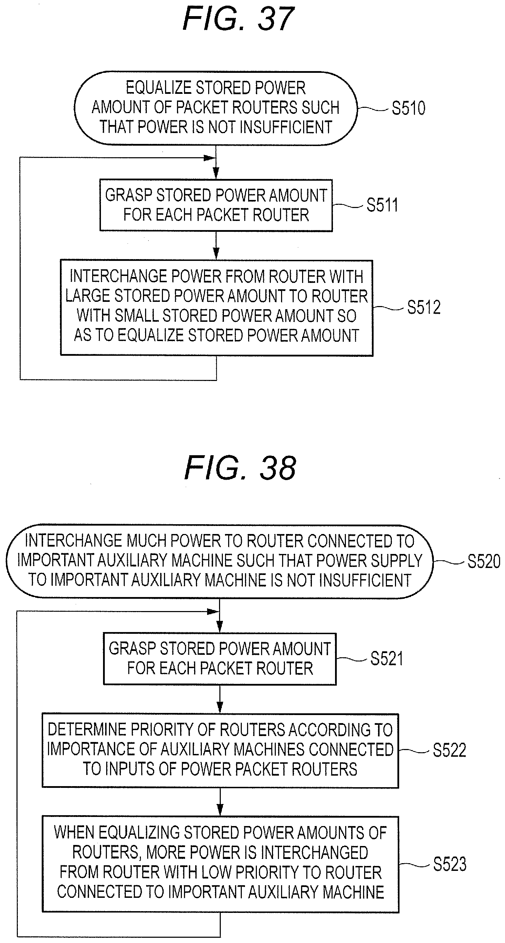

Example 1 of the power interchange operation is shown in Fig. 37. The operation shown in Fig. 37 can be realized, for example, as the operation of the power distribution management ECU 26B shown in Fig. 11. In addition, for example, in a case where communication can be performed among the plurality of power packet routers 22B-1 to 22B-3, the operation of Fig. 37 can be realized as control of each of the power packet routers 22B-1 to 22B-3. Alternatively, the power packet mixer 21B may perform this control.

In step S511 of Fig. 37, for example, the power distribution management ECU 26B grasps the stored power amount for each router based on the information received from each of the power packet routers 22B-1 to 22B-3.

In step S512 of Fig. 37, for example, the power distribution management ECU 26B performs control for equalizing the stored power amount based on the stored power amount for each router grasped in S511. That is, it is controlled such that among the plurality of power packet routers 22B-1 to 22B-3, the power packet 30 is transmitted from the router with a large stored power amount to the router with a small stored power amount, so as to interchange the power.

The stored power amounts of the plurality of power packet routers 22B-1 to 22B-3 can be equalized by repeating the process shown in Fig. 37, for example, periodically. Therefore, each of the power packet routers 22B-1 to 22B-3 can ensure necessary power before the shortage of the stored power amount. Accordingly, each of the loads 24-A to 24-C can be operated at any time.

### <Example 2 of Power Interchange Operation>

Example 2 of the power interchange operation is shown in Fig. 38. The operation shown in Fig. 38 can be realized, for example, as the operation of the power distribution management ECU 26B shown in Fig. 11. In addition, for example, in a case where communication can be performed among the plurality of power packet routers 22B-1 to 22B-3, the operation of Fig. 38 can be realized as control of each of the power packet routers 22B-1 to 22B-3. Alternatively, the power packet mixer 21B may perform this control.

In step S521 of Fig. 38, for example, the power distribution management ECU 26B grasps the stored power amount for each router based on the information received from each of the power packet routers 22B-1 to 22B-3.

In step S522 of Fig. 38, for example, the power distribution management ECU 26B determines a priority level or priority of the power packet routers 22B-1 to 22B-3 according to the importance of loads (auxiliary machines) connected to the power packet routers 22B-1 to 22B-3.

In step S523 of Fig. 38, for example, the power distribution management ECU 26B performs control for equalizing the stored power amounts of the power packet routers 22B-1 to 22B-3. During this equalization, based on the priority among the plurality of routers determined in step S522, more power is interchanged from the router with a low priority to the router to which the important load is connected.

That is, among the plurality of power packet routers 22B-1 to 22B-3, the stored power amount of each router is equalized while considering that the stored power amount of a higher priority router is larger than that of a lower priority router. Then, in order to interchange the power, a router with a large stored power amount transmits the power packet 30 to other routers.

The stored power amounts of the plurality of power packet routers 22B-1 to 22B-3 can be equalized and a sufficient stored power amount for routers connected to particularly important loads can be ensured sufficiently, by repeating the process shown in Fig. 38, for example, periodically. Therefore, among the power packet routers 22B-1 to 22B-3, the shortage of the stored power amount of the router connected to the important load can be prevented. That is, the important load (auxiliary machine) can be reliably operated at any time.

### <Technique for Automatically Recognizing Connected Load>

### <Description of Necessity of Automatically Recognizing Connected Load>

For example, in the power supply system 10-5 shown in Fig. 18, various types of loads and other routers are connected to the plurality of output ports of the power packet routers 62-1 to 62-3 from the beginning, or left unconnected, or different types of loads may be connected later. It is easy to cope with, for example, a change in vehicle specifications by configuring a system to allow such a situation.

However, when the type of load connected to the output port changes, there is also a possibility that the capacity of the power supplied by the router may be insufficient, and the condition and timing for supplying the power to the load may be not appropriate. In addition, there is also a desire to fix the position of the connected port for a specific load in advance. In addition, in a case where no load is connected to the output port, since the router ensures equal or more power than necessary for the load not yet connected, it is difficult to ensure the power of other routers. Therefore, in order to optimize the operation of the system, it is desirable to be able to automatically recognize the presence or absence of the connection of the load to the output port of the router and the type of the connected load.

### _<Specific Example of Operation of Automatically Recognizing Connected Load>

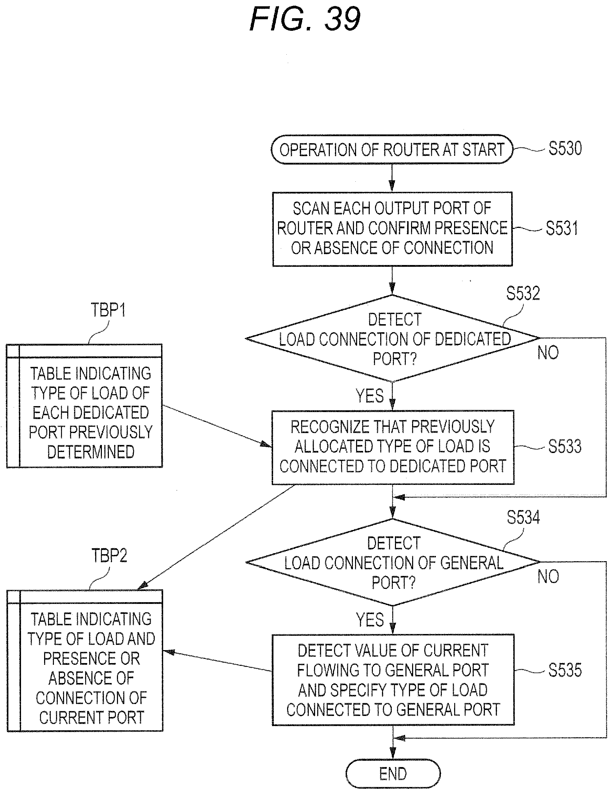

An operation example of the router at a start is shown in Fig. 39. That is, for example, each of the power packet routers 62-1 to 62-3 included in the power supply system 10-5 shown in Fig. 18 automatically recognizes the connection state of each output port 62b by performing the operation shown in Fig. 39 at a start (for example, when the main power is turned on). The power packet mixer 61 can instruct each of the power packet routers 62-1 to 62-3 to perform the operation of Fig. 39.

In addition, in the present embodiment, it is assumed that the plurality of output ports 62b of the power packet routers 62-1 to 62-3 include one or more dedicated ports and other general purpose ports. Types of loads (auxiliary machines such as electrical components) connectable to the location are fixed to the dedicated port in advance. The general port can allow connection of multiple types of loads as necessary.

In addition, in the present embodiment, it is assumed that the power packet mixer 61 or the power packet routers 62-1 to 62-3 hold the tables TBP1 and TBP2 shown in Fig. 39. The table TBP1 is disposed in a predetermined non-volatile memory, and holds constant data indicating the type of the load connected to each dedicated port.

The table TBP2 is disposed in a memory in which data can be read and written freely, and holds information indicating the latest connection state (presence or absence of connection) of each output port 62b and the type of the connected load as a result of the power packet mixer 61 or each of the power packet routers 62-1 to 62-3 automatically recognizing the connected load.

### The operation of Fig. 39 will be described below.

Each of the power packet routers 62-1 to 62-3 sequentially checks the state of each output port 62b at the start of the system, and confirms the presence or absence of the connection of the load or the like (S531). For example, the presence or absence of the load connection can be automatically identified by measuring the current or voltage flowing through each output port or measuring the impedance.

In addition, in a case where a load connection is detected for the above dedicated port among the output ports 62b, the process proceeds from S532 to S533, and each of the power packet routers 62-1 to 62-3 refers to registered contents of the table TBP1. Then, each of the power packet routers 62-1 to 62-3 recognizes that the type of load registered in the table TBP1 is connected to the dedicated port. Then, the result of recognition is reflected on the table TBP2.

In addition, in a case where the load connection is detected for a general port of each output port 62b, the process proceeds from S534 to S535, each of the power packet routers 62-1 to 62-3 detects a parameter such as a current flowing to the general port, and compares the detected parameter with a plurality of predetermined threshold values to estimate and specify the type of the load connected to the general port. Then, each of the power packet routers 62-1 to 62-3 reflects data indicating the type of the load specified for each general port in the table TBP2.

Therefore, for example, in the power supply system 10-5 shown in Fig. 18, when the power packet mixer 61 and the power packet routers 62-1 to 62-3 control the output ports 62b, appropriate control can be performed by referring to the contents of the table TBP2 that is automatically updated at the start.

### <Technique for Efficient Transmission of Power>

### _<Problem of Efficient Transmission>

For example, as described in Patent Literature 3, the technique PoE (Power over Ethernet (registered trademark)) which supplies power via LAN cable in Ethernet (registered trademark) is used and a technique for reducing total power loss is known.

However, in the case of adopting PoE, only power of 12.95 W can be received in design, and it is difficult to feed auxiliary machines of the vehicle that require larger power. In addition, in such related art, the load power does not vary like a motor. In automotive applications, the load is often a small motor for auxiliary devices, and the power variation is large and difficult to cope with.

In addition, when the load power is detected in real time, there is a possibility that the path may be fitted by detecting the power being stopped, for example, at the time of intermittent operation of a wiper. When large power flows in such a state, there is a possibility that loss may increase or drive may not be performed. In the worst case, there is the possibility of influencing the function of the device. In addition, since the efficiency is determined only by the power feeding line to the load, there is little choice and the effect is small when the load is small.

### _<Embodiment of Efficient Transmission>

As described above, when the PoE technique is used in consideration of the power supply to auxiliary machines of the vehicle, it is difficult to drive the load due to power shortage. Therefore, a power packet transmission system can be used. That is, for example, efficient transmission of the power is realized using the power supply system having the basic configuration shown in Fig. 11. The configuration of the power packet to be transmitted is, for example, similar to that shown in Fig. 4.

### _<Characteristic Technique>

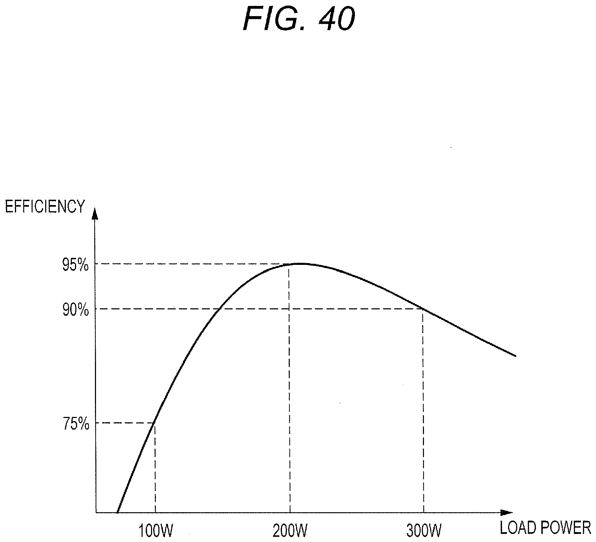

In the power supply system shown in Fig. 11, the efficiency in a wire harness of each power feeding line and the efficiency of each power packet router change as shown in Fig. 40, for example, according to the change in the magnitude of the load power.

Therefore, in order to efficiently transmit the power, for example, the efficiency information (such as the resistance value) of each wire harness and the efficiency information for the load power of each router and mixer (see Fig. 40) are stored in the power distribution management ECU 26B.

When the power is transmitted from the power packet mixer 21B to each load 24-A, 24-B, 24-C based on the efficiency information held by the power distribution management ECU 26B, the power distribution management ECU 26B, the power packet mixer 21B, or the power packet routers 22B-1, 22B-2, 22B-3 perform automatic control so as to use a path with the lowest loss.

In addition, information on the variation range of the load is also stored in the power distribution management ECU 26B. Then, the power distribution management ECU 26B performs the connection in consideration of the load variation. Accordingly, power shortage can be prevented when the load power increases.

### _<Specific Example 1 of Control>

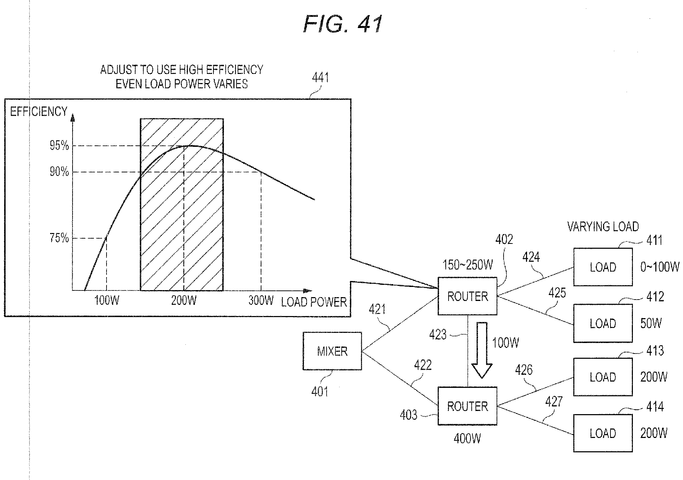

An example of the configuration and operation of the power supply system is shown in Fig. 41. The power supply system shown in Fig. 41 represents, for example, a configuration corresponding to a part of the power supply system shown in Fig. 11. Therefore, the power distribution management ECU 26B of Fig. 11 can also be used.

In the configuration shown in Fig. 41, a plurality of power packet routers 402 and 403 are connected on the downstream side of the power packet mixer 401 via distribution lines 421 and 422. In addition, the power packet routers 402 and 403 are connected via a distribution line 423.

In addition, loads 411 and 412 are connected on the downstream side of the power packet router 402 via distribution lines 424 and 425. In addition, loads 413 and 414 are connected on the downstream side of the power packet router 403 via distribution lines 426 and 427. The load 411 corresponds to, for example, an auxiliary machine such as a motor whose load power varies within a range of 0 W to 100 W. For the loads 412, 413 and 414, it is assumed that the load power is constant at 50 W, 200 W and 200 W, respectively.

In the configuration shown in Fig. 41, even in a case where the load power varies, the power packet router 402 can perform control 441 so as to maintain a high efficiency state according to the instruction of the power distribution management ECU 26B or based on the information acquired from the power distribution management ECU 26B. That is, in the example of Fig. 41, since the power packet router 402 is efficient in the range of 150 W to 250 W, the power feeding state is controlled so as to maintain this range.

That is, as shown in Fig. 41, the power packet router 402 supplies power of 0 W to 100 W and 50 W to the loads 411 and 412, respectively. Further, the power packet router 402 supplies power of 100 W to the power packet router 403. Therefore, the power handled by the power packet router 402 is maintained in the range of 150 W to 250 W.

In addition, the power packet router 403 can supply the loads 413 and 414 with a total of 400 W with 300 W transmitted from the power packet mixer 401 and 100 W transmitted from the power packet router 402. Therefore, the loads 413 and 414 can consume the required power 200 W, respectively.

In this way, when the control is performed based on the value of efficiency to the load power of the mixer and router, it is possible to select a highly efficient power feeding path in the long run in consideration of the load variation, instead of feeding the load to the maximum efficiency at a certain moment.

### _<Specific Example 2 of Control>

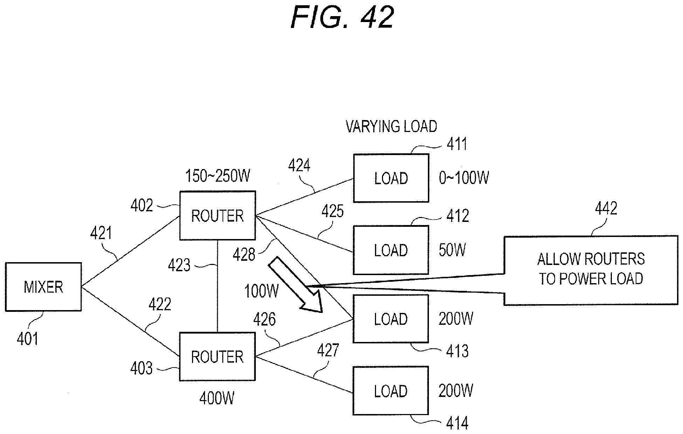

An example of the configuration and operation of the power supply system is shown in Fig. 42. The power supply system shown in Fig. 42 represents, for example, a configuration corresponding to a part of the power supply system shown in Fig. 11. Therefore, the power distribution management ECU 26B of Fig. 11 can also be used. In addition, in the configuration shown in Fig. 42, a distribution line 428 is added to the power the load 413 from the output of the power packet router 402. Others are similar to the configuration of Fig. 41.

In the configuration shown in Fig. 42, the power packet router 402 or 403 may perform special control 442. That is, since the two distribution lines 428 and 426 are connected to the input of the load 413, the power can also be supplied from the output of the power packet router 402 to the load 413 via the distribution line 428, and the power can also be supplied from the output of the power packet router 403 to the load 413 via the distribution line 426. Further, the plurality of power packet routers 402 and 403 can simultaneously supply the power to the load 413. Accordingly, it is possible to adjust the power of each router and to use the power efficiently.

### _<Specific Example 3 of Control>

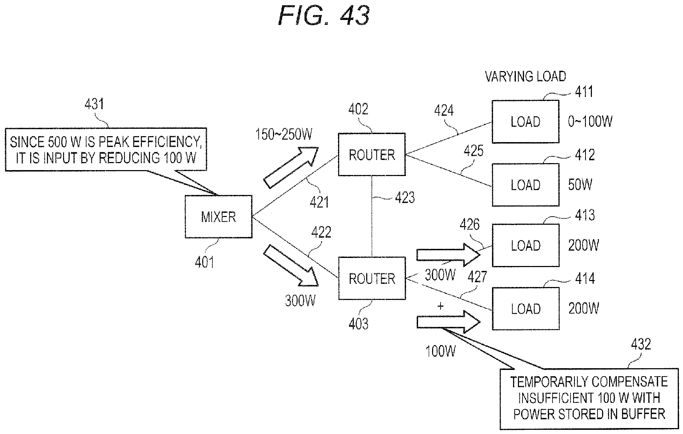

An example of the configuration and operation of the power supply system is shown in Fig. 43. The power supply system shown in Fig. 43 represents, for example, a configuration corresponding to a part of the power supply system shown in Fig. 11. Therefore, the power distribution management ECU 26B of Fig. 11 can also be used.

In the example shown in Fig. 43, it is assumed that the peak (best point) of the efficiency of the power packet mixer 401 is 500 W. Here, for example, when it is assumed that the power supplied by the power packet mixer 401 to the downstream side is 600 W, the efficiency of the power packet mixer 401 is reduced compared to the peak. Therefore, the power packet mixer 401 reduces the power from 600 W to 100 W by the control 431, and feeds 500 W of power to the downstream side. Accordingly, the efficiency of the power packet mixer 401 can be maintained near the peak.

As a result, as shown in Fig. 43, the power packet mixer 401 supplies the power of 300 W to the power packet router 403 via the distribution line 422. However, since the load 413 consuming the power of 200 W and the load 414 consuming the power of 200 W are connected to the output of the power packet router 403, the power packet router 403 needs to supply the total power of 400 W to the output side. That is, the power of 300 W supplied by the power packet mixer 401 to the power packet router 403 is insufficient by 100 W compared to the power of 400 W output by the power packet router 403.

Therefore, as control 432, the power packet router 403 controls the insufficient power of 100 W so as to compensate the shortage by using the power stored in the power storage unit (buffer: for example, 15A and 15B in Fig. 1) in the power packet router 403.

That is, in the configuration of Fig. 43, the input and output power of the mixer and the router is adjusted to keep using at the necessary load power while maintaining the high efficiency state by using the power of the power storage unit present in the power packet router 403 or the like. In a case where the power stored in the power storage unit of the power packet router 403 or the like decreases and the driving of the load is difficult, for example, the power packet router 403 transmits a power distribution request to the power distribution management ECU 26B. Accordingly, the driving of the load can be continued.

### _<Specific Example 4 of Control>

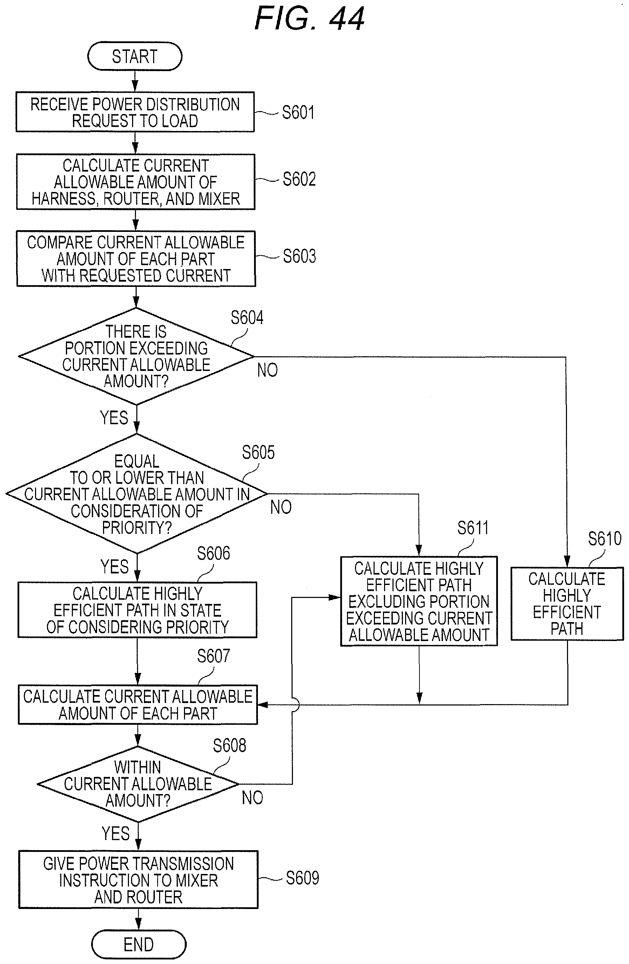

An operation example of the power distribution management ECU 26B is shown in Fig. 44. As described above, in the case of controlling the power supply path considering the efficiency of each part of the power supply system as the top priority, the current concentrates only on some efficient paths, and the current on some paths may exceed the allowable current. When the power distribution management ECU 26B performs the control shown in Fig. 44, current concentration on only a part of the paths can be suppressed. The control of Fig. 44 will be described below.

When the power distribution management ECU 26B receives a power distribution request to each load from the power packet routers 402, 403, or the like in S601, the current allowable amount of the harness (distribution lines 421 to 427), the router, and the mixer are calculated in S602. Then, the power distribution management ECU 26B compares each current allowable amount with a requested current in S603.

That is, when the requested electric power is supplied to the load side as it is in consideration of the efficiency, since the current may concentrate on some paths and the current allowable amount is exceeded, it is confirmed in S603 and S604 whether a problem occurs before actual supply.

In a case where it is confirmed that the current allowable amount is not exceeded, the power distribution management ECU 26B calculates the most efficient path, and performs the required power supply using the path (S610). In a case where there is a portion expected to exceed the current allowable amount, the process proceeds from step S604 to step S605.

In step S605, in a case where the power distribution management ECU 26B determines the distribution path in consideration of the "priority of load", it is confirmed that whether there is no portion expected to exceed the current allowable amount. Then, in a case where there is no portion expected to exceed the current allowable amount, the process proceeds to S606, and in a case where there is a portion expected to exceed the current allowable amount, the process proceeds to S611.

Here, "priority of load" is determined to give priority to a load through which a large current flows constantly. In addition, for a load with a large current variation, such as a load that operates intermittently (for example, a motor of a wiper), it is determined that the priority is lower since the current decreases when the intermittent operation is stopped.

In step S606, the power distribution management ECU 26B determines an appropriate path by considering the "priority of load" with respect to the distribution request of S601, and using an algorithm different from that of S610 so as to maintain an efficient state of each part. That is, the distribution path is determined such that the current supplied to the load through which a large current flows constantly passes through the efficient path. In addition, the path of the current supplied to the varying load is determined without emphasizing the efficiency. Accordingly, it is possible to flow the current to a maximum extent in the efficient path.

In step S611, the power distribution management ECU 26B determines the current path using an algorithm similar to that of S610, but excludes a portion exceeding the current allowable amount from the selection of the highly efficient path, and allocates a path not emphasizing the efficiency.

After determining the current supply path in any of S610, S606, and S611, the power distribution management ECU 26B calculates the current allowable amount of each part for the determined path (S607), confirms in S608 that the current value for each path predetermined for power transmission does not exceed the current allowable amount, and then gives a power transmission instruction to each of the power packet routers 402 and 403 and the power packet mixer 401 (S609).

The above control shown in Fig. 41 to Fig. 44 can be similarly applied to the control of the dedicated power source 161 shown in Fig. 32.

### _<Advantage of Efficient Transmission>

(1) The resistive loss of a copper wire is proportional to the length and the cross sectional area. Therefore, as a result of control considering the efficiency of the power distribution path, if the wire harness can be switched to a wire harness having a double cross sectional area or a half path length, the loss can be reduced to half.
(2) In a case where the power is supplied to an in-vehicle device as a load, since the output power is large, it is necessary to increase the power that can be handled by the mixer and the router. In addition, as the power increases, the variation in efficiency as shown in Fig. 41 is more likely to occur. However, highly efficient power feeding can be realized in consideration of load variation by adopting the above control different from PoE.
(3) Assuming that there is a 10% improvement in efficiency, since the power to be handled is a large power of several kW, the loss is improved by several hundreds of W and the absolute value is increased.
(4) Since it can cope with high power and prevent machine failure, it can be easily applied to automotive applications where safety is required.

Here, features of the embodiments of the power supply system according to the present invention described above are summarized briefly and listed in the following [1] to [42], respectively.
[1] A power supply system including:
   a power packet generation unit (61, 111) configured to generate a power packet based on power supplied from one or more power supply sources (63, 113);
   a power packet router (62-1 to 62-3, 112) configured to receive the power packet via a transmission path and supply power of the power packet to a plurality of loads connected on a downstream side;
   a power request transmission unit (62-1 to 62-3, 116) configured to transmit a power distribution request according to power required by the power packet router;
   a power supply control unit (61, 116) configured to supply the power packet from the power packet generation unit to the power packet router in response to the power distribution request; and
   an allocation unit (62-1 to 62-3, 116) configured to allocate priorities to the plurality of loads,
   wherein the power supply control unit restricts power supply to a load having a low priority in a case where a demand-supply relationship of power satisfies a predetermined condition.
[2] The power supply system according to [1],
   wherein the power supply control unit compares a power supply amount that can be supplied by the power supply source with a power demand amount represented by the power distribution request, and stops supplying power supplied to the load having a low priority in a case where the power demand amount is larger than the power supply amount.
[3] The power supply system according to [1] or [2],
   wherein the allocation unit (116) corrects the priorities according to at least one of a traveling state of a vehicle on which the power supply system is mounted, a state of an occupant, and an environment outside the vehicle.
[4] A power supply system including:
   a power packet generation unit (power packet mixer 11) configured to generate a power packet based on power supplied from one or more power supply sources (in-vehicle batteries 13A, 13B);
   a power packet router (12) configured to receive the power packet generated by the power packet generation unit via a transmission path and supply power of the power packet to one or more loads on a downstream side; and
   a power distribution control unit (power distribution management ECU 26, 26B) configured to receive a power distribution request (27A) including a required power amount from the power packet router, and transmit a power transmission instruction (28A) including the power amount to the power packet generation unit,
   wherein the power packet generation unit transmits, to the power distribution control unit, power transmission information (28B) including a power amount of the power packet transmitted to the power packet router,
   wherein the power packet router transmits, to the power distribution control unit, power reception information (27B) including a power amount of the power packet received from the power packet generation unit, and
   wherein the power distribution control unit diagnoses a state of the transmission path based on a result of comparison between the power amount included in the power transmission information and the power amount included in the power reception information (S55 to S57).
[5] The power supply system according to [4],
   wherein in a case where the power reception information is not received within a predetermined time after the power transmission information is received (S53), the power distribution control unit recognizes that an abnormality has occurred in the transmission path (S54, S57).
[6] The power supply system according to [4] or [5],
   wherein the power packet router includes a power storage unit (15A, 15B) configured to temporarily store the power packet received from the power packet generation unit, and the power amount included in the power reception information represents a power amount stored in the power storage unit.
[7] The power supply system according to any one of [4] to [6],
   wherein the transmission path includes at least a first transmission path (29A-1) and a second transmission path (29A-2, 29D-1) connected in parallel,
   wherein the power transmission instruction includes a transmission path for transmitting the power packet, and
   wherein in a case where it is recognized that an abnormality has occurred in one of the first transmission path and the second transmission path, the power distribution control unit switch the transmission path included in the power transmission instruction to the other one of the first transmission path and the second transmission path (S77).
[8] A power supply system including:
   a power packet generation unit (power packet mixer 11, 21B) configured to receive power from one or more power supply sources (in-vehicle batteries 13A, 13B) in response to a power distribution request, and generate a power packet;
   a power packet router (12, 22B-1 to 22B-3) configured to receive the power packet via a transmission path and supply power included in the power packet to one or more loads on a downstream side;
   a power distribution request generating unit (power distribution management ECU 26B, control unit 45) configured to generate the power distribution request including a power amount required by the power packet router, and transmit the power distribution request to the power packet generation unit;
   a power transmission waveform information generating unit configured to generate power transmission waveform information (power transmission information 28B, header 31D) of the power packet transmitted by the power packet generation unit to the power packet router;
   a power reception waveform information generating unit configured to generate power reception waveform information (power reception information 27B, header 31D) of the power packet received by the power packet router; and
   a state diagnosis unit (power distribution management ECU 26B, header separation-analysis unit 41) configured to diagnose a state of the transmission path based on a result of comparison between the power transmission waveform information and the power reception waveform information.
[9] The power supply system according to [8],
   wherein the power packet has a header part including a diagnosis signal (diagnosis pulse 31Da) used for abnormality detection of the transmission path, and a payload part (30) for transmitting power, and
   wherein the power transmission waveform information and the power reception waveform information are information related to a waveform of the diagnosis signal.
[10]The power supply system according to [8] or [9],
   wherein in a case where the power reception waveform information is not received within a predetermined time after the power transmission waveform information is received (S53), the state diagnosis unit recognizes that an abnormality has occurred in the transmission path (S54, S57).
[11] The power supply system according to any one of [8] to [10],
   wherein the transmission path includes at least a first transmission path (29A-1) and a second transmission path (29A-2, 29D-1) connected in parallel,
   wherein the power distribution request includes a transmission path for transmitting the power packet, and
   wherein in a case where it is recognized that an abnormality has occurred in one of the first transmission path and the second transmission path, the power distribution request generating unit switch the transmission path included in the power distribution request to the other one of the first transmission path and the second transmission path (S77).
[12] A power supply system including:
   a power packet generation unit (power packet mixer 11, 81) configured to generate a power packet based on power supplied from one or more power supply sources (in-vehicle batteries 23-1 to 23-n, 83);
   a first power packet router (22B-1 to 22B-3, 82-1 to 82-4) and a second power packet router (22B-1 to 22B-3, 82-1 to 82-4) configured to supply power of the power packet received from the power packet generation unit via a transmission path to one or more loads on a downstream side; and
   a mutual supply path (29D-1, 29D-2, 85-3 to 85-6) connecting the first power packet router and the second power packet router,
   wherein the first power packet router and the second power packet router each have:
      a power distribution request transmission unit configured to transmit a power distribution request including a required power amount to the power packet generation unit; and
      a power storage unit (normal power storage unit 42A, interchange power storage unit 42B) for storing power of the power packet,
      wherein the power distribution request transmission unit in one of the first power packet router and the second power packet router is able to transmit an interchange request signal requesting the other of the first power packet router and the second power packet router to interchange power, and
      wherein once receiving the interchange request signal, the other of the first power packet router and the second power packet router interchanges, from the power storage unit thereof, power to one of the first power packet router and the second power packet router via the mutual supply path.
[13] The power supply system according to [12],
   wherein the power storage unit is configured by a first power storage unit (normal power storage unit 42A) that stores power to be supplied to the load, and a second power storage unit (interchange power storage unit 42B) that stores power for interchange, and
   wherein once receiving the interchange request signal, the other of the first power packet router and the second power packet router generates a power packet for interchange based on the power stored in the second power storage unit.
[14] The power supply system according to [12] or [13], further including:
   a diagnosis unit (power distribution management ECU 26B, control unit 45B) configured to diagnose the occurrence of an abnormality in the transmission line,
   wherein in a case where the diagnosis unit detects that an abnormality has occurred in the transmission path, the power distribution request transmission unit of one of the first power packet router and the second power packet router transmits the interchange request signal to the other of the first power packet router and the second power packet router.
[15] A power supply system including:
   a power packet generation unit (power packet mixer 51) configured to generate a power packet based on power supplied from one or more power supply sources (batteries 53-1, 53-2);
   a power packet router (52-1, 52-2) configured to receive the power packet generated by the power packet generation unit via a transmission path (power transmission path 55A) and supply power of the power packet to one or more loads (54-1 to 54-6) on a downstream side;
   a power request transmission unit (control unit 45, S98) configured to transmit a power distribution request according to power required by the power packet router; and
   a power supply control unit (power packet mixer 51, power distribution management ECU 56) configured to transmit the power packet from the power packet generation unit to the power packet router in response to the power distribution request,
   wherein the power packet router includes:
      a plurality of downstream ports (power output port 52b) to which at least the load is connected;
      a connection state detection unit (control unit 45, S95, S96) configured to automatically detect a connection state of each of the plurality of downstream ports when a predetermined condition is satisfied; and
      a connection state transmission unit (communication interface unit 46) configured to transmit information indicating the connection state to the power supply control unit, and
   wherein the power supply control unit transmits the power packet to reflect the connection state (S103).
[16] The power supply system according to [1],
   wherein the power supply control unit has an input unit (input device 57, switch 58) for a user to input an attribute of a load, and in a case where it is determined that a new load is connected to the power packet router based on the received information indicating the connection state, an input for attribute of the new load by the input unit is permitted (S99, S100).
[17] The power supply system according to [15] or [16],
   wherein the power supply control unit configures a part of the power packet generation unit, and
   wherein the connection state detection unit transmits the information indicating the connection state to the power supply control unit via the transmission path.
[18] The power supply system according to [15] or [16],
   wherein the connection state detection unit transmits the information indicating the connection state to the power supply control unit via wireless communication.
[19] A power supply system including:
   a plurality of power packet generation units (power packet mixer 131-1, 131-2) configured to generate a power packet based on power supplied from a power supply source (in-vehicle batteries 133-1, 133-2) and transmit the power packet to a transmission path (power transmission path 138);
   a plurality of power packet routers (132-1 to 132-4) configured to receive the power packet via the transmission path and supply power of the power packet to one or more loads on a downstream side; and
   a power distribution control unit (power distribution management ECU 136) configured to receive a power distribution request including a required power amount from the power packet router, and transmit a power transmission instruction including the power amount to the power packet generation unit,
   wherein the power distribution control unit generates a packet transmission frame having a plurality of time slots, and associates the plurality of time slots with the plurality of power packet generation units respectively, and
   wherein each of the power packet generation units transmits the power packet in an associated time slot.
[20] The power supply system according to [19],
   wherein the transmission path forms a ring-shaped transmission path,
   wherein the power packet generation units and the power packet routers are respectively connected to predetermined places of the ring-shaped transmission path,
   wherein the power distribution control unit stores correspondence information indicating association between the time slot and the power packet router on a top side of the packet transmission frame, and
   wherein the power packet generation unit recognizes a transmission timing of a power packet based on the correspondence information.
[21] The power supply system according to [20],
   wherein the plurality of power packet routers includes a first power packet router and a second power packet router,
   wherein the first power packet router and the second power packet router each has a power storage unit that stores power received as a power packet,
   wherein the power stored in the power storage unit of the first power packet router is able to be interchanged to the power storage unit of the second power packet router, and
   wherein the power distribution control unit associates the first power packet router with one of the time slots.
[22] A power supply system including:
   a power packet generation unit (power packet mixer 121) configured to generate a power packet based on power supplied from one or more power supply sources;
   a plurality of power packet routers (122-1 to 122-3) configured to receive the power packet generated by the power packet generation unit via a transmission path and supply power of the power packet to one or more loads on a downstream side; and
   a power distribution control unit (power distribution management ECU 126) configured to receive a power distribution request including a required power amount from the power packet router, and transmit a power distribution instruction including the power amount to the power packet generation unit,
   wherein the plurality of power packet routers includes an upstream power packet router (122-1) located on an upstream side, and a downstream power packet router (122-3) connected to a downstream side of the upstream power packet router, and
   wherein when receiving the power distribution instruction for the upstream power packet router and the downstream power packet router, the power packet generation unit includes power to be supplied to the upstream power packet router and power to be supplied to the downstream power packet router in the same power packet.
[23] The power supply system according to [22],
   wherein the upstream power packet router has a power storage unit (15A, 15B) that stores power, and in a case where the power packet whose destination is the upstream power packet router and the downstream power packet router is received, power of the power packet is stored in the power storage unit, and new power packet including power to be supplied to the downstream power packet router among the power stored in the power storage unit is generated so as to be transmitted to the downstream power packet router.
[24] The power supply system according to [22] or [23],
   wherein the power packet has a header part including information indicating a destination, and a payload part for transmitting power, and
   wherein the power packet generation unit includes, in the header part, information indicating that the destination is the upstream power packet router and the downstream power packet router, and includes, in the payload part, total power to be supplied to the upstream power packet router and the downstream power packet router.
[25] A power supply system including:
   a power packet generation unit (power packet mixer 71) configured to generate a power packet based on power supplied from a power supply source;
   a power packet router (72-1) configured to receive the power packet generated by the power packet generation unit via a transmission path (power transmission path 75-1) and supply power of the power packet to a load on a downstream side; and
   a power distribution control unit (power distribution management ECU 26) configured to receive a power distribution request including a required power amount from the power packet router, and transmit a power transmission instruction including the power amount to the power packet generation unit,
   wherein the power packet generation unit has a function (72-2) of receiving a power packet and supplying power of the power packet to a load.
[26] The power supply system according to [25],
   wherein the power packet router has a function (72B-2) of receiving power and generating the power packet.
[27] A power supply system including:
   a power packet generation unit (power packet mixer 11) configured to generate a power packet based on power supplied from one or more power supply sources (in-vehicle batteries 13A, 13B);
   a power packet router (12) configured to receive the power packet generated by the power packet generation unit via a transmission path (power transmission path 16A) and supply power of the power packet to one or more loads on a downstream side;
   a power request transmission unit (12f) configured to transmit a power distribution request according to power required by the power packet router from the power packet router; and
   a power supply control unit (11d) configured to supply the power packet from the power packet generation unit to the power packet router in response to the transmitted power distribution request,
   wherein the power packet router includes a power storage unit (15A, 15B) that stores power of a received power packet,
   wherein the power request transmission unit transmits the power distribution request in a case where a power storage amount of the power storage unit falls below a predetermined threshold (S14, S15), and
   wherein the power supply control unit determines whether to supply power based on a comparison between a power amount requested by the power distribution request and a power amount that is able to be supplied by the power supply source (S607, S611).
[28] The power supply system according to [27],
   wherein the power supply system is mounted on a vehicle,
   wherein the power supply source is a battery that stores power from outside of the vehicle or from a power generation device, and
   wherein in a case where power is stored to the battery, the power supply control unit controls the power packet generation unit to generate a power packet according to a result of comparison between a requested amount of power and an amount of power that can be supplied.
[29] The power supply system according to [27] or [28],
   wherein the power packet generation unit is supplied with power from the plurality of power supply sources, and
   wherein the power packet router includes at least the same number of power storage units as the plurality of power supply sources.
[30] A power supply system including:
   a power packet generation unit (power packet mixer 21) configured to generate a power packet based on power supplied from a plurality of power supply sources (power sources 23-1 to 23-n);
   a power packet router (22) configured to receive the power packet generated by the power packet generation unit via a transmission path (power transmission path 29A) and supply power of the power packet to one or more loads (24-1 to 24-n) on a downstream side; and
   a power distribution control unit (power distribution management ECU 26) configured to receive a power distribution request including a required power amount from the power packet router, and transmit a power transmission instruction including the power amount to the power packet generation unit,
   wherein the power packet generation unit generates the power packet based on power separately supplied from the plurality of power supply sources, and transmits a plurality of the power packets to the power packet router by time division.
[31] The power supply system according to [30],
   wherein the power packet router includes a plurality of power storage units (15A, 15B) capable of storing the power packets received from the power packet generation unit separately for each of the plurality of power supply sources.
[32] The power supply system according to [31],
   wherein the power packet has a header part (31) including destination information (31b) indicating a load to which power is to be supplied, and a payload part (32) for transmitting power, and
   wherein the power packet router stores power of a received power packet in any one of the power storage units according to the destination information.
[33] A power supply system including:
   a power packet generation unit (power packet mixer 323) configured to generate a power packet based on power supplied from one or more power supply sources (batteries 321, 322); and
   a power packet router (327) configured to receive the power packet generated by the power packet generation unit via a transmission path (power transmission path 326) and supply power of the power packet to a load on a downstream side,
   wherein the load includes a light emitting unit that can blink (side turn signal lamps 328, 329),
   wherein the power packet generation unit is connected to an input unit (column switch 302, hazard switch 303) for a user to input an instruction of blinking light emission to the light emitting unit,
   wherein the power packet generation unit intermittently transmits power to the power packet router using the power packet when the instruction is input from the input unit, and
   wherein the power packet router distributes power of the received power packet to the light emitting unit.
[34] The power supply system according to [33],
   wherein the load further includes a continuous feed load (load 300) to which power is continuously fed,
   wherein the power packet router has a power storage unit (15A, 15B) that temporarily stores the power packet received from the power packet generation unit,
   wherein the power packet generation unit attaches destination information indicating whether a destination of the power packet is the light emitting unit or the continuous feeding load as a header (31) of the power packet, and
   wherein the power packet router refers to the header of the received power packet, and stores power in the power storage unit in a case where the destination is the continuous feeding load; and distributes power to the light emitting unit without storing power in the power storage unit in a case where the destination is the light emitting unit.
[35] A power supply system including:
   a power packet generation unit (power packet mixer 21B) configured to generate a power packet based on power supplied from a power supply source (power sources 23-1 to 23-n);
   a power packet router (22B-1, 22B-2, 22B-3) configured to receive the power packet generated by the power packet generation unit via a transmission path and supply power of the power packet to a load on a downstream side;
   a power distribution control unit (power distribution management ECU 26B) configured to receive a power distribution request including a required power amount from the power packet router, and transmit a power transmission instruction including the power amount to the power packet generation unit; and
   a driving power source (dedicated power source 161) connected to the power packet generation unit and the power packet router via a distribution line (162) and configured to supply power for driving the power packet generation unit and the power packet router.
[36] The power supply system according to [35],
   wherein the driving power source is charged by power generated based on at least one of vibration energy, thermal energy and light energy.
[37] The power supply system according to [35] or [36], further including:
   one other transmission path (distribution line 163) connecting the power packet generation unit and the driving power source,
   wherein the power distribution control unit controls to supply power from the power packet generation unit to the driving power source via the other transmission path in a case where a power amount stored in the driving power source falls below a predetermined threshold.
[38] The power supply system according to any one of [35] to [37],
   wherein the power distribution control unit further has a function of controlling supply of driving power from the driving power source to the power packet generation unit, in which the power transmission instruction is transmitted to the power packet generation unit following a start of the supply of the driving power (S418, S418B), and the supply of the driving power is stopped following the end of the transmission of the power packet (S415, S415B).
[39] A power supply system including:
   a power packet generation unit (power packet mixer 401) configured to generate a power packet based on power supplied from a power supply source;
   a plurality of power packet routers (power packet router 402, 403) configured to receive the power packet generated by the power packet generation unit via a transmission path and supply power of the power packet to one or more loads on a downstream side; and
   a power distribution control unit (power distribution management ECU 26B) configured to receive a power distribution request including a required power amount from the power packet router, and transmit a power distribution instruction including the power amount to the power packet generation unit,
   wherein the power distribution control unit includes:
      a storage unit that stores efficiency information indicating at least one of transmission efficiency of each of the transmission paths, efficiency with respect to load power of the power packet generation unit, and efficiency with respect to load power of the power packet router, and load power information indicating power consumption of each of the loads and a variation range of the power consumption; and
      a path setting unit (power distribution management ECU 26B) configured to set a power feeding path from the power packet generation unit to the load via the power packet router based on the efficiency information and the load power information.
[40] The power supply system according to [39],
   wherein the path setting unit prioritizes transmission of power to the load requiring a large current in the transmission path in a case where a current flowing through a predetermined transmission path exceeds a predetermined threshold due to the setting of the power feeding path.
[41] The power supply system according to [39] or [40],
   wherein the path setting unit prioritizes transmission of power to the load whose variation in power to be supplied is small in the transmission path in a case where a current flowing through a predetermined transmission path exceeds a predetermined threshold due to the setting of the power feeding path.
[42] The power supply system according to any one of [39] to [41],
   wherein the power packet router includes a power storage unit (15A, 15B) that stores power of the received power packet, and
   wherein as a result of setting the power feeding path by the path setting unit, when there is a load where power supplied from the power packet generation unit is insufficient, the power storage unit supplies an insufficient amount of power to the load.

Although the present invention has been described in detail with reference to specific embodiments, it is apparent to those skilled in the art that various changes and modifications can be made without departing from the spirit and scope of the present invention.

The subject application is based on Japanese Patent Application No. 2017-056002 filed on March 22, 2017, Japanese Patent Application No. 2017-231241 filed on November 30, 2017, Japanese Patent Application No. 2017-231242 field on November 30, 2017, Japanese Patent Application No. 2017-231243 filed on November 30, 2017, Japanese Patent Application No. 2017-231244 filed on November 30, 2017, Japanese Patent Application No. 2017-231245 filed on November 30, 2017, Japanese Patent Application No. 2017-231246 filed on November 30, 2017, Japanese Patent Application No. 2017-231247 filed on November 30, 2017, Japanese Patent Application No. 2017-231248 filed on November 30, 2017, Japanese Patent Application No. 2017-231249 filed on November 30, 2017, Japanese Patent Application No. 2017-231250 filed on November 30, 2017, Japanese Patent Application No. 2017-231252 filed on November 30, 2017, Japanese Patent Application No. 2017-231253 filed on November 30, 2017, Japanese Patent Application No. 2017-231254 filed on November 30, 2017, the contents of which are incorporated herein by reference.

### INDUSTRIAL APPLICABILITY

According to the present invention, wasteful discharge of power from an in-vehicle battery or the like can be avoided, and appropriate balance between the power demand and power supply capacity can be maintained even if the load increases. The present invention having such effects is useful for a power supply system that can be used to supply power on a vehicle or the like.

### REFERENCE SIGNS LIST

10-1, 10-2, 10-3, 10-4, 10-5 power supply system
10-6, 10-7, 10-8, 10-9 power supply system
11, 21, 21B, 51, 61 power packet mixer
11a, 11b, 21a, 51a power input port
11c, 21b, 51b power packet output port
12, 22, 22B, 52, 62 power packet router
12a, 22a, 52a power packet input port
12b, 12c, 12d, 22b, 52b power output port
13A, 13B, 53, 63 in-vehicle battery
14A, 14B, 14C, 54, 64 load
15A, 15B power storage unit
16A, 16B, 16C, 16D, 16E, 16F power transmission path
17 AC output circuit
18-1, 18-n power transmission circuit
19-1, 19-n power reception circuit
21c, 26c, 26d communication port
23-1, 23-2, 23-n power source
24-1, 24-2, 24-n, 24-A, 24-B, 24-C load
26, 26B, 56, 116, 126 power distribution management ECU
26a control unit
26b communication interface unit
27A power distribution request
27B power reception information
28A power transmission instruction
28B power transmission information
29A, 29B, 29C power transmission path
30, 30B, 30C power packet
31, 31B, 31C, 31D header
31a synchronization signal
31b destination information
31c power transmission power information
31d power type information
31Da deterioration diagnosis bit
32 payload
35 input selection unit
36 packet generation unit
37 output port selection unit
38, 45, 45B control unit
39, 46 communication interface unit
41 header separation-analysis unit
42 power storage unit
42A normal power storage unit
42B interchange power storage unit
43 packet generation unit
44 output port selection unit
55A, 55B, 55C power transmission path
57 input device
58 switches
71 composite power packet mixer
72 composite power packet router
74 load
75-1, 75-2 bidirectional power transmission path
76, 77 power transmission path
81, 91, 111, 121, 131 power packet mixer
82, 92, 112, 122, 132 power packet router
833, 93, 113, 123, 133 in-vehicle battery
84, 94, 114, 124, 134 load
85, 95, 115, 127, 135 power transmission path
89 indicator
117, P1, P2, P3, P4, P5, P6 power packet
137 communication line
161 dedicated power source
162, 163, 164 distribution line
165 environmental power generation mechanism
301, 321, 322 battery
302 column switch
303 hazard switch
323 power packet mixer
324, 325, 326 power transmission path
327 power packet router
328, 329 side turn signal lamp
PR1, PR2, PR3 power packet
PPH, PPL power packet

## Claims

1. A power supply system comprising:
a power packet generation unit configured to generate a power packet based on power supplied from one or more power supply sources;
a power packet router configured to receive the power packet via a transmission path and supply power of the power packet to a plurality of loads connected on a downstream side;
a power request transmission unit configured to transmit a power distribution request according to power required by the power packet router;
a power supply control unit configured to supply the power packet from the power packet generation unit to the power packet router in response to the power distribution request; and
an allocation unit configured to allocate priorities to the plurality of loads,
wherein the power supply control unit restricts power supply to a load having a low priority in a case where a demand-supply relationship of power satisfies a predetermined condition.

2. The power supply system according to claim 1,
wherein the power supply control unit compares a power supply amount that can be supplied by the power supply source with a power demand amount represented by the power distribution request, and stops supplying power supplied to the load having a low priority in a case where the power demand amount is larger than the power supply amount.

3. The power supply system according to claim 1 or 2,
wherein the allocation unit corrects the priorities according to at least one of a traveling state of a vehicle on which the power supply system is mounted, a state of an occupant, and an environment outside the vehicle.
